(19) **Europäisches Patentamt / European Patent Office / Office européen des brevets**

(11) **EP 4 451 714 A1**

(12) # EUROPEAN PATENT APPLICATION
published in accordance with Art. 153(4) EPC

(43) Date of publication:
**23.10.2024   Bulletin 2024/43**

(21) Application number: **23739871.4**

(22) Date of filing: **05.01.2023**

(51) International Patent Classification (IPC):
**H04W 4/46** (2018.01)

(52) Cooperative Patent Classification (CPC):
**H04W 4/46; H04W 72/02; H04W 72/0453;
H04W 72/25; H04W 72/50; H04W 72/542**

(86) International application number:
**PCT/CN2023/070593**

(87) International publication number:
**WO 2023/134527 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2022   CN 202210028261**

(71) Applicant: **Huawei Technologies Co., Ltd.
Shenzhen, Guangdong 518129 (CN)**

(72) Inventors:
  • **HUANG, Haining
    Shenzhen, Guangdong 518129 (CN)**
  • **LI, Chao
    Shenzhen, Guangdong 518129 (CN)**
  • **YANG, Fan
    Shenzhen, Guangdong 518129 (CN)**
  • **ZHANG, Tianhong
    Shenzhen, Guangdong 518129 (CN)**
  • **MI, Xiang
    Shenzhen, Guangdong 518129 (CN)**

(74) Representative: **Thun, Clemens
    Mitscherlich PartmbB
    Patent- und Rechtsanwälte
    Karlstraße 7
    80333 München (DE)**

(54) ## INFORMATION SENDING METHOD AND COMMUNICATION APPARATUS

(57)   This application provides an information sending method and a communication apparatus. In the method, a first terminal device sends frequency domain resource indication information to a second terminal device, and the frequency domain resource indication information indicates a frequency domain start location and a size of an assistant resource provided by the first terminal device for the second terminal device. The assistant resource is used by the second terminal device for resource selection. The frequency domain resource indication information has a first value or a second value. The first value is used to determine that the assistant resource provided by the first terminal device is a resource that the first terminal device does not prefer, and the second value indicates that the assistant resource provided by the first terminal device is a resource that the first terminal device does not expect to receive. The second terminal device may determine, based on the frequency domain resource indication information, types of non-preferred assistant resources provided by the first device, and perform resource selection by fully utilizing the two types of assistant resources, to improve transmission reliability.

FIG. 12

## Description

This application claims priority to Chinese Patent Application No. 202210028261.9, filed with the China National Intellectual Property Administration on January 11, 2022 and entitled "INFORMATION SENDING METHOD AND COMMUNICATION APPARATUS", which is incorporated herein by reference in its entirety.

## TECHNICAL FIELD

This application relates to the sidelink communication field, and more specifically, to an information sending method and a communication apparatus.

## BACKGROUND

In sidelink (sidelink, SL) communication, two resource assignment modes are supported: a mode 1 (which is also referred to as a mode 1) and a mode 2 (which is also referred to as a mode 2). The mode 2 supports resource sensing and selection/reselection processes. In an implementation in the mode 2, a terminal may assist another terminal in selecting a resource, to improve data transmission reliability.

For example, in sidelink communication, a first terminal provides a resource for a second terminal based on a request of the second terminal, and the resource is used to assist the second terminal in selecting a resource. Specifically, the first terminal provides a resource set for the second terminal, and a resource included in the resource set may be a resource that the first terminal prefers the second terminal to use or not to use. During resource selection, the second terminal needs to determine a resource set, and ensure that there are sufficient resources in the resource set for transmission on a physical sidelink control channel (physical control sidelink channel, PSCCH)/physical sidelink shared channel (physical sidelink shared channel, PSSCH). For a resource that the first terminal does not prefer, the second terminal may not use the resource during resource selection. However, during resource selection of the second terminal, the second terminal performs undifferentiated processing on the resource that is provided by the first terminal and that the first terminal does not prefer. When resources available to the second terminal are insufficient, the second terminal performs sidelink transmission by using a resource selected through undifferentiated processing. Consequently, transmission reliability is not high.

## SUMMARY

This application provides an information sending method and a communication apparatus, to improve data transmission reliability.

According to a first aspect, an information sending method is provided. The method includes:

A first device determines frequency domain resource indication information. The frequency domain resource indication information indicates a frequency domain start location and a size of an assistant resource, a first value of the frequency domain resource indication information is used to determine that the assistant resource is a resource that the first device does not prefer, and a second value of the frequency domain resource indication information is used to determine that a slot in which the assistant resource is located is a slot in which the first device does not expect receiving.

The first device sends the frequency domain resource indication information to a second device.

Optionally, both the first device and the second device may be terminal devices or terminal apparatuses. This is not limited. Descriptions herein are also applicable to a method in another aspect. Details are not described again.

Alternatively, that a first value is used to determine that the assistant resource is a resource that the first device does not prefer may be any one of the following descriptions:

the first value is associated with that the assistant resource is a resource that the first device does not prefer;
the first value corresponds to that the assistant resource is a resource that the first device does not prefer; or
the first value indicates that the assistant resource is a resource that the first device does not prefer.

Similarly, that a second value is used to determine that a slot in which the assistant resource is located is a slot in which the first terminal apparatus does not expect receiving may alternatively express the following meaning:

the second value is associated with that the slot in which the assistant resource is located is a slot in which the first terminal apparatus does not expect receiving;
the second value corresponds to that the slot in which the assistant resource is located is a slot in which the first terminal apparatus does not expect receiving; or
the second value indicates that the slot in which the assistant resource is located is a slot in which the first terminal apparatus does not expect receiving.

In this technical solution, the first device may provide more information for the second device (an assisted device) by distinguishing two types of non-preferred resources, so that the second device may perform different processing on the two different types of non-preferred resources. For example, when resources to be used by the second device are insufficient, the second device may use a portion of a first-type non-preferred resource in the two types of non-preferred resources. A reason lies in that the first-type non-preferred resource is determined by the first device based on an interference degree. When the second device uses this portion of resource, an amplitude of transmission reliability improvement is reduced, but transmission reliability is still improved. A second-type non-preferred resource is a resource that the first device, serving as a receiving device of the second device, does not expect the second device to use. When the second device uses the resource of this type, the first device cannot perform receiving due to a half-duplex limitation, and transmission fails. Therefore, the two types of non-preferred resources are distinguished, to enable the second device to use the two types of non-preferred resources to a maximum extent, and improve transmission reliability of the second device.

In addition, a reserved state in an FRIV field indicates the two types of non-preferred resources, and new signaling overheads are not introduced, to reduce signaling overheads, and fully utilize the FRIV field.

According to a second aspect, an information sending method is provided. The method includes:

A first device determines RSRP measurement information corresponding to an assistant resource. The RSRP measurement information has a first measurement value or a second measurement value, the first measurement value is used to determine that the assistant resource is a resource that the first device does not prefer, and the second measurement value is used to determine that a slot in which the assistant resource is located is a slot in which the first device does not expect receiving.

The first device sends the RSRP measurement information to a second device.

Herein, the second aspect is similar to the first aspect. In the second aspect, "used to determine" may also be replaced with association, indication, correspondence, or the like. This is not limited.

With reference to the second aspect, in some implementations of the second aspect, that the first device sends the RSRP measurement information to a second device includes:

The first device sends assistant information to the second device. The assistant information includes the RSRP measurement information, and the assistant information further includes at least one of frequency domain resource indication information, time domain resource indication information, and a resource reservation period.

In this technical solution, the first device may provide more information for the second device (an assisted device) by distinguishing two types of non-preferred resources, so that the second device may perform different processing on the two different types of non-preferred resources. For example, when resources to be used by the second device are insufficient, the second device may use a portion of a first-type non-preferred resource in the two types of non-preferred resources. A reason lies in that the first-type non-preferred resource is determined by the first device based on an interference degree. When the second device uses this portion of resource, an amplitude of transmission reliability improvement is reduced, but transmission reliability is still improved. A second-type non-preferred resource is a resource that the first device, serving as a receiving device of the second device, does not expect the second device to use. When the second device uses the resource of this type, the first device cannot perform receiving due to a half-duplex limitation, and transmission fails. Therefore, the two types of non-preferred resources are distinguished, to enable the second device to use the two types of non-preferred resources to a maximum extent, and improve transmission reliability of the second device. An RSRP measurement value indicates to distinguish the two types of non-preferred resources, and additional new signaling overheads are not introduced, to fully utilize the RSRP measurement value field.

According to a third aspect, an information sending method is provided. The method includes:

A first device determines first indication information. The first indication information indicates a first quantity N, the first quantity is a quantity of combinations of resource indication information of an assistant resource, the assistant resource is used by a second device for resource selection, and N is a non-negative integer.

The first device sends the first indication information to the second device.

With reference to the third aspect, in some implementations of the third aspect, the first device is a receiving device of the second device.

With reference to the third aspect, in some implementations of the third aspect, the method further includes:

The first device sends second indication information to the second device. The second indication information indicates that the assistant resource is a non-preferred resource, a preferred resource, or a non-preferred resource and a preferred resource.

The second indication information is indicated by the first-stage SCI or configuration signaling.

According to a fourth aspect, a resource indication method is provided. The method includes:

A first device determines a first resource. The first resource includes M sub-resources in a resource set, and M is a positive integer.

The first device sends first indication information to the second device. The first indication information indicates start locations of the M sub-resources or start locations of some of the M sub-resources.

Optionally, the first indication information indicates frequency domain start locations of the M sub-resources or frequency domain start locations of some of the M sub-resources.

According to a fifth aspect, an information receiving method is provided. The method includes:

A second device obtains frequency domain resource indication information. The frequency domain resource indication information indicates a frequency domain start location and a size of an assistant resource, a first value of the frequency domain resource indication information is used to determine that the assistant resource is a resource that a first device does not prefer, and a second value of the frequency domain resource indication information is used to determine that a slot in which the assistant resource is located is a slot in which the first device does not expect receiving.

The second device determines a type of the assistant resource based on the frequency domain resource indication information.

According to a sixth aspect, an information receiving method is provided. The method includes:

A second device obtains RSRP measurement information corresponding to an assistant resource. The RSRP measurement information has a first measurement value or a second measurement value, the first measurement value is used to determine that the assistant resource is a resource that a first device does not prefer, and the second measurement value is used to determine that a slot in which the assistant resource is located is a slot in which the first device does not expect receiving.

The second device determines a type of the assistant resource based on the RSRP measurement information.

Alternatively, that the second device determines a type of the assistant resource based on the RSRP measurement information may be any one of the following descriptions:

the second device performs resource selection based on the RSRP measurement information, or uses the RSRP measurement information during resource selection; or

the second device refers to the RSRP measurement information during resource selection.

With reference to the sixth aspect, in some implementations of the sixth aspect, that a second device obtains RSRP measurement information corresponding to an assistant resource includes:

The second device receives assistant information from the first device. The assistant information includes the RSRP measurement information, and the assistant information further includes at least one of frequency domain resource indication information, time domain resource indication information, and a resource reservation period.

The second device obtains the RSRP measurement information from the assistant information.

According to a seventh aspect, an information receiving method is provided. The method includes:

A second device receives first indication information from a first device. The first indication information indicates a first quantity N, the first quantity is a quantity of combinations of resource indication information of an assistant resource, the assistant resource is used by the second device for resource selection, and N is a non-negative integer.

The second device determines the quantity of combinations of resource indication information of the assistant resource based on the first indication information.

Alternatively, that the assistant resource is used by the second device for resource selection may be any one of the following descriptions:

the assistant resource is a reference resource used by the second device for resource selection;

the second device refers to the assistant resource during resource selection; or

the second device uses the assistant resource during resource selection.

Alternatively, that the second device determines the quantity of combinations of resource indication information of the assistant resource based on the first indication information may be that the second device determines the assistant resource based on the first indication information.

With reference to the seventh aspect, in some implementations of the seventh aspect, the method further includes:

The second device receives second indication information from the first device. The second indication information indicates that the assistant resource is a non-preferred resource, a preferred resource, or a non-preferred resource and a preferred resource.

The second indication information is indicated by the first-stage SCI or configuration signaling.

According to an eighth aspect, a resource indication method is provided. The method includes:

A second device receives first indication information from a first device. The first indication information indicates start locations of the M sub-resources or start locations of some of the M sub-resources.

The second device determines the start locations of the M sub-resources based on the first indication information.

In some implementations of the first aspect or the fifth aspect, the assistant resource is used by the second device for resource selection.

In some implementations of the first aspect or the fifth aspect, the first device is a receiving device of the second device.

In some implementations of the first aspect or the fifth aspect, the resource that the first device does not prefer includes:

a resource whose corresponding RSRP measurement value is greater than a configured first threshold; or

a resource whose corresponding RSRP measurement value is less than a configured second threshold.

In some implementations of the first aspect or the fifth aspect, the resource that the first device does not prefer includes:

a resource whose corresponding RSRP measurement value is greater than a configured first threshold; or

a resource whose corresponding RSRP measurement value is less than a configured second threshold when the first device is a receiving device of the second device.

In some implementations of the first aspect or the fifth aspect, the range of the first value is:

$$\left[0, \frac{N_{subCH} \cdot (N_{subCH}+1)}{2} - 1\right],$$

where $N_{subCH}$ is a quantity of subchannels included in a resource pool.

In some implementations of the first aspect or the fifth aspect, the range of the second value is:

$$\left[\frac{N_{subCH} \cdot (N_{subCH}+1)}{2}, 2^{\left\lceil \log_2\left(\frac{N_{subCH} \cdot (N_{subCH}+1)}{2}\right)\right\rceil} - 1\right],$$

where $N_{subCH}$ is the quantity of subchannels included in the resource pool.

In some implementations of the first aspect or the fifth aspect, the range of the first value is:

$$[0, \frac{N_{subCH}(N_{subCH}+1)(2N_{subCH}+1)}{6} - 1],$$

where $N_{subCH}$ is a quantity of subchannels included in a resource pool.

In some implementations of the first aspect or the fifth aspect, the range of the second value is:

$$[\frac{N_{subCH}(N_{subCH}+1)(2N_{subCH}+1)}{6}, 2^{\left\lceil \log_2\left(\frac{N_{subCH}(N_{subCH}+1)(2N_{subCH}+1)}{6}\right)\right\rceil} - 1],$$

where $N_{subCH}$ is the quantity of subchannels included in the resource pool.

In some implementations of the second aspect or the sixth aspect, the second measurement value is at least one of the following:

an upper limit value of the configured RSRP measurement value;

a lower limit value of the configured RSRP measurement value;

positive infinity; and

negative infinity.

In some implementations of the third aspect or the seventh aspect, the first quantity N is less than or equal to a second quantity, and the second quantity is a configured or pre-configured value.

In some implementations of the third aspect or the seventh aspect, the first indication information includes reserved information in the first-stage SCI.

In some implementations of the third aspect or the seventh aspect, the first indication information is included in the first-stage SCI, reserved information in the first-stage SCI indicates that a shared channel scheduled by the first-stage SCI carries only assistant information, and the assistant information includes the resource indication information; and

the first indication information includes MCS indication information and/or MCS table indication information in the first-stage SCI; or

the first indication information includes some bits or some statuses of MCS indication information in the first-stage SCI, and/or some bits or some statuses of MCS table indication information in the first-stage SCI.

In some implementations of the third aspect or the seventh aspect, the first indication information is included in the first-stage SCI, reserved information in the first-stage SCI indicates that a shared channel scheduled by the first-stage SCI carries assistant information, and the assistant information includes the resource indication information; and the first-stage SCI does not include MCS indication information and/or MCS table indication information.

Alternatively, the MCS indication information may be replaced with an MCS indication field, and the MCS table indication information may be replaced with an MCS table indication field.

In some implementations of the third aspect or the seventh aspect, a format of the first-stage SCI is different from an SCI format 1-A.

In some implementations of the third aspect or the seventh aspect, the first indication information includes second-stage SCI or a MAC CE.

Optionally, the first indication information includes a MAC subheader or a MAC header in the MAC CE.

In some implementations of the third aspect or the seventh aspect, the first quantity is equal to the second quantity, and the combination of resource indication information includes frequency domain resource indication information.

A third value of the frequency domain resource indication information indicates a frequency domain start location and a size of the assistant resource.

A fourth value of the frequency domain resource indication information indicates that the combination of resource indication information is an invalid combination, and the fourth value is a reserved state of the frequency domain resource indication information.

Optionally, the first quantity is equal to the second quantity, and the combination of resource indication information includes time domain resource indication information.

A third value of the time domain resource indication information indicates a time domain location of the assistant resource.

A fourth value of the time domain resource indication information indicates that the combination of resource indication information is an invalid combination, and the fourth value is a reserved state of the time domain resource indication information.

Optionally, the first quantity is equal to the second quantity, and the combination of resource indication information includes resource reservation period information.

A third value of the resource reservation period information indicates a reservation period of a periodically reserved resource.

A fourth value of the resource reservation period information indicates that the combination of resource indication information is an invalid combination, and the fourth value is a reserved state of the resource reservation period information.

Optionally, the invalid combination may be understood as that a resource indicated by the combination is not an assistant resource.

In some implementations of the third aspect or the seventh aspect, the second indication information indicates that the assistant resource is a non-preferred resource, a preferred resource, or a non-preferred resource and a preferred resource.

The second indication information is indicated by the first-stage SCI or configuration signaling.

Optionally, the second indication information is indicated by a reserved bit or a reserved state in the first-stage SCI.

Optionally, the second indication information is indicated by configuration signaling of a network device or pre-configured configuration signaling.

In some implementations of the third aspect or the seventh aspect, the first quantity N includes a quantity of non-preferred resources and/or a quantity of preferred resources.

In some implementations of the third aspect or the seventh aspect, the assistant resource is a non-preferred resource, and the non-preferred resource includes a first-type non-preferred resource and a second-type non-preferred resource.

The first-type non-preferred resource is a resource that the first device does not prefer, and the second-type non-preferred resource is a resource that the first device does not expect to receive.

For example, the resource that the first device does not prefer includes:

a resource whose corresponding RSRP measurement value is greater than a configured first threshold; or
a resource whose corresponding RSRP measurement value is less than a configured second threshold.

The first-type non-preferred resource is a non-preferred resource determined based on a resource interference degree, and may specifically be determined based on a condition. For example, the resource that the first device does not prefer may be a resource determined based on a first condition. The first condition may be as follows: an RSRP measurement value corresponding to the resource is greater than a first threshold, or an RSRP measurement value corresponding to the resource is less than a second threshold (in this case, the first device is a receiving device of the second device or the first device is a receiving device of a device that sends the resource). The second-type non-preferred resource is a non-preferred resource determined based on a half-duplex limitation. In this case, the first device is a receiving device of the second device. If the first device does not expect to receive, by using a resource, transmission from the second device in a half-duplex operation mode, the resource is a second-type non-preferred resource.

For example, the first-type non-preferred resource is that an RSRP measurement value that is detected by the first device and that corresponds to a reserved resource indicated by SCI of another device is greater than the first threshold. The first threshold is determined based on a priority indicated by the SCI of the another device and a priority used by the first device for resource selection.

For example, the first-type non-preferred resource is that an RSRP measurement value that is detected by the first device and that corresponds to a reserved resource indicated by SCI of another device is less than the second threshold, and the first device is a receiving device of the another device or the first device is a receiving device of the second device. The second threshold is determined based on a priority indicated by the SCI of the another device and a priority used by the first device for resource selection.

For example, the second-type non-preferred resource is that a resource that the first device does not expect to receive or a slot in which the first device does not expect receiving when the first device is a receiving device of the second device is a non-preferred resource or slot.

In some implementations of the third aspect or the seventh aspect, the first quantity N includes the quantity of non-preferred resources and a quantity of first-type non-preferred resources.

In some implementations of the third aspect or the seventh aspect, the first quantity N includes the quantity of non-preferred resources and a quantity of second-type non-preferred resources.

In some implementations of the third aspect or the seventh aspect, the first quantity N includes a quantity of first-type non-preferred resource and a quantity of second-type non-preferred resources.

In some implementations of the third aspect or the seventh aspect, the first quantity N is 0, a shared channel scheduled by first-stage SCI does not include assistant information, and the assistant information includes the resource indication information.

In some implementations of the fourth aspect or the eighth aspect, the first indication information is second-stage sidelink control information SCI and/or a MAC CE.

In some implementations of the fourth aspect or the eighth aspect, that the first indication information indicates start locations of the M sub-resources includes:

The first indication information includes a first field and a second field, the first field indicates a start location of a $1^{st}$ sub-resource in the M sub-resources, and the second field indicates a start location of another sub-resource other than the $1^{st}$ sub-resource in the M sub-resources.

In some implementations of the fourth aspect or the eighth aspect, the first field and the second field are different fields in the second-stage SCI and/or the MAC CE.

In some implementations of the fourth aspect or the eighth aspect, the second field further indicates a size of the M sub-resources.

In some implementations of the fourth aspect or the eighth aspect, a value of M is 3, and that the first indication information indicates start locations of the M sub-resources includes:

A value of the first indication information is determined based on one or more of the following parameters: the start location of the $1^{st}$ sub-resource, a start location of a $2^{nd}$ sub-resource, a start location of a $3^{rd}$ sub-resource, and the size of the M sub-resources.

In some implementations of the fourth aspect or the eighth aspect, a size of the $1^{st}$ sub-resource, a size of the $2^{nd}$ sub-resource, and a size of the $3^{rd}$ sub-resource are the same.

In some implementations of the fourth aspect or the eighth aspect, the value of the first indication information is determined based on one or more of the following parameters:

$$\left(N^{SL}_{\text{subchannel}} + 1 - L_{\text{subCH}}\right);$$

$$\left(N^{SL}_{\text{subchannel}} + 1 - L_{\text{subCH}}\right)^2;$$

$$\left(N^{SL}_{\text{subchannel}} + 1 - i\right)^3,$$

where $i$ is a positive integer, $N^{SL}_{\text{subchannel}}$ is a quantity of subchannels included in the resource set, and $L_{\text{subCH}}$ is the size of the M sub-resources.

In some implementations of the fourth aspect or the eighth aspect, the value of the first indication information is determined based on one or more of the following parameters:

$$n^{start}_{subCH,1};$$

$$n^{start}_{subCH,2} \cdot \left(N^{SL}_{\text{subchannel}} + 1 - L_{\text{subCH}}\right);$$

$$n^{start}_{subCH,3} \cdot \left(N^{SL}_{\text{subchannel}} + 1 - L_{\text{subCH}}\right)^2;$$

and

$$\sum_{i=1}^{L_{\text{subCH}}-1} \left(N^{SL}_{\text{subchannel}} + 1 - i\right)^3,$$

*where* $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, $n^{start}_{subCH,2}$ is the start location of the 2nd sub-resource, $n^{start}_{subCH,3}$ is the start location of the 3rd sub-resource, and $i$ is a positive integer.

In some implementations of the fourth aspect or the eighth aspect, the value of the first indication information meets the following condition:

$$FRIV = n^{start}_{subCH,1} + n^{start}_{subCH,2} \cdot \left(N^{SL}_{\text{subchannel}} + 1 - L_{\text{subCH}}\right) + n^{start}_{subCH,3} \cdot \left(N^{SL}_{\text{subchannel}} + 1 - L_{\text{subCH}}\right)^2$$
$$+ \sum_{i=1}^{L_{\text{subCH}}-1} \left(N^{SL}_{\text{subchannel}} + 1 - i\right)^3,$$

*where FRIV* is the value of the first indication information, $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, $n^{start}_{subCH,2}$

is the start location of the 2nd sub-resource, $n_{subCH,3}^{start}$ is the start location of the 3rd sub-resource, and *i* is a positive integer.

In some implementations of the fourth aspect or the eighth aspect, the value of M is 2, and that the first indication information indicates start locations of the M sub-resources includes:

The value of the first indication information is determined based on one or more of the following parameters: the start location of the 1st sub-resource, the start location of the 2nd sub-resource, and the size of the M sub-resources.

In some implementations of the fourth aspect or the eighth aspect, the size of the 1st sub-resource and the size of the 2nd sub-resource are the same.

In some implementations of the fourth aspect or the eighth aspect, the value of the first indication information is determined based on at least one of the following parameters:

$$\left(N_{subchannel}^{SL} + 1 - L_{subCH}\right);$$

and

$$\left(N_{subchannel}^{SL} + 1 - L_{subCH}\right)^2,$$

where $N_{subchannel}^{SL}$ is the quantity of subchannels included in the resource set, and $L_{subCH}$ is the size of the M subresources.

In some implementations of the fourth aspect or the eighth aspect, the value of the first indication information is determined based on one or more of the following parameters:

$$n_{subCH,1}^{start};$$

$$n_{subCH,2}^{start} \cdot \left(N_{subchannel}^{SL} + 1 - L_{subCH}\right);$$

$$\sum_{i=1}^{L_{subCH}-1} \left(N_{subchannel}^{SL} + 1 - i\right)^2,$$

where *i* is a positive integer, $N_{subchannel}^{SL}$ is the quantity of subchannels included in the resource set, $L_{subCH}$ is the size of the M sub-resources, $n_{subCH,1}^{start}$ is the start location of the 1st sub-resource, and $n_{subCH,2}^{start}$ is the start location of the 2nd sub-resource.

In some implementations of the fourth aspect or the eighth aspect, the value of the first indication information meets the following condition:

$$FRIV = n_{subCH,1}^{start} + n_{subCH,2}^{start} \cdot \left(N_{subchannel}^{SL} + 1 - L_{subCH}\right) + \sum_{i=1}^{L_{subCH}-1} \left(N_{subchannel}^{SL} + 1 - i\right)^2$$

*FRIV* is the value of the first indication information, $N_{subchannel}^{SL}$ is the quantity of subchannels included in the resource set, $L_{subCH}$ is the size of the M sub-resources, $n_{subCH,1}^{start}$ is the start location of the 1st sub-resource, $n_{subCH,2}^{start}$ is the start location of the 2nd sub-resource, and i is a positive integer.

In some implementations of the fourth aspect or the eighth aspect, the start location of the 1st sub-resource in the M sub-resources is determined based on the size of the M sub-resources.

In some implementations of the fourth aspect or the eighth aspect, the size of the M sub-resources and the start location of the 1st sub-resource in the M sub-resources meet a mapping relationship, and the mapping relationship includes one or more of the following:

a difference between the start location of the 1st sub-resource and the size of the M sub-resources is one offset value; and
there is a one-to-one mapping relationship between the start location of the 1st sub-resource and the size of the M sub-resources, and one value of the start location of the 1st sub-resource uniquely corresponds to one value of the size of the M sub-resources.

In some implementations of the fourth aspect or the eighth aspect, the first resource is a frequency domain resource.

In some implementations of the fourth aspect or the eighth aspect, the first indication information indicates frequency domain start locations of the M sub-resources.

In some implementations of the fourth aspect or the eighth aspect, the first indication information indicates start locations of M-1 sub-resources in the M sub-resources, and a location of a time domain resource in which the first indication information is located is before time domain start locations of the M sub-resources.

In some implementations of the fourth aspect or the eighth aspect, the first indication information further indicates a time domain location of a sub-resource, in the M sub-resources, whose start location is not indicated.

In some implementations of the fourth aspect or the eighth aspect, the resource, in the M sub-resources, whose start location is not indicated is the 1st sub-resource in the M sub-resources, a last sub-resource in the M sub-resources, or any sub-resource other than the 1st sub-resource and the last sub-resource in the M sub-resources.

In some implementations of the fourth aspect or the eighth aspect, the time domain location of a sub-resource, in the M sub-resources, whose start location is not indicated is determined based on a time domain offset value between a first slot and a second slot. The first slot is a slot in which the first indication information is located, the second slot is a slot in which the sub-resource, in the M sub-resources, whose start location is not indicated, the time domain offset value is from first configuration information, and an index value corresponding to the time domain offset value is indicated by the first indication information.

In some implementations of any one of the first aspect to the eighth aspect, the resource that the first device does not prefer includes:

a resource whose corresponding RSRP measurement value is greater than a configured first threshold; or
a resource whose corresponding RSRP measurement value is less than a configured second threshold.

In some implementations of any one of the first aspect to the eighth aspect, the resource that the first device does not prefer includes:

a resource whose corresponding RSRP measurement value is greater than a configured first threshold; or
a resource whose corresponding RSRP measurement value is less than a configured second threshold when the first device is a receiving device of the second device.

According to a ninth aspect, a communication apparatus is provided. The communication apparatus has functions of implementing the method in any one of the first aspect to the fourth aspect or the possible implementations of the aspects. The functions may be implemented by hardware, or may be implemented by hardware executing corresponding software. The hardware or the software includes one or more units corresponding to the foregoing functions.

According to a tenth aspect, a communication apparatus is provided. The communication apparatus has functions of implementing the method in any one of the fifth aspect to the eighth aspect or the possible implementations of the aspects. The functions may be implemented by hardware, or may be implemented by hardware executing corresponding software. The hardware or the software includes one or more units corresponding to the foregoing functions.

According to an eleventh aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method in any one of the first aspect to the fourth aspect or the possible implementations of the aspects.

According to a twelfth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method in any one of the fifth aspect to the eighth aspect or the possible implementations of the aspects.

According to a thirteenth aspect, a communication apparatus is provided, and includes a processor and a communication interface. The communication interface is configured to receive data and/or information, and transmit the received data and/or information to the processor, the processor processes the data and/or the information, and the communication interface is further configured to output data and/or information obtained through processing by the processor, to enable the method in any one of the first aspect to the fourth aspect or the possible implementations of the aspects to be performed.

According to a fourteenth aspect, a communication apparatus is provided, and includes a processor and a communication interface. The communication interface is configured to receive data and/or information, and transmit the received data and/or information to the processor, the processor processes the data and/or the information, and the communication interface is further configured to output data and/or information obtained through processing by the processor, to enable the method in any one of the fifth aspect to the eighth aspect or the possible implementations of the aspects to be performed.

According to a fifteenth aspect, a computer-readable storage medium is provided. The computer-readable storage medium stores computer instructions. When the computer instructions are run on a computer, the method in any one of the first aspect to the eighth aspect or the possible implementations of the aspects is performed.

According to a sixteenth aspect, a computer program product is provided. The computer program product includes computer program code. When the computer program code is run on a computer, the method in any one of the first aspect to the eighth aspect or the possible implementations of the aspects is performed.

According to a seventeenth aspect, a wireless communication system is provided, and includes the communication apparatus in the ninth aspect and/or the communication apparatus in the tenth aspect.

## BRIEF DESCRIPTION OF DRAWINGS

FIG. 1 is a diagram of a communication system applicable to this application;
FIG. 2 shows an example of a communication system applicable to this application;
FIG. 3 is a diagram of a resource indicated by a TRIV field and an FRIV field in SCI;
FIG. 4 is a diagram of a parameter indicated by an FRIV field when $N_{max}=2$;
FIG. 5 is a diagram of a parameter indicated by an FRIV field when $N_{max}=3$;
FIG. 6 is a diagram of a multiplexing structure of a PSCCH and a PSSCH;
FIG. 7 shows a resource indicated by SCI and a resource determined based on a TRIV field, an FRIV field, and a resource reservation period that are in the SCI;
FIG. 8 is a schematic flowchart of a resource indication method according to this application;
FIG. 9 shows an example of determining a frequency domain start location of a 1st sub-resource in M sub-resources included in a first resource;
FIG. 10A, FIG. 10B, FIG. 10C, and FIG. 10D show an example of an implementation of indicating a time domain location of a sub-resource according to this application;
FIG. 11 is a schematic flowchart of an information sending method according to this application;
FIG. 12 is a schematic flowchart of an information sending method according to this application;
FIG. 13 shows candidate resource locations when values of *L* are different;
FIG. 14 is a schematic flowchart of an information sending method according to this application;
FIG. 15 is a block diagram of a communication apparatus according to this application; and
FIG. 16 is a diagram of a structure of a communication apparatus according to this application.

## DESCRIPTION OF EMBODIMENTS

The following describes technical solutions in embodiments of this application with reference to accompanying drawings.

The technical solutions provided in this application may be applied to a vehicle-related communication system, that is, transmission between terminals, transmission between a vehicle and a terminal, and transmission between a network device and a terminal/vehicle.

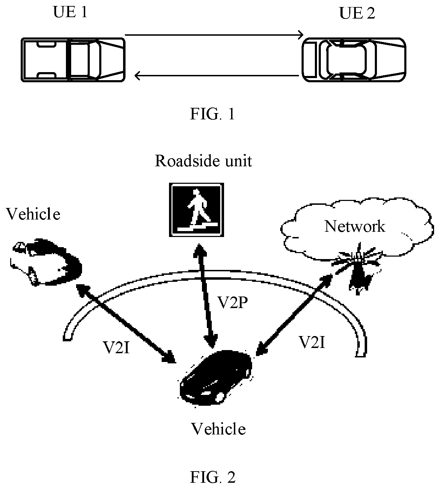

FIG. 1 and FIG. 2 are diagrams of communication systems applicable to this application. A vehicle-to-everything (vehicle-to-everything, V2X) scenario is used as an example. A vehicle-mounted terminal needs to be connected to a network to obtain some configuration information, and also needs to be connected to another vehicle-mounted terminal to implement vehicle-mounted communication. The connection between the vehicle-mounted terminal device and the network device is an uplink and a downlink, and a connection between vehicle-mounted terminal devices is a sidelink.

In this application, the network device is mainly a base station, and is also referred to as a wireless access point, a transceiver station, a relay station, a cell, a transmission/reception point TPR, an evolved NodeB (evolved NodeB, eNodeB), a next generation NodeB (next generation NodeB, gNB), a roadside unit (road site unit, RSU), and the like. This is not limited in this application.

The terminal device may be a device that has a wireless transceiver function and can provide a communication service for a user. Specifically, the terminal device may be a device in a V2X system, a device in a device-to-device (device-to-device, D2D) system, a device in a machine-type communication (machine-type communication, MTC) system, or the like. For example, the terminal device may be an industrial robot, an industrial automation device, user equipment (user equipment, UE), an access terminal, a subscriber unit, a subscriber station, a mobile station, a mobile console, a remote station, a remote terminal, a mobile device, a user terminal, a terminal, a wireless terminal device, a mobile terminal MS, CPE, a vehicle-mounted terminal, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in the fifth generation (fifth generation, 5G) network or a network after 5G, a terminal device in a future evolved public land mobile network (public land mobile network, PLMN), or the like. This is not limited in this application.

To facilitate understanding of the technical solutions of this application, the following first describes related concepts in embodiments of this application.

In sidelink communication, sidelink control information (sidelink control information, SCI) includes two stages of SCI: first-stage SCI and second-stage SCI that are respectively denoted as SCI-1 and SCI-2 in the following.

The SCI-1 is carried on a physical sidelink control channel (physical sidelink control channel, PSCCH), and the SCI-1 includes a priority field, a frequency resource assignment value (frequency resource assignment value, FRIV) field, a time resource assignment value (time resource assignment value, TRIV) field, a resource reservation period, and the like. The SCI-1 is used to schedule a PSSCH and the SCI-2 carried on the PSSCH.

The SCI-2 is carried on the physical sidelink shared channel (physical sidelink shared channel, PSSCH), and includes fields such as a source identifier (identifier, ID) and a destination ID. A receiving terminal in sidelink communication determines, based on the SCI-1 and the SCI-2, whether to receive information in the PSSCH.

On a sidelink, the UE selects a resource in a resource selection mode 2, and uses SCI to indicate the resource. The resource indicated by the SCI includes two types: a resource currently used by the SCI and a reserved resource (the reserved resource is not used).

As shown in the foregoing, the SCI includes the TRIV field and the FRIV field.

TRIV field: When a maximum quantity of resources indicated by the SCI is 2, a quantity of bits occupied by the TRIV field is 5 bits. When the maximum quantity of resources indicated by the SCI is 3, the quantity of bits occupied by the field is 9 bits.

FRIV field: When the maximum quantity of resources indicated by the SCI is 2, a quantity of bits occupied by the field is $\left\lceil \log_2\left(\frac{N_{subCH}(N_{subCH}+1)}{2}\right)\right\rceil$. When the maximum quantity of resources indicated by the SCI is 3, a quantity of bits occupied by the field is $\left\lceil \log_2\left(\frac{N_{subCH}(N_{subCH}+1)(2N_{subCH}+1)}{6}\right)\right\rceil$, where $\lceil\ \rceil$ indicates rounding up.

For example, it is assumed that the UE needs to indicate three resources (that is, the maximum quantity of resources indicated by the SCI is 3), and the three resources are: R1-0, R1-1, and R1-2. In this case, the SCI needs to indicate time domain locations (for example, slots in which the three resources are located), and frequency domain start locations and lengths of the three resources. A function of the FRIV field in the SCI is indicating a frequency domain start location and a frequency domain length of a resource, and frequency domain lengths of resources indicated by the SCI are equal. A function of the TRIV field is indicating a time domain location of a resource. When the maximum quantity of resources indicated by the SCI is 2, the TRIV field indicates an actual logical interval of one resource or two resources. When the maximum quantity of resources indicated by the SCI is 3, the TRIV field indicates an actual logical interval of one resource, two resources, or three resources.

It is assumed that N is a quantity of resources actually indicated by the SCI, and a process of determining the interval is as follows:

if N=1

TRIV=0

else if N=2

TRIV=t1

else

if (t2−t1−1)≤15

TRIV=30(t2−t1−1)+t1+31

else

TRIV=30(31−t2+t1)+62−t1

end if

end if

A slot in which a 1st resource is located is a slot for receiving the SCI, Ti indicates an interval (a time domain offset value), in a resource pool, that is in a unit of a logical slot and that is relative to the 1st resource, and when N=2, 1≤t1≤31; and when N=3, 1≤t1≤30, and t1<t2≤31.

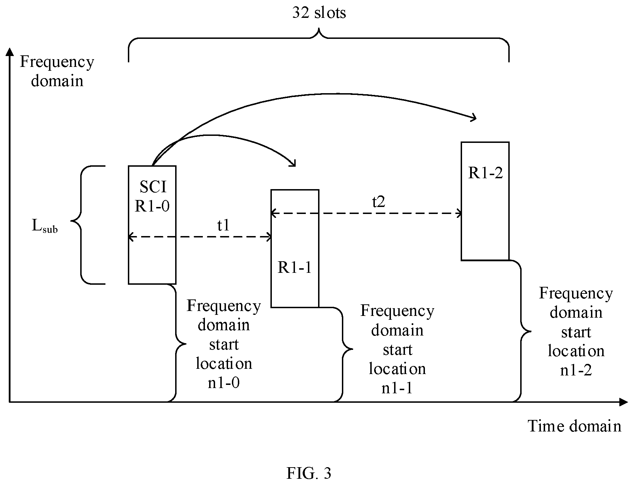

FIG. 3 is a diagram of a resource indicated by a TRIV field and an FRIV field in SCI.

As shown in FIG. 3, it is assumed that UE A sends SCI, and resources indicated by the SCI include a used resource R1-0 and reserved resources R1-1 and R1-2. Frequency domain start locations of the three resources indicated by the SCI are respectively represented as n1-0, n1-1, and n1-2, and frequency domain lengths of the three resources are equal, namely, $L_{sub}$.

The TRIV field indicates a slot in which the 2nd resource R1-1 is located and a slot in which the 3rd resource R1-2 is located. A time domain location of the 1st resource R1-0 does not need to be indicated because when other UE detects the SCI sent by the UE A, the time domain location of the 1st resource R1-0 is a slot for receiving the SCI.

The FRIV field indicates the frequency domain start location of the 2nd resource R1-1, the frequency domain start location of the 3rd resource R1-2, and the frequency domain lengths of the three resources (namely, R1-0, R1-1, and R1-2). The frequency domain start location n1-0 of the 1st resource R1-0 does not need to be indicated because when detecting the SCI sent by the UE A, other UE may deduce the frequency domain start location of the 1st resource based on a subchannel of the SCI. Therefore, the FRIV field does not need to indicate the frequency domain start location n1-0 of the 1st resource R1-0.

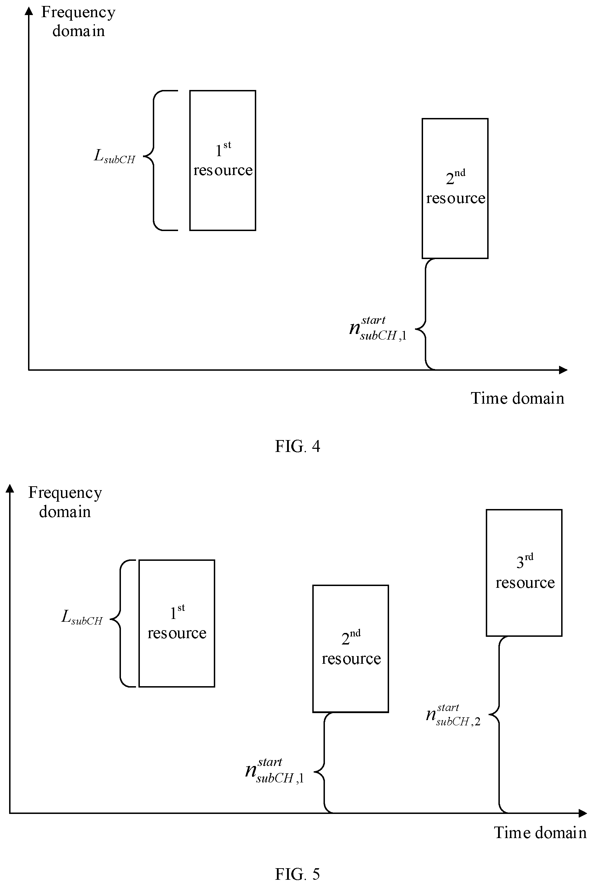

FIG. 4 is a diagram of a parameter indicated by an FRIV field when $N_{max}$=2.

When the maximum quantity (namely, $N_{max}$) of resources indicated by the SCI is 2, the FRIV field is determined in the following manner:

$$FRIV = n_{subCH,1}^{start} + \sum_{i=1}^{L_{subCH}-1} (N_{subCH}^{SL} + 1 - i) \quad (1)$$

$N_{subCH}^{SL}$ is a quantity of subchannels included in the resource pool, and may be configured or pre-configured by the base station, $L_{subCH}$ is a frequency domain length of a resource indicated by the SCI, $n_{subCH,1}^{start}$ is a start location of the 2nd resource, and $i$ is a positive integer.

FIG. 5 is a diagram of a parameter indicated by an FRIV field when $N_{max}$=3.

When the maximum quantity (namely, $N_{max}$) of resources indicated by the SCI is 3, the FRIV field is determined in the following manner:

$$FRIV = n_{subCH,1}^{start} + n_{subCH,2}^{start} \cdot (N_{subCH}^{SL} + 1 - L_{subCH}) + \sum_{i=1}^{L_{subCH}-1} (N_{subCH}^{SL} + 1 - i)^2 \quad (2)$$

$N_{subCH}^{SL}$ is the quantity of subchannels included in the resource pool, and may be configured or pre-configured by the base station, $L_{subCH}$ is the frequency domain length of the resource indicated by the SCI, $n_{subCH,1}^{start}$ is a start location of the 2nd resource, $n_{subCH,2}^{start}$ is a start location of the 3rd sub-resource, and $i$ is a positive integer.

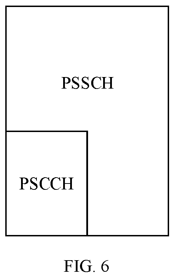

FIG. 6 is a diagram of a multiplexing structure of a PSCCH and a PSSCH.

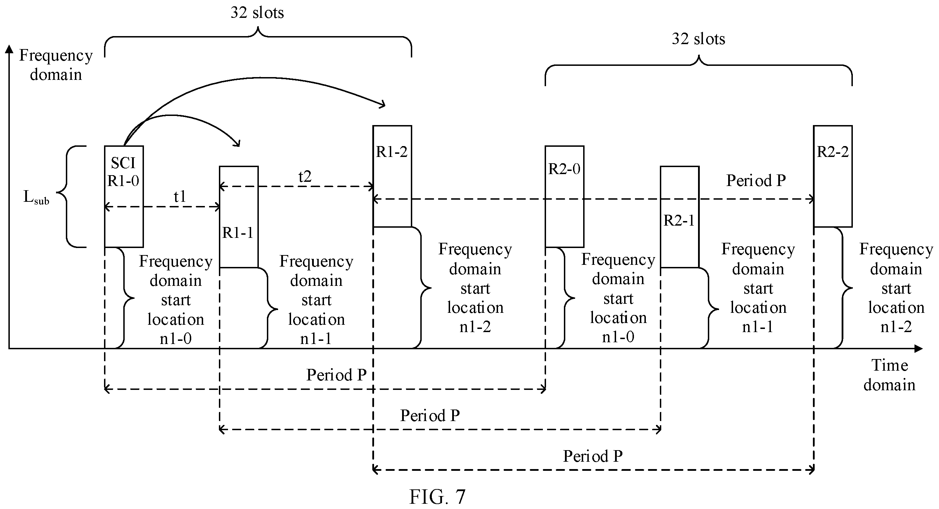

FIG. 7 shows a resource indicated by SCI and a resource determined based on a TRIV field, an FRIV field, and a resource reservation period that are in the SCI.

As shown in FIG. 7, it is assumed that the UE A sends SCI, and resources indicated by the SCI include a used resource R1-0, reserved resources R1-1 and R1-2, R2-0, R2-1, and R2-2, where R2-0, R2-1, and R2-2 are determined based on R1-0, the reserved resource R1-1 and R1-2, and a period. For example, an interval between the resource R1-0 and the resource R2-0 is a period P, an interval between the resource R1-1 and the resource R2-1 is the period P, and an interval between the resource R1-2 and the resource R2-2 is the period P.

The period P is determined based on a resource reservation period field in the SCI, and occupies $\lceil \log_2 N_{rsv\_period} \rceil$ bits, and $N_{rsv\_period}$ is a set of values of the resource reservation period configured at a higher layer.

Other UE may deduce a resource in a 1st period and a resource in a subsequent period based on the TRIV field, the FRIV field, and the resource reservation period field in the detected SCI sent by the UE A.

The following describes the technical solutions of this application.

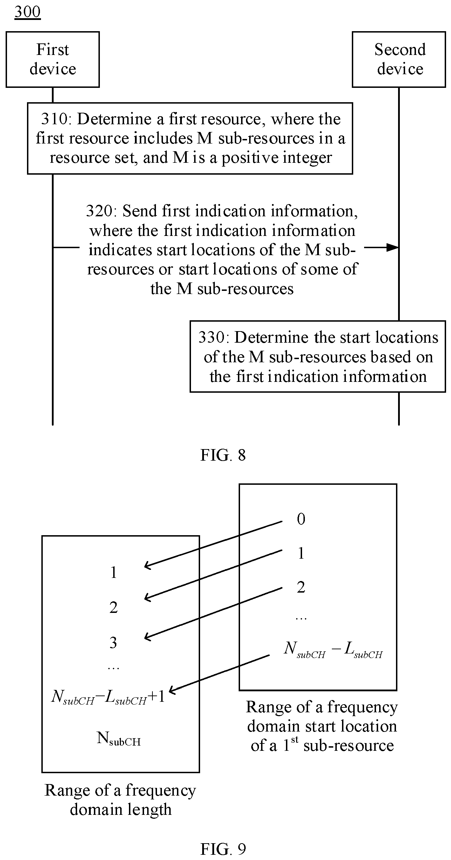

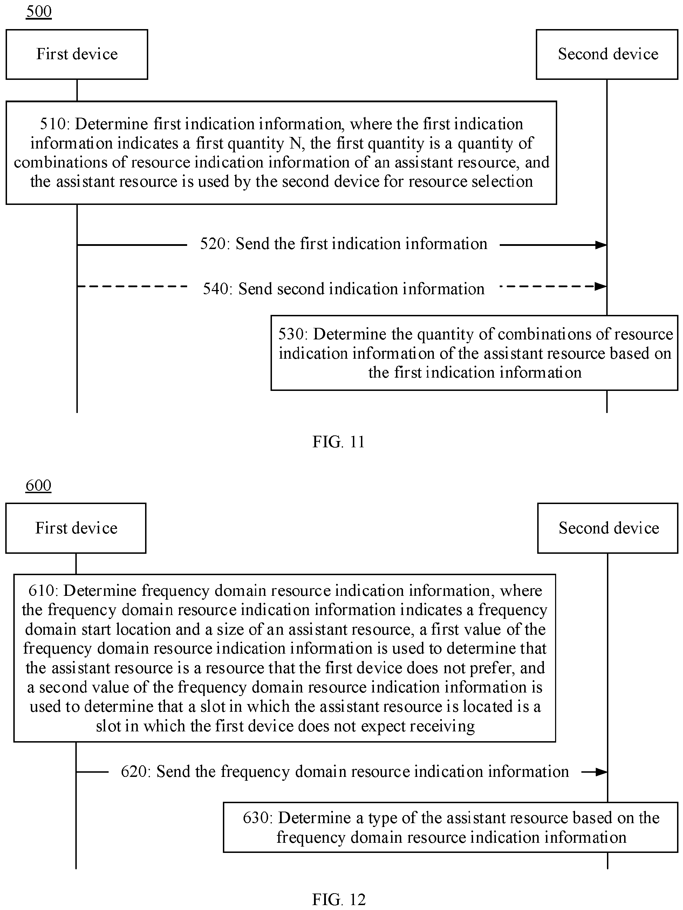

It should be noted that, in the technical solutions provided in this application, numbers "first", "second", and the like are used independently. For example, first indication information in FIG. 8 is applicable to a method 300 in FIG. 8 and embodiments of the method 300. "First indication information" in FIG. 11 is applicable to a method 500 in FIG. 11 and embodiments of the method 500. The first indication information in FIG. 8 and the first indication information in FIG. 11 express different meanings in respective solutions, and cannot be mixed.

FIG. 8 is a schematic flowchart of a resource indication method according to this application.

310: A first device determines a first resource, where the first resource includes M sub-resources in a resource set, and M is a positive integer.

The resource set may be understood as a time-frequency resource set. For example, the resource set is a resource pool. The resource pool is a set of time-frequency resources for sidelink transmission.

The first resource may be understood as a resource set including the M sub-resources.

320: The first device sends first indication information to a second device, where the first indication information indicates start locations of the M sub-resources or start locations of some of the M sub-resources.

The start location may be replaced with an end location or a location.

The second device receives the first indication information.

330: The second device determines the start locations of the M sub-resources based on the first indication information.

Optionally, the first indication information is second-stage SCI and/or a medium access control control element MAC CE.

Optionally, the first indication information indicates the start locations of the M sub-resources or the start locations of some of the M sub-resources. This may be implemented in a plurality of manners.

Manner 1

For example, the first indication information includes a first field and a second field, the first field indicates a start location of a 1st sub-resource in the M sub-resources, and the second field indicates a start location of another sub-resource other than the 1st sub-resource in the M sub-resources.

In other words, in this implementation, the first indication information uses the two fields to indicate the start location of the 1st sub-resource in the M sub-resources, and the start location of the another sub-resource other than the 1st sub-resource.

Optionally, for example, the first field and the second field are different fields in the second-stage SCI and/or the MAC CE.

Optionally, the second field further indicates a size of the M sub-resources. In other words, the second field indicates the start location of the another sub-resource other than the 1st sub-resource in the M sub-resources, and the size of the M sub-resources.

For example, the first indication information is a combination d in N combinations of resource indication information of an assistant resource, and the combination d includes the first field and the second field. The second field is an FRIV field, and the FRIV field indicates a frequency domain start location and a size of the another sub-resource other than the 1st sub-resource in the M sub-resources. The first field indicates a frequency domain start location of the 1st sub-resource in the M sub-resources. In this manner, the first indication information indicates a frequency domain location and a length of each of the M sub-resources. The first device may effectively indicate M assistant resources to the second device.

For example, the first indication information is a combination d in N combinations of resource indication information of the assistant resource, and the combination d includes the second field. The first field is a field, outside the combination d, associated with the combination d. The second field is an FRIV field, and the FRIV field indicates a frequency domain start location and a size of the another sub-resource other than the 1st sub-resource in the M sub-resources. The first field indicates a frequency domain start location of the 1st sub-resource in the M sub-resources. In this manner, the first indication information indicates a frequency domain location and a length of each of the M sub-resources. The first device may effectively indicate M assistant resources to the second device.

Manner 2

For example, a value of the first indication information is determined based on one or more parameters, and the one or more parameters indicate the start locations of the M sub-resources, or the one or more parameters may be used to determine the start locations of the M sub-resources.

In a possible case, M=3, that is, the first resource includes three sub-resources, respectively denoted as a 1st sub-resource, a 2nd sub-resource, and a 3rd sub-resource, in the resource set.

In this case, the first indication information indicates start locations of some or all of the three sub-resources included in the first resource.

For example, the value of the first indication information is determined based on one or more of the following parameters:

a start location of the 1st sub-resource, a start location of the 2nd sub-resource, a start location of the 3rd sub-resource, and a size of the M sub-resources.

The second device receives the first indication information from the second device, and may determine one or more of the start location of the 1st sub-resource, the start location of the 2nd sub-resource, the start location of the 3rd sub-resource, and the size of the M sub-resources based on the first indication information.

In other words, the value of the first indication information is a function related to the one or more parameters. After obtaining the value of the first indication information, the second device may determine values of the one or more parameters.

For example, when the value of the first indication information is a function related to the start location of the 1st sub-resource, the second device may determine the start location of the 1st sub-resource based on the value of the first indication information. For another example, when the value of the first indication information is a function related to the start location of the 1st sub-resource, the start location of the 2nd sub-resource, and the start location of the 3rd sub-resource, the second device may determine the start location of the 1st sub-resource, the start location of the 2nd sub-resource, and the start location of the 3rd sub-resource based on the value of the first indication information. For another example, when the value of the first indication information is a function related to the size of the M (M=3) sub-resources, the first device may determine the size of the M sub-resources based on the value of the first indication information. For another example, the value of the first indication information is a function related to the start locations of the M (M=3) sub-resources and the size of the M (M=3) sub-resources.

For example, a size of the 1st sub-resource, a size of the 2nd sub-resource, and a size of the 3rd sub-resource are the same. In other words, the size of the 1st sub-resource, the size of the 2nd sub-resource, and the size of the 3rd sub-resource are equal.

For example, the value of the first indication information is determined based on one or more of the following parameters:

$$(N_{subCH}^{SL}+1-L_{subCH}),\ (N_{subCH}^{SL}+1-L_{subCH})^2,\ \text{and}\ (N_{subCH}^{SL}+1-i)^3,$$

where $N_{subCH}^{SL}$ is a quantity of subchannels included in the resource set, $L_{subCH}$ is the size of the M sub-resources, and i is a positive integer. It should be noted that in this specification, $N_{subCH}^{SL}$, $N_{subCH}$, and $N_{subchannel}^{SL}$ may be interchangeable, and are a same parameter.

In addition, for another example, the value of the first indication information is determined based on one or more of the following parameters:

$$n_{subCH,1}^{start} \quad , \quad n_{subCH,2}^{start} \cdot (N_{subCH}^{SL} + 1 - L_{subCH}) \quad , \quad n_{subCH,3}^{start} \cdot (N_{subCH}^{SL} + 1 - L_{subCH})^2 \quad ,$$

and

$$\sum_{i=1}^{L_{subCH}-1} (N_{subCH}^{SL} + 1 - i)^3 ,$$

where $N_{subCH}^{SL}$ is the quantity of subchannels included in the resource set, $L_{subCH}$ is the size of the M sub-resources, $n_{subCH,1}^{start}$ is the start location of the 1st sub-resource, $n_{subCH,2}^{start}$ is the start location of the 2nd sub-resource, $n_{subCH,3}^{start}$ is the start location of the 3rd sub-resource, and i is a positive integer.

Further, for example, the value of the first indication information meets the following condition (3):

$$FRIV = n_{subCH,1}^{start} + n_{subCH,2}^{start} \cdot (N_{subCH}^{SL} + 1 - L_{subCH}) + n_{subCH,3}^{start} \cdot (N_{subCH}^{SL} + 1 - L_{subCH})^2 + \sum_{i=1}^{L_{subCH}-1} (N_{subCH}^{SL} + 1 - i)^3$$

$$(3)$$

*FRIV* is the value of the first indication information, $N_{subCH}$ is the quantity of subchannels included in the resource set, $L_{subCH}$ is the size of the M sub-resources, $n_{subCH,1}^{start}$ is the start location of the 1st sub-resource, $n_{subCH,2}^{start}$ is the start location of the 2nd sub-resource, $n_{subCH,3}^{start}$ is the start location of the 3rd sub-resource, and i is a positive integer.

In this example, after determining the value of the FRIV field, the second device may deduce the start locations of the M (M=3) sub-resources.

In a possible case, M=2, that is, the first resource includes two sub-resources, respectively denoted as a 1st sub-resource and a 2nd sub-resource, in the resource set.

In this case, the first indication information indicates start locations of the two sub-resources or start locations of some sub-resources included in the first resource.

For example, the value of the first indication information is determined based on one or more of the following parameters:
a start location of the 1st sub-resource, a start location of the 2nd sub-resource, and the size of the M (M=2) sub-resources.

The second device receives the first indication information from the first device, and may determine one or more of the start location of the 1st resource, the start location of the 2nd sub-resource, and the size of the M sub-resources based on the value of the first indication information.

In other words, the value of the first indication information is a function related to the one or more parameters. After obtaining the value of the first indication information, the second device may determine values of the one or more parameters.

For example, when the value of the first indication information is a function related to the start location of the 1st sub-resource, the second device may determine the start location of the 1st sub-resource based on the value of the first indication information. For another example, when the value of the first indication information is a function related to the start location of the 1st sub-resource and the start location of the 2nd sub-resource, the second device may determine the start location of the 1st sub-resource and the start location of the 2nd sub-resource based on the value of the first indication information. For another example, when the value of the first indication information is a function related to the size of the M (M=2) sub-resources, the second device may determine the size of the M sub-resources based on the value of the first indication information. For another example, when the value of the first indication information is a function related to the start locations and the size of the M (M=2) sub-resources, the second device may determine the start locations and the size of the M sub-resources based on the value of the first indication information.

For example, the size of the 1st sub-resource and the size of the 2nd sub-resource are the same. In other words, the size of the 1st sub-resource and the size of the 2nd sub-resource are equal.

For example, the value of the first indication information is determined based on one or more of the following parameters:

$$(N_{subCH}^{SL} + 1 - L_{subCH}) \quad \text{and} \quad (N_{subCH}^{SL} + 1 - L_{subCH})^2 \,,$$

where $N_{subCH}^{SL}$ is the quantity of subchannels included in the resource set, and $L_{subCH}$ is the size of the M sub-resources.

For another example, the value of the first indication information is determined based on one or more of the following parameters:

$$n_{subCH,1}^{start}, \quad n_{subCH,2}^{start} \cdot (N_{subCH}^{SL} + 1 - L_{subCH}), \text{ and } \sum_{i=1}^{L_{subCH}-1} (N_{subCH}^{SL} + 1 - i)^3 \,,$$

where $N_{subCH}^{SL}$ is the quantity of subchannels included in the resource set, $L_{subCH}$ is the size of the M sub-resources, $n_{subCH,1}^{start}$ is the start location of the 1st sub-resource, $n_{subCH,2}^{start}$ is the start location of the 2nd sub-resource, and $i$ is a positive integer.

Further, for example, the value of the first indication information meets the following condition (4):

$$FRIV = n_{subCH,1}^{start} + n_{subCH,2}^{start} \cdot (N_{subCH}^{SL} + 1 - L_{subCH}) + \sum_{i=1}^{L_{subCH}-1} (N_{subCH}^{SL} + 1 - i)^2 \quad (4)$$

*FRIV* is the value of the first indication information, $N_{subCH}^{SL}$ is the quantity of subchannels included in the resource set, $L_{subCH}$ is the size of the M sub-resources, $n_{subCH,1}^{start}$ is the start location of the 1st sub-resource, $n_{subCH,2}^{start}$ is the start location of the 2nd sub-resource, and $i$ is a positive integer.

In this example, after determining the value of the FRIV field, the second device may deduce the start locations of the M (M=2) sub-resources.

As described above, in the manner 2, the value of the first indication information is determined based on the one or more parameters. In an optional implementation, the first indication information is determined based on one parameter, and the parameter is the size of the M sub-resources.

In this optional implementation, the size of the M sub-resources and the start location of the 1st sub-resource in the M sub-resources meet a mapping relationship, and the mapping relationship includes one or more of the following:

a difference between the start location of the 1st sub-resource and the size of the M sub-resources is one offset value; and
there is a one-to-one mapping relationship between the start location of the 1st sub-resource and the M sub-resources, and one value of the start location of the 1st sub-resource uniquely corresponds to one value of the size of the M sub-resources.

Therefore, the second device receives the first indication information, where the first indication information indicates the size of the M sub-resources. The second device determines the size of the M sub-resources based on the first indication information. Further, because the size of the M sub-resources and the start location of the 1st sub-resource in the M sub-resources meet the mapping relationship, the second device may determine the start location of the 1st sub-resource in the M sub-resources based on the mapping relationship.

In this optional implementation, the first indication information may be the resource indication information of the first resource, and the resource indication information includes at least a time resource assignment value TRIV field and a frequency resource assignment value FRIV field of the first resource. The TRIV field indicates a time domain location of another sub-resource other than the 1st sub-resource in the M sub-resources included in the first resource, and the FRIV field indicates a frequency domain length of the M sub-resources included in the first resource, and a frequency domain start location of the another sub-resource other than the 1st sub-resource in the M sub-resources. In this case, the FRIV field may be determined according to the foregoing formula (1) or formula (2).

The second device receives the first indication information, and determines, based on the first indication information, a value of a parameter that indicates the frequency domain length of the M sub-resources. The start location of the 1st sub-resource may further be determined based on a one-to-one mapping relationship between the frequency domain length of the M sub-resources and the start location of the 1st sub-resource. Further, the second device may determine, based on the resource indication information (specifically, the TRIV field and the FRIV field) of the first resource, a time domain location, a frequency domain start location, and a frequency domain length of each of the M sub-resources included in the first resource.

Optionally, the second device sends trigger information to the first device. The trigger information includes at least one of a resource reservation period, a quantity of subchannels, and a priority. The first device determines the assistant resource based on the trigger information. A size of a subchannel of the assistant resource is a quantity of subchannels in the trigger information. The frequency domain length of the M sub-resources is the quantity of subchannels. The parameter that indicates the frequency domain length of the M sub-resources may indicate the frequency domain start location of the 1st sub-resource.

It is assumed that the quantity of subchannels in the resource set is $N_{subCH}$, and the frequency domain length of the M sub-resources included in the first resource is $L_{sub}$. A value range of $L_{sub}$ is [1, $N_{subCH}$], and a value range of the frequency domain start location (which is denoted as $n_{start}$) of the 1st sub-resource is [0, $N_{subCH}-L_{sub}$]. A mapping relationship between a value of the frequency domain start location $n_{start}$ of the 1st sub-resource and a value of the frequency domain length $L_{sub}$ of the M sub-resources is established, so that each value of the frequency domain start location $n_{start}$ of the 1st sub-resource uniquely corresponds to one value of the frequency domain length $L_{sub}$ of the M sub-resources. The first device sends the resource indication information of the first resource to the second device. The resource indication information includes frequency domain resource indication information of the first resource, and the frequency domain resource indication information indicates the frequency domain length of the M sub-resources included in the first resource. For example, the frequency domain resource indication information is an FRIV field. After determining the value of the frequency domain length of the M sub-resources based on the FRIV field, the second device may deduce, based on the mapping relationship, the value, corresponding to the value of the frequency domain length, of the frequency domain start location of the 1st sub-resource in the M sub-resources.

For example, the mapping relationship may be that the frequency domain start location of the 1st sub-resource is obtained by subtracting one offset value from the size of the M sub-resources (namely, the frequency domain length of the M sub-resources). For example, the offset value is 1.

FIG. 9 shows an example of determining a frequency domain start location of a 1st sub-resource in M sub-resources included in a first resource. As described above, if the mapping relationship between the frequency domain start location of the 1st sub-resource and the frequency domain length is that the frequency domain start location of the 1st sub-resource plus one offset value is equal to the frequency domain length, and the frequency domain length determined by the second device based on the FRIV field is 2, the frequency domain start location, namely, 1, of the 1st sub-resource is obtained by subtracting the offset value (it is assumed that the offset value is 1) from the frequency domain length.

It should be understood that a mapping manner between the frequency domain length of the M sub-resources and the frequency domain start location of the 1st sub-resource is not unique. A person skilled in the art may figure out a plurality of mapping manners based on a concept of the implementation. This is not limited in this application. For example, $N_{subCH}-L_{sub}+1$ values are selected from [1, $N_{subCH}$] values, and the $N_{subCH}-L_{sub}+1$ values one-to-one map to [0, $N_{subCH}-L_{sub}$]. That $N_{subCH}-L_{sub}+1$ values are selected from [1, $N_{subCH}$] values may be selecting first $N_{subCH}-L_{sub}+1$ values [1, $N_{subCH}-L_{sub}+1$], or selecting last $N_{subCH}-L_{sub}+1$ values [$L_{sub}$, $N_{subCH}$], or randomly selecting $N_{subCH}-L_{sub}+1$ values.

Optionally, the first resource is a frequency domain resource.

When the first resource is a frequency domain resource, the start location indicated by the first indication information is the frequency domain start location. Specifically, the first indication information indicates the frequency domain start locations of the M sub-resources or frequency domain start locations of some of the M sub-resources.

In this case, for example, the first indication information indicates frequency domain start locations of (M-1) sub-resources in the M sub-resources, and a location of a time domain resource in which the first indication information is located is before time domain start locations of the M sub-resources. In this case, the first indication information further indicates a time domain location of a sub-resource, in the M sub-resources, whose start location is not indicated.

In other words, in this example, the first indication information indicates only the frequency domain start locations of the (M-1) sub-resources in the M sub-resources, and a frequency domain start location of one sub-resource is not indicated by the first indication information. For clarity and brevity of description, it is assumed that the sub-resource whose frequency domain start location is not indicated is denoted as a sub-resource a.

Optionally, the sub-resource (for example, the sub-resource a) whose frequency domain start location is not indicated may be the 1st sub-resource, a last sub-resource, or any sub-resource other than the 1st sub-resource and the last sub-resource in the M sub-resources.

In this implementation, the frequency domain start location of the sub-resource a may be independently indicated by the first device.

For example, the time domain location of the sub-resource whose frequency domain start location is not indicated is determined based on a time domain offset value between a first slot and a second slot. The first slot is a slot in which the first indication information is located, and the second slot is a slot in which the sub-resource whose frequency domain start location is not indicated is located. For example, the time domain offset value is from first configuration information, and an index value corresponding to the time domain offset is indicated by the first indication information.

For example, the following describes how to determine the time domain location of the sub-resource whose frequency domain start location is not indicated by using an example in which the sub-resource whose frequency domain start location is not indicated is the 1st sub-resource in the M sub-resources.

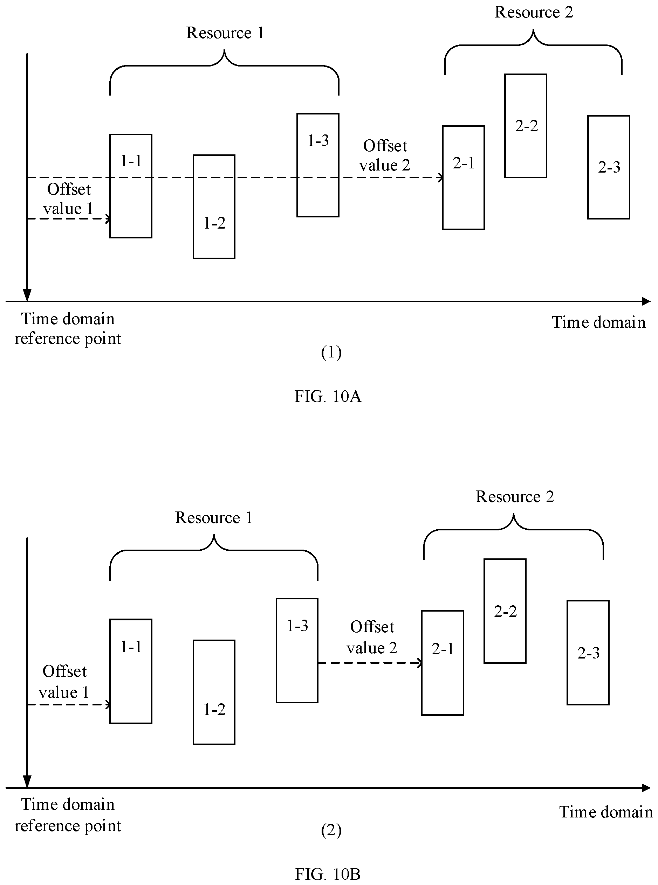

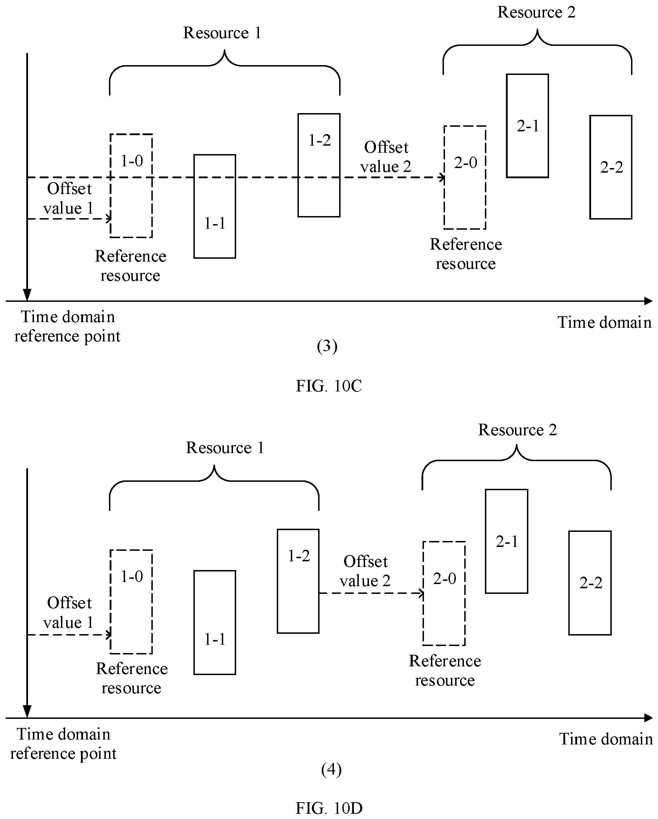

FIG. 10A, FIG. 10B, FIG. 10C, and FIG. 10D show an example of an implementation of indicating a time domain location of a sub-resource according to this application.

Manner (1) shown in FIG. 10A

(1) A time domain reference point is pre-configured, configured, or pre-defined, and the first device indicates, to the second device, a time domain offset value of a time domain location, relative to the time domain reference point, of the 1st sub-resource in the M sub-resources included in the first resource.

For example, the time domain reference point may be one of the following:

time at which the first device receives trigger signaling from the second device;
a time domain start location of a resource selection window (resource selection window, RSW) determined by the first device;
a time domain resource on which the first device sends assistant information; and
a last time domain resource indicated by SCI for sending the assistant information by the first device.

The first device sends the first indication information, where the first indication information indicates the time domain offset value. The time domain offset value is an interval between the time domain reference point and a time domain resource of the 1st sub-resource.

The second device obtains the first indication information, where the first indication information indicates the time domain offset value. The second device may determine the time domain location of the 1st sub-resource based on the time domain reference point and the time domain offset value. The time offset value indicated by the first indication information is from the first configuration information, and the first configuration information is configured or pre-configured by a network device.

For example, the first configuration information includes {32, 64, 96, 128, 160, 192, 224, 256}, and the first indication information uses 3 bits to indicate one of the eight values included in the first configuration information. For another example, if the first configuration information includes $K$ values, $\lceil log_2(K) \rceil$ bits in the first indication information indicate one of the $K$ values. The $K$ values may be 1 to $K$ continuous values, or may be $K$ discrete values. The K discrete values may be pre-configured or configured by the network device.

Herein, the descriptions about the first configuration information are also applicable to another manner related to first configuration information. Details are not described again in the following.

It should be understood that two resources (corresponding to two combinations) are shown in the manner (1) in FIG. 10A, for example, a resource 1 (corresponding to a combination 1) and a resource 2 (corresponding to a combination 2). The resource 1 and the resource 2 each include three sub-resources (each sub-resource is one assistant resource). For both the resource 1 and the resource 2, the first device may indicate the time domain location of the 1st sub-resource to the second device in the manner (1). For example, the first configuration information includes two time domain offset values (for example, an offset value 1 and an offset value 2). The second device may determine, based on the two time domain offset values and the time domain reference point, a time domain location (time domain reference point+offset value 1) of a 1st sub-resource included in the resource 1 and a time domain location (time domain reference point+offset value 2) of a 1st sub-resource included in the resource 2.

It may be understood that, in the manner (1), time domain reference points in all combinations are the same.

The manner (1) is only a manner of indicating the 1st sub-resource in the M sub-resources included in the first resource. The following provides several other manners.

Manner (2) shown in FIG. 10B

(2) A time domain reference point is pre-configured, configured, or pre-defined, and the first device indicates, to the second device, a time domain offset value of a time domain location, relative to the time domain reference point, of a 1st sub-resource in a 1st resource whose domain location is the foremost, and a time domain offset value of a time domain location, relative to a time domain location of a last sub-resource in a previous resource, of a 1st sub-resource in a resource, where the previous resource and the resource are two resources whose time domain locations are adjacent. It may be understood that a time domain reference point of a 1st resource in a 1st combination is a pre-configured, configured, or pre-defined time domain reference point, and other than the 1st combination, a 1st resource in a combination uses a last resource in a previous combination as a time domain reference point.

In the manner (2) shown in FIG. 10B, a resource 1 and a resource 2 each include three sub-resources, and the first configuration information indicates an offset value 1 and an offset value 2. The second device determines a time domain location (time domain reference point+offset value 1) of a 1st sub-resource in the resource 1 based on the time domain reference point and the offset value 1. In addition, the second device may determine time domain locations of the remaining two sub-resources in the resource 1 based on time domain resource indication information of the resource 1. Further, the second device determines a time domain location (time domain location of a 3rd sub-resource in the resource 1+offset value 2) of a 1st sub-resource in the resource 2 based on the time domain location of the 3rd sub-resource in the resource 1 and the offset value 2.

It should be noted that, in the manner (2) in FIG. 10B, the second device further obtains the time domain resource indication information (for example, a TRIV field) of the resource 1. When the time domain location of the 1st sub-resource in the resource 1 is known, the time domain resource indication information of the resource 1 is used to determine a time domain location of another sub-resource other than the 1st sub-resource in the resource 1. Therefore, after the time domain location of the 1st sub-resource in the resource 1 is determined, the time domain locations of the last two sub-resources in the resource 1 may be determined based on the time domain resource indication information of the resource 1. Further, the time domain location of the 1st sub-resource in the resource 2 may be learned of based on the time domain location of the last sub-resource in the resource 1 and the offset value 2. A time domain location of another sub-resource other than the 1st sub-resource in the resource 2 may further be determined based on time domain resource indication information (for example, a TRIV field) of the resource 2.

Manner (3) shown in FIG. 10C

(3) A time domain reference point is pre-configured, configured, or pre-defined, and it is assumed that the first device needs to indicate N resources to the second device, where each of the N resources includes several sub-resources. A 1st sub-resource in a sub-resource included in each resource is not an assistant resource. The first device indicates, to the second device, a time domain offset value of a time domain location, relative to the time domain reference point, of the 1st sub-resource in each of the N resources. The first resource is an example of one of the N resources.

It may be understood that a 1st sub-resource in M sub-resources indicated by each combination is not an assistant resource. The 1st sub-resource is a time domain reference point that indicates time domain locations of remaining M-1 sub-resources other than the 1st sub-resource in the M sub-resources. In other words, a function of the 1st sub-resource is indicating the time domain reference points of the remaining M-1 sub-resources other than the 1st sub-resource in each combination. Time domain reference points in the combinations are the same.

In the manner (3) in FIG. 10C, N=2, that is, there are two resources: a resource 1 and a resource 2. Each resource includes three sub-resources, and a 1st sub-resource in each resource is a reference resource of the resource. For example, a 1st sub-resource in the resource 1 is a reference resource 1-0, and a 1st sub-resource in the resource 2 is a reference resource 2-0. In addition, the resource 1 further includes two sub-resources: 1-1 and 1-2 (both are assistant resources). The resource 2 further includes two sub-resources: 2-1 and 2-2 (both are assistant resources).

The second device obtains the first indication information, where the first indication information indicates an offset value 1 and an offset value 2. The time offset value indicated by the first indication information is from the first configuration information, and the first configuration information is configured or pre-configured by a network device.

For example, the first configuration information includes {32, 64, 96, 128, 160, 192, 224, 256}, and the first indication information uses 3 bits to indicate one of the eight values included in the first configuration information. For another example, if the first configuration information includes $K$ values, $\lceil log_2(K) \rceil$ bits in the first indication information indicate one of the $K$ values. The $K$ values may be 1 to $K$ continuous values, or may be $K$ discrete values. The $K$ discrete values may be pre-configured or configured by the network device.

The second device may determine a time domain location of the 1st sub-resource (namely, the reference resource 1-0) in the resource 1 based on the time domain reference point and the offset value 1. Further, the second device may determine time domain locations of the two sub-resources included in the resource 1 based on the time domain location of the reference resource 1-0 and the time domain resource indication information (for example, a TRIV field) of the first resource. Specifically, the second device considers the reference resource 1-0 and the two sub-resources (for example, 1-1 and 1-2) included in the first resource as a group of resources. The reference resource is a 1st resource in the group of resources, and a time domain location of another resource other than the 1st resource in the group of resources may be determined based on the TRIV field. In this case, the TRIV field may be considered as time domain location indication information of the group of resources including the reference resource 1-0, the sub-resource 1-1 in the resource 1, and the sub-resource 1-2 in the resource 1. When the time domain location of the 1st resource (specifically, the reference resource 1-0) in the group of resources is known, the time domain location of the another resource other than the 1st resource in the group of resources may be determined. Therefore, the time domain locations of the two sub-resources included in the resource 1 may be obtained.

A process of determining a time domain location of the 1st assistant resource (that is, the 2nd sub-resource 2-1) in the resource 2 is the same as the process of determining the time domain location of the 1st assistant resource (that is, the 2nd sub-resource 1-1) in the resource 1. Details are not described herein again.

Manner (4) shown in FIG. 10D

(4) A time domain reference point is pre-configured, configured, or pre-defined, and it is assumed that the first device needs to indicate N resources to the second device, where each of the N resources includes several sub-resources. A 1st sub-resource in a sub-resource included in each resource is not an assistant resource. The first resource is an example of one of the N resources. For descriptions of a resource 1 and a resource 2, refer to descriptions of the manner (3) in FIG. 5. Details are not described again. It may be understood that a 1st resource in M resources indicated by each combination is not an assistant resource. The 1st resource is a time domain reference point that indicates time domain locations of remaining M-1 resources other than the 1st resource in the M resources. In other words, a function of the 1st resource is indicating the time domain reference points of the remaining M-1 resources other than the 1st resource in each combination. In addition, time domain reference points of the combinations are different. A time domain reference point of a 1st combination is a pre-configured, configured, or pre-defined time domain reference point, and other than the 1st combination, a 1st resource in a combination uses a last resource in a previous combination as a time domain reference point.

The first device indicates, to the second device, a time domain offset value (for example, an offset value 1) of a time domain location, relative to the time domain reference point, of a 1st sub-resource (for example, 1-0, which is also a reference resource in the resource 1) in a 1st resource (for example, the resource 1) whose domain location is the foremost, and a time domain offset value of a time domain location, relative to a time domain location of a last sub-resource (for example, 1-2) in a previous resource (for example, 1-0), of a reference resource (for example, 2-0) in a resource (for example, the resource 2), where the previous resource and the resource are two resources (for example, the resource 1 and the resource 2) whose time domain locations are adjacent. Specifically, the time domain offset value 1 and the time domain offset value 2 may be indicated by the first indication information. The second device obtains the first indication information, and obtains the time domain offset value 1 and the time domain offset value 2 from the first indication information. The second device may determine a time domain location of an assistant resource (namely, a sub-resource other than a 1st reference resource) in the resource 1 based on the time domain offset value 1 and time domain resource indication information (for example, a TRIV field) of the resource 1. The manner (4) is similar to the manner (3). When determining the time domain location of the assistant resource in the resource 1, the second device considers the reference resource (for example, 1-0) in the resource 1 and two assistant resources (for example, 1-1 and 1-2) included in the first resource as a group of resources. The reference resource is considered as a 1st resource in the group of resources, and a time domain location of another resource other than the 1st resource in the group of resources may be determined based on the TRIV field, to obtain time domain locations of the two assistant resources included in the resource 1. Further, the second device may determine a time domain location of a reference resource (for example, 2-0) in the resource 2 based on a time domain location of a last sub-resource (for example, 1-2) in the resource 1 and the time domain offset value 2. Then, time domain locations of two assistant resources included in the resource 2 are determined based on a time domain location of a reference resource in the resource 2 and time domain resource indication information (for example, a TRIV field) of the resource 2.

The foregoing describes the resource indication method provided in this application.

The resource indication method provided in this application may indicate a communication scenario of a group of resources (for example, M sub-resources in a resource set). The resource indication method provided in this application is applicable to a case in which one or more groups of resources need to be indicated between two devices. When there are a plurality of groups of resources, the M sub-resources included in the first resource are equivalent to a group of resources. When the plurality of groups of resources need to be indicated, indications of the groups of resources are similar. In an example of a communication scenario, the resource indication method provided in this application may be used in a sidelink communication scenario.

In this scenario, both the first device and the second device are terminals. Alternatively, the first device is a first terminal (or a first terminal apparatus), and the second device is a second terminal (or a second terminal apparatus).

In addition, the resource set is a resource pool.

In addition, that the first resource includes the M sub-resources in the resource set may correspond to that the first resource is a group of assistant resources including M assistant resources, where the M assistant resources belong to resources in the resource pool of the first device, and M is a positive integer. Optionally, a quantity M of assistant resources included in each group of assistant resources is not necessarily the same. A quantity of sub-resources indicated by each group of assistant resources is less than or equal to a maximum value, and maximum values of quantities of sub-resources indicated by the groups of resources are the same.

For ease of understanding subsequent embodiments, the following describes the assistant resource and concepts related to the assistant resource.

In sidelink communication, UE coordination can resolve problems such as half duplexing, a hidden node, and an exposed node, and can improve transmission reliability in a resource selection mode 2 process of sidelink communication.

UE coordination may be classified into a scheme 1 (scheme 1) and a scheme 2 (scheme 2). This application mainly relates to the scheme 1.

The scheme 1 has two branches: a trigger-based scheme 1 and a condition-based scheme 1. The trigger-based scheme 1 includes four steps. Two UEs (for example, UE A and UE B) that perform sidelink communication are used as an example. The UE B mainly requests the UE A to provide an assistant resource, to assist the UE B in resource selection.

Step 1: The UE B sends trigger signaling to the UE A, where the trigger signaling is used to request the UE A to provide an assistant resource for resource selection of the UE B.

Step 2: The UE A receives the trigger signaling, and determines an assistant resource set based on a condition.

Step 3: The UE A sends the assistant resource set to the UE B.

Step 4: After receiving the assistant resource set, the UE B uses the assistant resource set for resource selection of the UE B.

However, in the condition-based scheme 1, the UE A provides an assistant resource for the UE B after a specific condition is met, and the UE B does not need to provide trigger signaling for the UE A.

That the UE A provides an assistant resource set for the UE B may specifically be that the UE A indicates, to the UE B based on assistant information, the provided assistant resource, or that the UE A sends assistant information to the UE B, where the assistant information indicates the assistant resource. Specifically, the assistant information includes resource indication information indicating the assistant resource. Further, the resource indication information may include time domain resource indication information and frequency domain resource indication information. The time domain resource indication information may specifically be a time resource assignment value (time resource assignment value, TRIV) field, and the frequency domain resource indication information may specifically be a frequency resource assignment value (frequency resource assignment value, FRIV) field.

For ease of description, the following replaces the UE A with a first terminal, and the UE B with a second terminal.

The assistant information may be in a form of N combinations, and each of the N combinations indicates a group of assistant resources. In other words, the first terminal sends the assistant information to the second terminal. The assistant information includes the N combinations, and each of the N combinations indicates one group of assistant resources. Specifically, a TRIV field in each of the N combinations indicates a time domain location of an assistant resource in the combination, and an FRIV field in each of the N combinations indicates a frequency domain location (for example, a frequency domain start location and a size) of an assistant resource in the combination. Optionally, in sidelink communication, resource reservation is further supported. Therefore, the assistant information may further include a resource reservation period. This is not limited. Optionally, when the first terminal provides a preferred resource based on trigger signaling of the second terminal, the resource reservation period may be ignored.

Optionally, when a quantity of combinations included in the assistant information is less than a threshold, the assistant information may be carried by SCI-2 and a MAC CE. When the quantity of combinations included in the assistant information is greater than or equal to the threshold, the assistant information may be carried by the MAC CE.

In conclusion, when a maximum quantity of resources included in a group of resources indicated by a combination is 2 or 3, the TRIV field indicates a time domain location of a resource other than a 1st resource in the group of resources, and the FRIV field indicates a frequency domain length of the group of resources and a frequency domain start location of another resource other than the 1st resource.

In a resource assignment scheme in the sidelink communication mode 2, the first device provides an assistant resource for the second device, so that the second device performs resource selection. In addition, a quantity of assistant resources provided by the first device for the second device may be less than or equal to a maximum quantity. However, for one resource selection process, a quantity of assistant resources provided by the first device for the second device is uncertain. Consequently, the first device and the second device may have different understandings about the quantity of assistant resources, and the resource selection process of the second device is affected.

Therefore, this application further provides an information sending method, so that a first device and a second device have a consistent understanding about a quantity of assistant resources provided by the first device.

FIG. 11 is a schematic flowchart of an information sending method according to this application.

510: A first device determines first indication information, where the first indication information indicates a first quantity N, the first quantity is a quantity of combinations of resource indication information of an assistant resource, the assistant resource is used by a second device for resource selection, the first device is a receiving device of the second device, and N is a non-negative integer.

Herein, the assistant resource is used for resource selection of the second device. In other words, in a resource selection process, the second device may refer to the assistant resource provided by the first device.

For example, the assistant resource is a non-preferred resource or a preferred resource. The non-preferred resource is a resource that the first device does not prefer the second device to use in a resource selection process for transmission. The preferred resource is a resource that the first device prefers the second device to use in a resource selection process for transmission. In the resource selection process for transmission of the second device, the second device may use the non-preferred resource or the preferred resource provided by the first device. When the assistant resource is the non-preferred resource, the second device excludes a resource that overlaps the non-preferred resource in the resource selection process for transmission of the second device. When the assistant resource is the preferred resource, the second device uses a resource that is a preferred resource and that is a resource determined based on a sensing result of the second device in the resource selection process for transmission of the second device.

520: The first device sends first indication information to the second device, and the second device receives the first indication information.

530: The second device determines a quantity of combinations of resource indication information of the assistant resource based on the first indication information.

The resource indication information at least includes a time resource assignment value TRIV field and a frequency resource assignment value FRIV field. Alternatively, the combination at least includes a TRIV field and an FRIV field.

It should be noted that the assistant resource is usually one or more groups of resources in a unit of a group. Therefore, a combination of the TRIV field and the FRIV field may indicate a group of assistant resources.

In an implementation, the TRIV field indicates a time domain location of an assistant resource in a group of assistant resources, and the FRIV field indicates a frequency domain start location and a frequency domain length of an assistant resource in a group of assistant resources. Optionally, frequency domain lengths of assistant resources in a group of assistant resources are the same. In this implementation, the FRIV field may be the foregoing formula (3) or formula (4). Details are not described herein again.

In another implementation, the TRIV field indicates a time domain location of another assistant resource other than a 1st assistant resource in a group of assistant resources. The FRIV field indicates a frequency domain length of a group of assistant resources, and a frequency domain start location of each assistant resource other than a 1st assistant resource. In this implementation, the FRIV field may be the foregoing formula (1) or formula (2). Details are not described herein again.

Optionally, the first quantity N is less than or equal to a second quantity L, and the second quantity is a configured or pre-configured value.

Optionally, there may be two second quantities.

It is known that assistant information may be carried by SCI-2 and a MAC CE, or assistant information is carried by a MAC CE. One second quantity may be configured for the implementation in which the assistant information is carried by the SCI-2 and the MAC CE, and one second quantity may be configured for the implementation in which the assistant information is carried by the MAC CE. Optionally, in the two cases, values of the second quantities may be the same or different. This is not limited.

In other words, the quantity of combinations of the resource indication information of the assistant resource indicated by the first device to the second device is an actual quantity, and is an actual quantity of combinations indicated by the first device to the second device. The second quantity is a maximum quantity of pre-configured or configured combinations. The actual quantity of combinations indicated by the first device to the second device is less than or equal to the maximum quantity.

(1) In an optional implementation, the first indication information may be included in first-stage SCI.

Manner 1

In an implementation, the first indication information may be reserved information in the first-stage SCI.
For example, in a sidelink SL communication scenario, the first terminal indicates the first quantity to the second device by using the reserved information in the first-stage SCI. The reserved information may be understood as a bit or a code point of a reserved resource. Alternatively, the code point may also be referred to as a status.

Manner 2

In another implementation, the first indication information is included in the first-stage SCI, reserved information in the first-stage SCI indicates that a shared channel scheduled by the first-stage SCI carries only assistant information, and the assistant information includes the resource indication information.
The first indication information includes MCS indication information and/or MCS table indication information in the first-stage SCI; or
the first indication information includes some bits or some statuses of MCS indication information in the first-stage SCI, and/or some bits or some statuses of MCS table indication information in the first-stage SCI.
That the reserved information in the first-stage SCI indicates that the shared channel scheduled by the first-stage SCI carries only the assistant information may be understood as that the reserved information in the first-stage SCI indicates that the assistant information and data scheduled by the first-stage SCI are not multiplexed, or the reserved information in the first-stage SCI indicates that only the assistant information is scheduled by the first-stage SCI. Herein, the assistant information may be carried in the MAC CE, or may be carried in the MAC CE and second-stage SCI.
When only the assistant information is scheduled by the first-stage SCI, an MCS of the assistant information may be pre-defined, fixed, or configured by using RRC signaling or PC5 RRC signaling.
Optionally, the first indication information is a remaining bit or status in a quantity of bits/statuses in an MCS field and/or an MCS table indication field.
Optionally, a modulation order of the assistant information is one of QPSK, 16QAM, and 64QAM. A code rate of the assistant information may be a fixed code rate, a code rate in an MCS table, or a code rate corresponding to an MCS index 0 in the MCS table. For example, the modulation order of the assistant information is QPSK, and the code rate is the code rate corresponding to the MCS index 0. In other words, it indicates that the MCS of the assistant information uses 0 statuses, and there are still 32 remaining statuses. At least one of the bit or status of the MCS field and/or the MCS table indication field may indicate the quantity of combinations (the first quantity).
Optionally, the code rate of the assistant information may be one of a set of code rates corresponding to the modulation order. For example, the modulation order of the assistant information is QPSK, and the code rate is a code rate corresponding to MCS indexes [0, 9]. In other words, it indicates that the MCS of the assistant information uses 10 statuses, and there are still 22 remaining statuses. At least one of the remaining statuses may indicate the quantity of combinations (the first quantity).
For example, in the following table, the MCS field is 5 bits, and the 5 bits indicate 32 statuses that separately correspond to 32 indexes. The first indication information is one or more of MCS indexes [10, 31] corresponding to modulation orders 16QAM and 64QAM in the MCS table, and each MCS index corresponds to a status indicated by the MCS field.
For example, in the following table, the MCS field is 5 bits, and the 5 bits indicate 32 statuses that separately correspond to 32 indexes. The first indication information is one or more of MCS indexes [10, 31] corresponding to modulation orders 16QAM and 64QAM in the MCS table, and each MCS index corresponds to a status indicated by the MCS field.

Table 1

| MCS index (index) $I_{MCS}$ | Modulation order (modulation order) $Q_m$ | Target code rate (target code rate Rx [1024]) | Spectral efficiency (spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| MCS index (index) $I_{MCS}$ | Modulation order (modulation order) $Q_m$ | Target code rate (target code rate Rx[1024]) | Spectral efficiency (spectral efficiency) |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

In the manner 2, the first indication information may be the MCS indication information and/or the MCS table indication information in the first-stage SCI; or the first indication information may be some bits or some statuses of the MCS indication information and/or the MCS table indication information in the first-stage SCI. In addition, the reserved information in the first-stage SCI indicates that the shared channel scheduled by the first-stage SCI carries only the assistant information, and the assistant information includes the resource indication information of the assistant resource.

Because the MCS of the assistant information does not use up 5 bits or 32 statuses (code points), and remaining bits or statuses in the 5 bits or 32 statuses indicate the quantity of combinations, an existing quantity of bits may indicate useful information to a maximum extent, and no additional bits are added. The first device and the second device have a consistent understanding about the quantity of combinations and the quantity of assistant resources.

Optionally, in the manner 2, the "some statuses" may be replaced with "some code points".

Optionally, a format of the first-stage SCI in the manner 1 and the manner 2 may be an SCI format 1-A or another format. This is not limited.

Manner 3

In another implementation, the first indication information is included in the first-stage SCI, reserved information in the first-stage SCI indicates that a shared channel scheduled by the first-stage SCI carries assistant information, and the assistant information includes the resource indication information.

The first-stage SCI does not include MCS indication information and/or MCS table indication information.

It may be understood that the MCS indication information is an MCS indication field. The MCS table indication information is an MCS table indication field.

That the reserved information in the first-stage SCI indicates that the shared channel scheduled by the first-stage SCI carries the assistant information may be understood as that the shared channel scheduled by the first-stage SCI carries the assistant information, or that the assistant information is scheduled by the first-stage SCI. Herein, the assistant information may be carried in a MAC CE and second-stage SCI, or may be carried in a MAC CE.

That the reserved information in the first-stage SCI indicates that the shared channel scheduled by the first-stage SCI carries the assistant information may be replaced with that the shared channel scheduled by the first-stage SCI carries the assistant information. Optionally, the shared channel scheduled by the first-stage SCI carries only the assistant information and data. For explanations of the reserved information, refer to the manner 1.

Optionally, the first-stage SCI uses all or some bits/statuses in the MCS indication field and/or the MCS table indication field to indicate the first quantity. In this case, the original MCS indication field and/or MCS table indication field no longer exist.

Optionally, formats of the first-stage SCI in the manner 1 to the manner 3 may be an SCI format 1-A, or a format of the first-stage SCI is different from an SCI format 1-A. For example, the format of the first-stage SCI may be a new format of SCI used in future sidelink communication. This is not limited.

Optionally, when the reserved information in the first-stage SCI is used in the manner 1 to the manner 3, the format of the first-stage SCI is the SCI format 1-A.

(2) In another optional implementation, the first indication information may be included in the second-stage SCI and/or the MAC CE.

The first indication information may be included in the second-stage SCI. It may be understood that the second-stage SCI has at least one bit indicating the first quantity.

The first indication information may be included in the MAC CE. It may be understood that the MAC CE has at least one bit indicating the first quantity, a MAC subheader (subheader) of the MAC CE indicates the first quantity, or a MAC header of the MAC CE indicates the first quantity.

In this way, the second-stage SCI and/or the MAC CE indicates the first quantity, so that a receive end and a transmit end have a consistent understanding about the quantity of combinations. It is ensured that the second device can successfully receive the assistant information of the first device, to improve transmission reliability by using the assistant information.

As shown above, the first quantity is less than or equal to the second quantity.

In a possible case, the first device sends the first indication information to the second device, where the first indication information indicates the first quantity, and the first quantity is equal to the second quantity. In other words, the quantity of combinations of the resource indication information of the assistant resource indicated by the first device to the second device is the maximum quantity. In this case, the first device indicates $L$ combinations to the second device, but some of the $L$ combinations may be invalid. In this case, a third value of frequency domain resource indication information indicates a frequency domain start location or a size of the assistant resource, a fourth value of the frequency domain resource indication information indicates that the combination of resource indication information is an invalid combination, and the fourth value is a reserved state of the frequency domain resource indication information.

That the third value of the frequency domain resource indication information indicates the frequency domain start location and the size of the assistant resource may be understood as that the third value of the frequency domain resource indication information indicates that a combination of resource indication information is a valid combination, and the third value indicates the frequency domain start location and the size of the assistant resource.

For example, a valid combination is as follows: An assistant resource indicated by a combination of resource indication information of the assistant resource is a valid assistant resource or an actual assistant resource, and the first device may use the assistant resource as a reference resource, that is, the assistant resource may be used in a resource selection process. An invalid combination is as follows: An assistant resource indicated by a combination of resource indication information of the assistant resource is an invalid assistant resource, and the first device cannot refer to a resource in the combination in a resource selection process, the invalid resource is not a reference resource used by the first device during resource selection, or the first device does not use a resource in the combination during resource selection.

Optionally, "a fourth value of the frequency domain resource indication information indicates that the combination of resource indication information of the assistant resource is an invalid combination, and the fourth value is a reserved state of the frequency domain resource indication information" may be replaced with that the fourth value of the frequency domain resource indication information indicates that a resource indicated by the combination of resource indication information of the assistant resource is an invalid resource, and the invalid resource is not a reference resource used by the first device during resource selection. The fourth value is a reserved state of the frequency domain resource indication information.

For example, the frequency domain resource indication information may be an FRIV field, and the fourth value may be a reserved state of the FRIV field. Herein, for the reserved state of the FRIV field, refer to descriptions about a reserved state of an FRIV field in a method 600 or any implementation of the method 600 in FIG. 12.

In this implementation, the third value of the frequency domain resource indication information indicates the combination of resource indication information is a valid combination, and the fourth value of the resource indication information indicates that the combination of resource indication information is an invalid combination. Optionally, based on a same concept, different values of time domain resource indication information or resource reservation period information may indicate that the combination of resource indication information is a valid combination or an invalid combination. This is not limited.

For example, a third value of the time domain resource indication information indicates a time domain location of the assistant resource.

A fourth value of the time domain resource indication information indicates that the combination of resource indication information is an invalid combination, and the fourth value is a reserved state of the time domain resource indication information.

Optionally, the first quantity is equal to the second quantity, and the combination of resource indication information includes resource reservation period information.

A third value of the resource reservation period information indicates a reservation period of a periodically reserved resource.

A fourth value of the resource reservation period information indicates that the combination of resource indication information is an invalid combination, and the fourth value is a reserved state of the resource reservation period information.

Optionally, the invalid combination may be understood as that a resource indicated by the combination is not an assistant resource.

Alternatively, the third value of the frequency domain resource indication information indicates the frequency domain start location and the size of the assistant resource.

The first device indicates the quantity N of combinations of the resource indication information of the assistant resource to the second device, to indicate, to the second device, that the first device provides N groups of assistant resources. Further, the N groups of assistant resources may include a resource that the first device prefers or a resource that the first device does not prefer.

Optionally, the method 500 further includes step 540.

540: The first device sends second indication information to the second device.

That the second indication information indicates the assistant resource is one of the following three cases:

a preferred resource;
a non-preferred resource; or
a non-preferred resource and a preferred resource.

In other words, assistant resources indicated by the first device to the second device may be all preferred resources, all non-preferred resources, or some preferred resources and some non-preferred resources.

For example, 1 bit indicates a non-preferred resource or a preferred resource; or
2 bits or three statuses indicate a non-preferred resource, a preferred resource, or one of a non-preferred resource and a preferred resource.

The second indication information is indicated by the first-stage SCI or configuration signaling. In other words, 1 bit in the SCI-1 indicates a non-preferred resource or a preferred resource; or

2 bits or three statuses in the SCI-1 indicate a non-preferred resource, a preferred resource, or one of a non-preferred resource and a preferred resource.

The configuration signaling may be RRC signaling configured in the resource pool, or pre-configured signaling. In other words, the network device configures or pre-configures the assistant resources as either the non-preferred resource or the preferred resource or both of the non-preferred resource and the preferred resource.

It should be understood that both the non-preferred resource and the preferred resource belong to the assistant resources.

For example, when the second indication information indicates that the assistant resource is a preferred resource, the first quantity N indicated by the first indication information is a quantity of preferred resources. When the second indication information indicates that the assistant resource is a non-preferred resource, the first quantity N indicated by the first indication information is a quantity of non-preferred resources. When the second indication information indicates that the assistant resources are a preferred resource and a non-preferred resource, the first quantity N indicated by the first indication information includes a quantity of preferred resources and a quantity of non-preferred resources.

In this application, the non-preferred resource may further include two types: a first-type non-preferred resource and a second-type non-preferred resource. The first-type non-preferred resource is a resource that the first device does not prefer, and the second-type non-preferred resource is a slot in which reception is not expected. In other words, if a slot in which the non-preferred resource indicated by the second device is located is a slot in which the first device does not expect receiving, the not-preferred resource is the second-type non-preferred resource. Alternatively, the slot may be replaced with a resource. For example, the second-type non-preferred resource is a resource that the first device does not expect to receive.

In addition, alternatively, the first-type non-preferred resource is an interference-based resource, may specifically be determined based on a condition. For example, the resource that the first device does not prefer may be a resource determined based on a first condition. The first condition may be as follows: an RSRP measurement value corresponding to the resource is greater than a first threshold, or an RSRP measurement value corresponding to the resource is less than a second threshold (in this case, the first device is a receiving device of the second device). The second-type non-preferred resource is a non-preferred resource based on half duplex. In this case, the first device is a receiving device of the second device. If the first device does not expect to receive, by using a resource, transmission from the second device in a half-duplex operation mode, the resource is a second-type non-preferred resource.

When the non-preferred resource includes two types of non-preferred resources, and the first device indicates the non-preferred resource to the second device, the first device needs to indicate, to the second device, that the non-preferred resource is specifically a first-type non-preferred resource or a second-type non-preferred resource, and indicate the quantity of first-type non-preferred resources, and the quantity of second-type non-preferred resources.

For clarity of solution description, it is assumed that a maximum quantity of combinations of resource indication information of the assistant resource is L, and an actual quantity, indicated by the first device to the second device, of combinations of resource indication information of the assistant resource is N. In other words, the first quantity is N, the second quantity is L, N≤L, and both N and L are integers.

In this application, the first indication information indicates the first quantity N. There are a plurality of possible implementations, for example, (1) to (6) in the following. Details are described below.

In the following described implementations, it is assumed that the assistant information is carried by SCI-2 and a MAC CE, or by a MAC CE.

(1) The first indication information indicates the first quantity.

Optionally, in an implementation, the first quantity is the quantity N of combinations of resource indication information of the assistant resource, each of the N combinations indicates a group of assistant resources, and each group of assistant resources includes more than one assistant resource. Optionally, a group of assistant resources indicated by each of the N combinations may be preferred assistant resources or non-preferred assistant resources.

For example, the first indication information includes $\lceil \log_2 L \rceil$ bits, and the $\lceil \log_2 L \rceil$ bits indicate the first quantity, where L is a maximum quantity of combinations that can be indicated by the second terminal to the first terminal.

Optionally, when the assistant information is carried in the SCI-2 and the MAC CE, the first indication information may be SCI-1, and $\lceil \log_2 L \rceil$ bits in the SCI-1 indicate the first quantity. When the assistant resource is carried in the MAC CE, the first indication information may be the SCI-2 or the MAC CE, and the SCI-2 or the MAC CE indicates the first quantity.

Optionally, in this application, when a combination in the N combinations indicates a group of non-preferred resources, the non-preferred resources may be classified into two types: a first-type non-preferred resource and a second-type non-preferred resource. The first-type non-preferred resource is a resource that the first device does not prefer, and the second-type non-preferred resource is a resource that the second device does not expect to receive and that is transmitted by the first device.

In other words, the first-type non-preferred resource is a resource that is not preferred based on a resource interference degree, and the second-type non-preferred resource is a resource that is not preferred based on a half-duplex working mode of the first device.

(2) The first indication information indicates the first quantity, and third indication information indicates a third quantity. The first quantity is a quantity N of combinations of resource indication information of the non-preferred assistant resource (namely, non-preferred resources), the third quantity is a quantity P of first combinations or a quantity Q of second combinations, the first combination is a combination indicating first-type assistant resources, and the second combination is a combination indicating second-type assistant resources.

In addition, P groups of assistant resources indicated by the P first combinations and Q groups of assistant resources indicated by the Q second combinations are arranged in a pre-configured or configured sequence in time domain, where 0≤P≤N, 0≤Q≤N, and P and Q are integers.

In this implementation, the first device sends the first indication information to the second device. The first indication information indicates that an actual quantity of combinations is N, and each of the N combinations indicates a group of non-preferred assistant resources (namely, non-preferred resources). Optionally, the first device sends the third indication information to the second device, where the third indication information indicates the quantity P of first combinations or the quantity Q of second combinations. It may be understood that, because each combination indicates one group of assistant resources, if the third indication information indicates the quantity P of first combinations, the P second combinations indicate the P groups of assistant resources; or if the third indication information indicates the quantity Q of second combinations, the Q second combinations indicate the Q groups of assistant resources. In addition, because the assistant resources indicated by the first combination in the N combinations and the assistant resources indicated by the second combination are arranged in a pre-configured or configured sequence, the first terminal can accurately distinguish between quantities and locations of the first combination and the second quantity based on the first indication information, the third indication information, and the arrangement sequence of the assistant resources indicated by the first combination and the assistant resources indicated by the second combination in the N combinations.

The arrangement sequence of the assistant resources indicated by the first combination and the assistant resources indicated by the second combination may be understood as follows: The first combination is before the second combination; the second combination is before the first combination; the first combination is before the second combination; or the first combination is after the second combination.

For example, the first indication information indicates that the first quantity N is equal to 3, the third indication information indicates that the quantity P of first combinations is equal to 2, and the first combination in the N combinations is pre-configured or configured to be located before the second combination. In this case, the second device may learn, based on the first indication information, the third indication information, and the arrangement sequence of the first combination and the second combination, that the first device actually indicates three combinations: two first combinations and one second combination. In addition, the two first combinations are first two combinations in the three combinations, and the second combination is located after the two first combinations.

Because N indicated by the first indication information is an actual quantity of combinations indicated by the first device to the second device, if the maximum quantity of combinations is L, a value range of N is [0, L] or [1, L]. When the value range of N is [0, L] and N=0, it indicates that the first device does not indicate an assistant resource to the second device. When N=L, it indicates that the first device indicates L groups of assistant resources to the second device, and all the L groups of assistant resources are non-preferred assistant resources (non-preferred resources).

For example, in an implementation, the first indication information is included in the SCI-1, the first indication information indicates the actual quantity N of combinations, and 1 bit of the SCI-1 additionally indicates whether there is a scheduled assistant resource. In other words, the SCI-1 includes two fields. One field indicates the actual quantity N (which is denoted as a third field) of combinations, and the other field is the 1 bit indicating whether there is an assistant resource. In this implementation, when the 1 bit of the SCI-1 indicates that an assistant resource is scheduled by the SCI-1, the third field of the SCI-1 indicates the actual quantity of combinations, and a value range of the actual quantity of combinations is [1, L]. When the 1 bit of the SCI-1 indicates that there is no assistant resource scheduled by the SCI-1, a first portion of the SCI-1 may be default, or the first terminal considers the first portion as an invalid value. In this implementation, the first indication information needs to occupy $\lceil \log_2 L \rceil$ bits of the SCI-1.

For another example, in another implementation, the first indication information is the SCI-1, the SCI-1 indicates the actual quantity N of combinations, and the actual quantity N is 0 to implicitly indicate that the first device does not indicate an assistant resource to the second device. In this implementation, the value range of the actual quantity N of combinations indicated by the SCI-1 is [0, *L*]. In this implementation, the first indication information needs to occupy $\lceil \log_2(L+1) \rceil$ bits of the SCI-1.

In addition, the third indication information indicates the quantity P of first combinations, a value range of P is [0, *L*], and a quantity of bits that need to be occupied is $\lceil \log_2(L+1) \rceil$. P=0 indicates that the quantity of first combinations in the N combinations is 0, that is, no first-type non-preferred resource exists in the non-preferred resources indicated by the first device to the second device. P=*L* indicates that the quantity of first combinations is *L*, that is, all non-preferred resources indicated by the first device to the second device are first-type non-preferred resources, and N=*L*.

The foregoing is described by using an example in which the third indication information indicates the quantity P of first combinations. This is also similar to a case in which the third indication information indicates the quantity Q of second combinations. The following provides simple descriptions.

For example, in an implementation, the first indication information and the third indication information are included in the SCI-1, the first indication information indicates the actual quantity N of combinations, the value range of N is [0, *L*], and the first indication information needs to occupy $\lceil \log_2 L \rceil$ bits of the SCI-1. In addition, the third indication information indicates the quantity Q of second combinations, a value range of Q is [0, Z], and a quantity of bits that need to be occupied is $\lceil \log_2(L+1) \rceil$.

In this implementation in which the first indication information indicates the actual quantity N of combinations, and the third indication information indicates the quantity P of the first combinations or the quantity Q of the second combinations, when both the quantity N indicated by the first indication information and the quantity P or the quantity Q indicated by the third indication information are 0, it indicates that content scheduled by the SCI-1 does not include an assistant resource.

Optionally, the foregoing signaling form of the first indication information is also applicable to the third indication information. For example, the third indication information may be reserved information in the SCI-1; the third indication information may be MCS indication information and/or MCS table indication information in the SCI-1; the third indication information is some bits or some statuses of MCS indication information in the SCI-1, and/or some bits or some statuses of MCS table indication information in the first-stage SCI; or the third indication information is included in the SCI-1, but the first-stage SCI-1 does not include MCS indication information and/or MCS table indication information. Further, optionally, a format of the SCI-1 may be an SCI format 1-A or another SCI format. This is not limited.

(3) The first indication information indicates the first quantity. Specifically, the first indication information indicates a quantity P of first combinations and a quantity Q of second combinations, and P + Q = N, where the first combination is a combination indicating first-type assistant resources, the second combination is a combination indicating second-type assistant resources, and P and Q are integers.

For example, the first indication information is included in the SCI-1, and $\lceil \log_2(\frac{(L+1)(L+2)}{2}) \rceil$ bits of the SCI-1 indicate quantities (namely, P and Q) of two types of non-preferred resources, where the quantities include a state of no assistant resource. Specifically, when both the quantity P and the quantity Q are 0, it indicates that there is no assistant resource, or the first device does not indicate a non-preferred assistant resource to the second device.

It may be understood that P and Q also meet P+Q≤L.

The following uses Table 2 as an example to describe this implementation. In the example in Table 2, *L*=3.

**Table 2**

| N | P | Q |
|---|---|---|
| 3 | 0 | 3 |
| 3 | 1 | 2 |
| 3 | 2 | 1 |
| 3 | 3 | 0 |
| 2 | 0 | 2 |
| 2 | 1 | 1 |

(continued)

| N | P | Q |
|---|---|---|
| 2 | 2 | 0 |
| 1 | 0 | 1 |
| 1 | 1 | 0 |
| 0 | 0 | 0 |

(4) The first indication information indicates the first quantity, and fourth indication information indicates types of N groups of assistant resources indicated by the N combinations. The types of the N groups of assistant resources are one of a preferred resource, a first-type non-preferred resource, and a second-type non-preferred resource, or the types of the N groups of assistant resources are one of a first-type non-preferred resource and a second-type non-preferred resource. The first-type non-preferred resource is a resource that the second terminal does not prefer, and the second-type non-preferred resource is a slot in which the second device does not expect receiving (the non-preferred resource is a resource that the second device does not expect to receive).

In other words, in this implementation, when indicating the assistant resource to the first terminal, the second terminal indicates only one of the preferred resource, the first-type non-preferred resource, and the second-type non-preferred resource each time. In other words, the second terminal distinguishes the three types of assistant resources based on the first indication information.

For example, the fourth indication information is included in the SCI-1, the fourth indication information is 2 bits, and the 2 bits may indicate three types in total: a preferred resource, a first-type non-preferred resource, and a second-type non-preferred resource, as shown in an example in Table 3.

**Table 3**

| Status indicated by fourth indication information (2 bits) | 00 | 10 | 01 | 11 |
|---|---|---|---|---|
| | First-type non-preferred resource (non-half-duplex non-preferred resource) | Second-type non-preferred resource (half-duplex non-preferred resource) | Preferred resource | Reserved (reserved) |

For example, the fourth indication information is included in the SCI-1, the fourth indication information is 1 bit, and the 1 bit may indicate the first-type non-preferred resource and the second-type non-preferred resource.

Optionally, the foregoing signaling form of the first indication information is also applicable to the fourth indication information. For example, the fourth indication information may be reserved information in the SCI-1; the fourth indication information may be MCS indication information and/or MCS table indication information in the SCI-1; the fourth indication information is some bits or some statuses of MCS indication information in the SCI-1, and/or some bits or some statuses of MCS table indication information in the SCI-1; or the fourth indication information is included in the SCI-1, but the first-stage SCI-1 does not include MCS indication information and/or MCS table indication information. Further, optionally, a format of the SCI-1 may be an SCI format 1-A or another SCI format. This is not limited.

(5) The first indication information indicates the first quantity, the first quantity is the actual quantity N of combinations, and fifth indication information includes $L$ bits. The $L$ bits include N bits, the N bits one-to-one correspond to the N combinations, the N combinations are combinations indicating non-preferred resources, and each of the N bits indicates that an assistant resource indicated by a combination corresponding to the bit is a first-type non-preferred resource or a second-type non-preferred resource.

It should be understood that, in this implementation, a maximum quantity of combinations indicated by the first device to the second device is $L$, an actual quantity of combinations indicated by the first device to the second device is N, and all N groups of assistant resources indicated by the N combinations are non-preferred resources. The non-preferred resource may be a first-type non-preferred resource or a second-type non-preferred resource.

For example, the SCI-1 includes the first indication information, the first indication information is $\lceil \log_2 L \rceil$ bits, the first indication information indicates the actual quantity N of combinations, the value range of N is $[0, L]$.

In addition, the SCI-1 includes the fifth indication information, and the fifth indication information indicates, in a bitmap (bitmap) manner, that the non-preferred resources indicated by the N combinations are first-type non-preferred resources or second-type non-preferred resources.

The following describes this implementation by using an example.

For example, $L$=3, and N=2, that is, the maximum quantity of combinations is 3. The actual quantity of combinations indicated by the first device to the second device is 2, and all assistant resources indicated by the N combinations (namely, two combinations) indicated by the first device to the second device are non-preferred resources. In this implementation, the first indication information includes 2 bits (namely, $\lceil \log_2 L \rceil = \lceil \log_2 3 \rceil$), and the 2 bits indicate the actual quantity N of combinations. For example, when a status of the 2 bits of the first indication information is 10, it indicates that the actual quantity of combinations is 2, and the fifth indication information includes 3 bits (that is, corresponding to $L$ combinations). It is assumed that the 3 bits are denoted as $b_2 b_1 b_0$, and N bits starting from the least significant bit (the least significant bit, LSB) (or N bits starting from the most significant bit (the most significant bit, MSB)) correspond to types of non-preferred resources indicated by the N combinations. For example, 1 indicates a first-type non-preferred resource, and 0 indicates a second-type non-preferred assistant resource. In this case, the fifth indication information 101 indicates that a 1st combination in the two combinations indicated by the first indication information is a first-type non-preferred resource, and a 2nd combination in the two combinations is a second-type non-preferred resource. In conclusion, the first indication information 10 and the fifth indication information 101 jointly indicate the actual quantity N (N=2) of combinations and the type of non-preferred resource indicated by each of the N combinations. According to a same indication principle, for another example, the first indication information 11 and the fifth indication information 110 jointly indicate the actual quantity N (N=3) of combinations, and that non-preferred resources indicated by the three combinations are sequentially a second-type non-preferred resource, a first-type non-preferred resource, and a first-type non-preferred resource.

In this implementation, that the fifth indication information includes the $L$ bits is merely used as an example. For another example, the fifth indication information includes N bits, the N bits one-to-one correspond to the N combinations, and each of the N bits indicates a type of non-preferred resource indicated by a combination corresponding to the bit. In this example, because the actual quantity of combinations indicated by the first device to the second device is variable, a quantity of bits included in the fifth indication information (or a length of the fifth indication information) is variable.

Optionally, the foregoing signaling form of the first indication information is also applicable to the fifth indication information. For example, the fifth indication information may be reserved information in the SCI-1; the fifth indication information may be MCS indication information and/or MCS table indication information in the SCI-1; the fifth indication information is some bits or some statuses of MCS indication information in the SCI-1, and/or some bits or some statuses of MCS table indication information in the SCI-1; or the fifth indication information is included in the SCI-1, but the first-stage SCI-1 does not include MCS indication information and/or MCS table indication information. Further, optionally, a format of the SCI-1 may be an SCI format 1-A or another SCI format. This is not limited.

(6) The first indication information is included in the SCI-1, and some fields of the SCI-1 indicate a quantity of third combinations in the N combinations and/or a type of assistant resource indicated by the third combination, where the third combination is a combination that is in the N combinations and that indicates a non-preferred resource.

It should be specially noted that the third combination is a combination that is in the N combinations and that indicates a non-preferred resource. It can be learned from the foregoing descriptions of the first combination and the second combination that one third combination may be one first combination or one second combination. Therefore, when the N combinations include a plurality of third combinations, some of the plurality of third combinations may be first combinations, and other third combinations may be second combinations.

In an implementation, the assistant information is scheduled by the SCI-1, the assistant information and data that are scheduled by the SCI-1 are not multiplexed, and a first field of the SCI-1, some bits of a first field, or some statuses of a first field indicate the quantity of third combinations and/or the type of non-preferred resource indicated by the third combination, where the third combination is a combination that is in the N combinations and that indicates a non-preferred resource.

In this implementation, the assistant information is scheduled by the SCI-1, and the assistant information and the data are not multiplexed. In this case, fields that are of the SCI-1 and that are related to data decoding are no longer required, and at least one of the fields may indicate the quantity of third combinations and/or the type of non-preferred resource indicated by the third combination.

For example, a first field of the SCI-1 may be one of the following:

an MCS indication field;
an MCS table indication field; and
a resource reservation period field.

The MCS indication field is *modulation and coding scheme* in Table 4, the MCS table indication field is *additional MCS table indicator* in Table 1, and the resource reservation period field is *resource reservation period* in Table 4. In addition, the reserved field of the first-stage SCI mentioned in some embodiments of this application may also be one of *DMRSpattern, 2nd-stage SCI format, beta offset indicator, number of DMRS port, PSFCH overhead indication,* or *reserved* in Table 4. This is not limited. Correspondingly, the reserved information in the first-stage SCI may be a reserved state (or an unused state) in these fields.

**Table 4**

| Fields that may be included in SCI-1 | Quantity of bits (bits) corresponding to the field |
|---|---|
| Priority | 3 |
| Frequency resource assignment value (namely, FRIV) | 0 to 13 |
| Time resource assignment value (namely, TRIV) | 5 to 9 |
| *Resource reservation period* | 0 to 4 |
| *DMRS pattern* | 1 and 2 |
| *2nd-stage SCI format* | 2 |
| *Beta offset indicator* | 2 |
| *Number of DMRS port* | 1 |
| *Modulation and coding scheme* | 5 |
| *Additional MCS table indicator* | 0, 1, and 2 |
| *PSFCH overhead indication* | 0 and 1 |
| *Reserved* | 2, 3, and 4 |
| Sum | 19 |

In another implementation, the reserved bit of the SCI-1 indicates the quantity of third combinations in the N combinations and/or the type of non-preferred resource indicated by the third combination.

Optionally, the implementation (1) to the implementation (5) may be used in combination with the implementation (6). For example, the indication information or field indicating the quantity or the type in the implementation (1) to the implementation (5) may be the first field in the implementation (6).

In addition, in the implementation (1) to the implementation (6), it is assumed that the assistant information is carried by the SCI-2 and the MAC CE. If the assistant information is carried in the MAC CE, the actual quantity of combinations may also be indicated by the SCI-2 or the MAC CE. For example, if the SCI-2 indicates the actual quantity of combinations, the second device may determine, based on the actual quantity of combinations indicated by the SCI-2, the quantity of combinations carried in the MAC CE. For another example, the MAC CE indicates the actual quantity of combinations. In this case, the second device may learn, from the MAC CE, of the actual quantity of combinations indicated by the first device, and obtain the assistant information from the MAC CE, where a length of the MAC CE is variable.

For example, the actual quantity of combinations may be indicated by a bit of the MAC CE.

For example, the actual quantity of combinations may be indicated by the MAC subheader of the MAC CE.

For example, the actual quantity of combinations may be indicated by the MAC header of the MAC CE.

For example, the actual quantity of combinations may be indicated by a MAC PDU of the MAC CE.

Optionally, the foregoing example methods may be used in combination.

The foregoing describes in detail the plurality of possible implementations in which the first indication information indicates the first quantity in this application.

When the N combinations indicated by the first device to the second device include a combination of non-preferred resources, the first device needs to indicate the type of non-preferred resource to the second device. Specifically, the type of non-preferred resource includes the first-type non-preferred resource and the second-type non-preferred resource. In this way, both the quantity of non-preferred resources and the type of non-preferred resource are indicated. The second device may fully schedule and utilize the non-preferred resources based on features of the two types of non-preferred resources, for example, not using the second-type non-preferred resource, using a portion of the first-type non-preferred resource when resources are insufficient, or using a portion of the first-type non-preferred resource with a low interference degree when resources are insufficient, to improve transmission reliability of the second device.

In the implementation (1) to the implementation (6) in which the first indication information indicates the first quantity, some implementations relate to both the indication of the quantity of combinations and the indication of the type of non-preferred resource. The following further provides some implementations in which the first device indicates the type of non-preferred resource to the second device, for example, the following manner 1 to manner 3.

Manner 1

FIG. 12 is a schematic flowchart of an information sending method according to this application.

610: A first device determines frequency domain resource indication information.

The frequency domain resource indication information indicates a frequency domain start location and a size of an assistant resource, a first value of the frequency domain resource indication information is used to determine that the assistant resource is a resource that the first device does not prefer, and a second value of the frequency domain resource is used to determine that a slot in which the assistant resource is located is a slot in which the first device does not expect receiving.

The frequency domain start location of the assistant resource may be understood as a frequency domain start location of the assistant resource in a resource pool. For example, a frequency domain offset value between a subchannel, used as a start point, with a smallest frequency domain index in the resource pool and a subchannel with a smallest frequency domain index in subchannels included in the assistant resource is obtained.

Alternatively, the size of the assistant resource herein may be a frequency domain length or a frequency domain size of the assistant resource. For example, the frequency domain size is a frequency domain offset value between a subchannel with a largest frequency domain index and a subchannel with a smallest frequency domain index in the subchannels included in the assistant resource.

In addition, it can be learned from the foregoing descriptions of the assistant resource that the assistant resource is used for resource selection of the first device. In other words, a second device refers to or considers the assistant resource during resource selection. Alternatively, it may be understood that the assistant resource is a reference resource used by the second device during resource selection. In other words, the first device may use the assistant resource, or may not use the assistant resource. For example, the assistant resource is a non-preferred resource or a preferred resource. The non-preferred resource is a resource that the first device does not prefer the second device to use in a resource selection process for transmission. The preferred resource is a resource that the first device prefers the second device to use in a resource selection process for transmission. In the resource selection process for transmission of the second device, the second device may use the non-preferred resource or the preferred resource provided by the first device. When the assistant resource is the non-preferred resource, the second device excludes a resource that overlaps the non-preferred resource in the resource selection process for transmission of the second device. When the assistant resource is the preferred resource, the second device uses a resource that is a preferred resource and that is a resource determined based on a sensing result of the second device in the resource selection process for transmission of the second device.

In this implementation, the first value of the frequency domain resource indication information is used to determine that the assistant resource is a resource that the first device does not prefer. The resource that the first device does not prefer may be a resource whose corresponding RSRP measurement value is greater than a first threshold, for example, a resource whose RSRP measurement value measured by the first device based on a PSCCH DMRS or PSSCH DMRS is greater than a configured threshold. The PSCCH DMRS is a DMRS of a PSCCH in which SCI of the resource is located, and the PSSCH DMRS is a DMRS of a PSSCH scheduled by the SCI of the resource. The configured threshold may be configured by a network device, or may be pre-configured.

Optionally, the resource that the first device does not prefer may be a resource whose corresponding RSRP measurement value is less than another configured threshold (for example, a second threshold).

In addition, the resource that the first device does not prefer may alternatively be understood as a resource determined by the first device based on a resource interference degree, and may specifically be determined based on a condition. For example, the resource that the first device does not prefer may be a resource determined based on a first condition. The first condition may be as follows: an RSRP measurement value corresponding to the resource is greater than the first threshold. For example, the first device detects that an RSRP measurement value corresponding to a reserved resource indicated by SCI of another device is greater than the first threshold. The first threshold is determined based on a priority used by the first device to select an assistant resource and a priority indicated by the SCI of the another device. The RSRP measurement value corresponding to the reserved resource indicated by the SCI of the another device is measured based on a DMRS of a PSCCH in which the SCI of the another device is located, or a DMRS of a PSSCH scheduled by the SCI of the another device. The first threshold may be configured by a network device, or may be pre-configured.

Optionally, the first threshold may be as follows: an RSRP measurement value corresponding to the resource is less than a second threshold. For example, the first device detects that an RSRP measurement value corresponding to a reserved resource indicated by SCI of another device is less than the second threshold. The second threshold is determined based on a priority used by the first device to select an assistant resource and a priority indicated by the SCI of the another device. In addition, the first device is a receiving device of the second device and/or another device (the first device is a receiving device of a transport block TB sent by the second device and/or the another device).

In addition, it can be learned, based on the descriptions about the two types of non-preferred resources, that the first value of the frequency domain resource indication information is used to determine that the assistant resource is a first-type non-preferred resource.

Further, the second value of the frequency domain resource indication information is used to determine that the assistant resource is a second-type non-preferred resource. The second-type non-preferred resource may be understood as a slot in which the first device does not expect receiving (a resource that the first device does not expect to receive) when the first device is a receiving device of the second device. The second-type non-preferred resource is a non-preferred resource due to a half-duplex limitation of a device. The device has a half-duplex limitation, that is, only receiving or only sending is supported at the same time, and receiving and sending cannot be performed simultaneously. Therefore, in a slot in which the first device expects sending (a resource that the first device expects to send), the first device does not expect receiving, and the resource is a second-type non-preferred resource.

Optionally, the second value of the frequency domain resource indication information may be a reserved state of the frequency domain resource indication information.

Alternatively, the reserved state is a reserved code point. The reserved state is a state that does not indicate the frequency domain start location and the frequency domain size of the assistant resource. For example, when the frequency domain resource indication information indicates the frequency domain start location and the frequency domain length of the resource, there is a state that does not indicate the frequency domain start location and the frequency domain length of the resource, and the unused state is referred to as a reserved state.

For example, the frequency domain resource indication information may be an FRIV field. The reserved state of the FRIV field may be understood as follows: The FRIV field is 9 bits, and may indicate 512 statuses. However, if a quantity of statuses indicating the frequency domain start location and the length is less than 512, a remaining state is the reserved state, and may be used for another purpose.

A value of the FRIV field may be obtained according to the following formula (a):

$$FRIV = n_{subCH,1}^{start} + \sum_{i=1}^{L_{subCH}-1}(N_{subCH}^{SL}+1-i) \quad (a)$$

$N_{subCH}^{SL}$ is a quantity of subchannels included in the resource pool, and may be configured or pre-configured by the base station, $L_{subCH}$ is a frequency domain length of an indicated resource, $n_{subCH,1}^{start}$ is a start location of a 2nd assistant resource, and $i$ is a positive integer.

Alternatively, the value of the FRIV field may be obtained according to the following formula (b):

$$FRIV = n_{subCH,1}^{start} + n_{subCH,2}^{start} \cdot (N_{subCH}^{SL}+1-L_{subCH}) + \sum_{i=1}^{L_{subCH}-1}(N_{subCH}^{SL}+1-i)^2 \quad (b)$$

$N_{subCH}^{SL}$ is the quantity of subchannels included in the resource pool, $L_{subCH}$ is a size of the indicated assistant resource, $n_{subCH,1}^{start}$ is a start location of a 1st assistant resource, $n_{subCH,2}^{start}$ is a start location of a 2nd assistant resource, and $i$ is a positive integer.

Alternatively, the value of the FRIV field may be obtained according to the following formula (c):

$$FRIV = n_{subCH,1}^{start} + n_{subCH,2}^{start} \cdot (N_{subCH}^{SL}+1-L_{subCH}) + \sum_{i=1}^{L_{subCH}-1}(N_{subCH}^{SL}+1-i)^2 \quad (c)$$

$N_{subCH}^{SL}$ is the quantity of subchannels included in the resource pool, and may be configured or pre-configured by the base station, $L_{subCH}$ is the size of the indicated assistant resource, $n_{subCH,1}^{start}$ is the start location of the 2nd assistant resource, $n_{subCH,2}^{start}$ is a start location of a 3rd assistant resource, and *i* is a positive integer.

Alternatively, the value of the FRIV field may be obtained according to the following formula (d):

$$FRIV = n_{subCH,1}^{start} + n_{subCH,2}^{start} \cdot (N_{subCH}^{SL} + 1 - L_{subCH}) + n_{subCH,3}^{start} \cdot (N_{subCH}^{SL} + 1 - L_{subCH})^2 + \sum_{i=1}^{L_{subCH}-1} (N_{subCH}^{SL} + 1 - i)^3$$

(d)

$N_{subCH}$ is the quantity of subchannels included in the resource pool, $L_{subCH}$ is the size of the indicated assistant resource, $n_{subCH,1}^{start}$ is the start location of the 1st assistant resource, $n_{subCH,2}^{start}$ is the start location of the 2nd assistant resource, $n_{subCH,3}^{start}$ is the start location of the 3rd assistant resource, and *i* is a positive integer.

Alternatively, the value of the FRIV field may be obtained according to the following formula (e):

$$FRIV = n_{subCH,0}^{start} + n_{subCH,1}^{start} \cdot (N_{subCH} + 1 - L_{subCH}) \quad (e)$$

$N_{subCH}$ is the quantity of subchannels included in the resource pool, $L_{subCH}$ is the size of the indicated assistant resource, $n_{subCH,0}^{start}$ is the start location of the 1st assistant resource, and $n_{subCH,1}^{start}$ is the start location of the 2nd assistant resource.

Alternatively, the value of the FRIV field may be obtained according to the following formula (f):

$$FRIV = n_{subCH,0}^{start} + n_{subCH,1}^{start} \cdot (N_{subCH} + 1 - L_{subCH}) + n_{subCH,2}^{start} \cdot (N_{subCH} - L_{subCH} + 1)^2 \quad (f)$$

$N_{subCH}$ is the quantity of subchannels included in the resource pool, $L_{subCH}$ is the size of the indicated assistant resource, $n_{subCH,0}^{start}$ is the start location of the 1st assistant resource, $n_{subCH,1}^{start}$ is the start location of the 2nd assistant resource, and $n_{subCH,2}^{start}$ is the start location of the 3rd assistant resource.

Optionally, when the frequency domain resource indication information indicates a frequency domain start location of one resource and a frequency domain length of two resources, a range of the first value and a range of the second value of the frequency domain resource indication information may be as follows:

the range of the first value of the frequency domain resource indication information is

$$\left[0, \frac{N_{subCH} \cdot (N_{subCH} + 1)}{2} - 1\right],$$

where $N_{subCH}$ is the quantity of subchannels included in the resource pool; and
the range of the second value of the frequency domain resource indication information is

$$\left[\frac{N_{subCH} \cdot (N_{subCH}+1)}{2}, 2^{\left\lceil \log_2\left(\frac{N_{subCH} \cdot (N_{subCH}+1)}{2}\right)\right\rceil}-1\right]$$

, where $N_{subCH}$ is the quantity of subchannels included in the resource pool.

Alternatively, optionally, the range of the first value of the frequency domain resource indication information is:

$$\left[\frac{N_{subCH} \cdot (N_{subCH}+1)}{2}, 2^{\left\lceil \log_2\left(\frac{N_{subCH} \cdot (N_{subCH}+1)}{2}\right)\right\rceil}-1\right],$$

where $N_{subCH}$ is the quantity of subchannels included in the resource pool; and
the range of the second value of the frequency domain resource indication information is:

$$\left[0, \frac{N_{subCH} \cdot (N_{subCH}+1)}{2}-1\right],$$

where $N_{subCH}$ is the quantity of subchannels included in the resource pool.
Optionally, when the frequency domain resource indication information indicates frequency domain start locations of two resources and a frequency domain length of three resources, a range of the first value and a range of the second value of the frequency domain resource indication information may be as follows:

the range of the first value of the frequency domain resource indication information is

$$[0, \frac{N_{subCH} \cdot (N_{subCH}+1) \cdot (2 \cdot N_{subCH}+1)}{6}-1],$$

where $N_{subCH}$ is the quantity of subchannels included in the resource pool; and
the range of the second value of the frequency domain resource indication information is:

$$[\frac{N_{subCH} \cdot (N_{subCH}+1) \cdot (2 \cdot N_{subCH}+1)}{6}, 2^{\left\lceil \log_2\left(\frac{N_{subCH} \cdot (N_{subCH}+1) \cdot (2 \cdot N_{subCH}+1)}{6}\right)\right\rceil}-1],$$

where $N_{subCH}$ is the quantity of subchannels included in the resource pool.

Alternatively, the range of the second value of the frequency domain resource indication information is
$[0, \frac{N_{subCH} \cdot (N_{subCH}+1) \cdot (2 \cdot N_{subCH}+1)}{6}-1]$ ,where $N_{subCH}$ is the quantity of subchannels included in the resource pool;
and
the range of the first value of the frequency domain resource indication information is:

$$[\frac{N_{subCH} \cdot (N_{subCH}+1) \cdot (2 \cdot N_{subCH}+1)}{6}, 2^{\left\lceil \log_2\left(\frac{N_{subCH} \cdot (N_{subCH}+1) \cdot (2 \cdot N_{subCH}+1)}{6}\right)\right\rceil}-1],$$

where $N_{subCH}$ is the quantity of subchannels included in the resource pool.
620: The first device sends the frequency domain resource indication information to the second device.
Correspondingly, the second device receives the frequency domain resource indication information from the first device.
630: The second device determines a type of the assistant resource (specifically, a non-preferred resource) based on the frequency domain resource indication information.
Herein, the type of the assistant resource means two types of resources that the first device does not prefer.

The second device determines that the assistant resource is a first-type non-preferred resource or a second-type non-preferred resource.

Optionally, that the first device sends the frequency domain resource indication information may specifically be that the first device sends assistant information, where the assistant information includes the frequency domain resource indication information.

In addition, the assistant information may further include other information of the assistant resource, for example, time domain resource indication information of the assistant resource. For example, the time domain resource indication information indicates a time domain location of the assistant resource. Optionally, the time domain resource indication information may be a TRIV field. In addition, optionally, the assistant information may further include a resource reservation period. This is not limited.

The first device sends the assistant information to the second device, where the assistant information includes N combinations of resource indication information of the assistant resource. Each of the N combinations includes frequency domain resource indication information. A combination a in the N combinations is used as an example. If frequency domain resource indication information included in the combination a is the first value, it indicates that an assistant resource indicated by the combination a is an assistant resource (namely, a first-type non-preferred resource) that the first device does not prefer. If frequency domain resource indication information included in the combination a is the second value, it indicates that a slot in which an assistant resource indicated by the combination a is located is a slot (namely, a second-type non-preferred resource) in which the first device does not expect receiving. In other words, the first device does not expect to receive transmission from the second device on the second-type non-preferred resource, and the second-type non-preferred resource is a slot (all frequency domain resources corresponding to the slot).

Optionally, there may be one or more first values of the frequency domain resource indication information. When a plurality of first values are configured for the frequency domain resource indication information, any first value may be used to determine that the assistant resource is a resource that the first device does not prefer.

Similarly, there may be one or more second values of the frequency domain resource indication information. When a plurality of second values are configured for the frequency domain resource indication information, any second value may indicate that the slot in which the assistant resource is located is a slot in which the first device does not expect receiving (the assistant resource is a resource that the first device, as a receiving device of the second device, does not expect to receive).

Alternatively, the frequency domain resource indication information may be an FRIV field, and a status of the FRIV field may also be referred to as a code point of the FRIV The first value and the second value are different statuses of the FRIV field. Optionally, the second value is a reserved state of the FRIV field. It should be understood that the status of the FRIV field herein may be determined according to the formula (a) to the formula (d) (specifically, when $N_{max}=2$, the formula (a) or the formula (b) may be selected; and when $N_{max}=3$, the formula (c) or the formula (d) may be selected). In addition, for the range of the first value and the range of the second value, refer to the descriptions in step 610. Details are not described again.

In addition, the formula (a) to the formula (d) sequentially correspond to the formula (1) to the formula (4).

Table 5 and Table 6 separately show a quantity of statuses (or a quantity of code points) of the FRIV field, a field length of the FRIV field, and the like when $N_{max}=2$ or 3 in various quantities of subchannels in the resource pool.

**Table 5 ($N_{max}$=2)**

| Quantity of subchannels | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Quantity of code points | 1 | 3 | 6 | 10 | 15 | 21 | 28 | 36 | 45 | 55 | 56 | 78 | 91 | 105 |
| Field length | 0 | 2 | 3 | 4 | 4 | 21 | 5 | 6 | 6 | 6 | 7 | 7 | 7 | 7 |
| Quantity of statuses indicated by a field | 1 | 4 | 8 | 16 | 16 | 5 | 32 | 64 | 64 | 64 | 128 | 128 | 128 | 128 |
| Quantity of reserved states | 0 | 1 | 2 | 6 | 1 | 32 | 4 | 28 | 19 | 9 | 62 | 50 | 37 | 23 |
| Quantity of subchannels | 15 | 16 | 17 | 18 | 19 | 20 | 21 | 22 | 23 | 24 | 25 | 26 | 27 | |
| Quantity of code points | 120 | 136 | 153 | 171 | 190 | 210 | 231 | 253 | 276 | 300 | 325 | 351 | 378 | |
| Field length | 7 | 8 | 8 | 8 | 8 | 8 | 8 | 8 | 9 | 9 | 9 | 9 | 9 | |
| Quantity of statuses indicated by a field | 128 | 256 | 256 | 256 | 256 | 256 | 256 | 256 | 512 | 512 | 512 | 512 | 512 | |
| Quantity of reserved states | 8 | 120 | 103 | 85 | 66 | 46 | 25 | 3 | 236 | 212 | 187 | 161 | 134 | |

Table 6 ($N_{max}=3$)

| Quantity of subchannels | 1 | 2 | 3 | 4 | 5 | 6 | 7 | 8 | 9 | 10 |
|---|---|---|---|---|---|---|---|---|---|---|
| Quantity of code points | 1 | 5 | 14 | 30 | 55 | 91 | 140 | 204 | 285 | 385 |
| Field length | 0 | 3 | 4 | 5 | 6 | 7 | 8 | 8 | 9 | 9 |
| Quantity of statuses indicated by a field | 1 | 8 | 16 | 32 | 64 | 128 | 256 | 256 | 512 | 512 |
| Quantity of reserved states | 0 | 3 | 2 | 2 | 9 | 37 | 116 | 116 | 227 | 127 |
| Quantity of subchannels | 11 | 12 | 13 | 14 | 15 | 16 | 17 | 18 | 19 | 20 |
| Quantity of code points | 506 | 650 | 819 | 1015 | 1240 | 1496 | 1785 | 2109 | 2470 | 2470 |
| Field length | 9 | 10 | 10 | 10 | 11 | 11 | 11 | 12 | 12 | 12 |
| Quantity of statuses indicated by a field | 512 | 1024 | 1024 | 1024 | 2048 | 2048 | 2048 | 4096 | 4096 | 4096 |
| Quantity of reserved states | 6 | 374 | 205 | 9 | 808 | 552 | 263 | 1987 | 1626 | 1226 |
| Quantity of subchannels | 21 | 22 | 23 | 24 | 25 | 26 | 27 | | | |
| Quantity of code points | 3311 | 3795 | 4324 | 4900 | 5525 | 6201 | 6930 | | | |
| Field length | 12 | 12 | 13 | 13 | 13 | 13 | 13 | | | |
| Quantity of statuses indicated by a field | 4096 | 4096 | 8192 | 8192 | 8192 | 8192 | 8192 | | | |
| Quantity of reserved states | 785 | 301 | 3868 | 3292 | 2667 | 1991 | 1262 | | | |

It should be noted that, in Table 5 or Table 6, when there is only one subchannel in the resource pool, the assistant resource is an entire slot. In this case, types of non-preferred resources do not need to be distinguished.

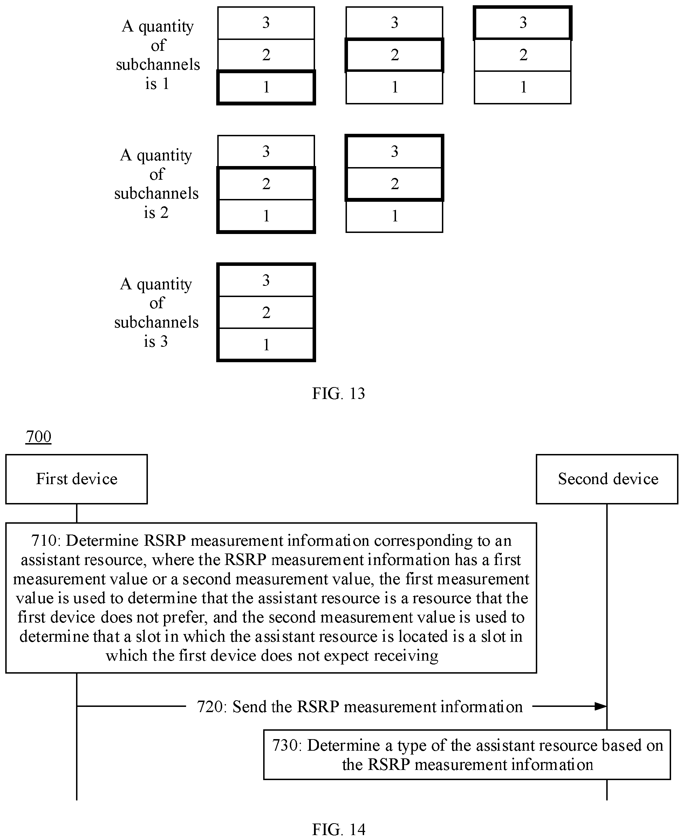

FIG. 13 shows candidate resource locations when values of *L* are different. For example, when *L*=2 and the quantity of subchannels in the resource pool is 3, there are six possible statuses of the FRIV field. If the FRIV field is 3 bits, the FRIV field may indicate eight statuses. Therefore, the eight statuses indicated by the FRIV field include two reserved states. The two reserved states are the second value of the FRIV field, and six statuses other than the two reserved states in the eight statuses are the first value of the FRIV field.

In this implementation, actually, a special status (or a special code point) of the FRIV field indicates the type of non-preferred resource. In this specification, the special status of the FRIV field is an unused status in all statuses of the FRIV field, and may also be referred to as a reserved state. The first device may provide more information for the second device (an assisted device) by distinguishing two types of non-preferred resources, so that the second device may perform different processing on the two different types of non-preferred resources. For example, when resources to be used by the second device are insufficient, the second device may use a portion of a first-type non-preferred resource in the two types of non-preferred resources. A reason lies in that the first-type non-preferred resource is determined by the first device based on an interference degree. When the second device uses this portion of resource, an amplitude of transmission reliability improvement is reduced, but transmission reliability is still improved. A second-type non-preferred resource is a resource that the first device, serving as a receiving device of the second device, does not expect the second device to use. When the second device uses the resource of this type, the first device cannot perform receiving due to a half-duplex limitation, and transmission fails. Therefore, the two types of non-preferred resources are distinguished, to enable the second device to use the two types of non-preferred resources to a maximum extent, and improve transmission reliability of the second device.

As described above, in the method 600 or any implementation of the method 600, the first value and the second value of the frequency domain resource indication respectively indicate two types of non-preferred assistant resources. Specifically, the reserved state (corresponding to the second value) of the frequency domain resource indication information (for example, the FRIV field) may indicate that the assistant resource is a second-type non-preferred resource. Optionally, based on a design concept of the method 600, time domain resource indication information or resource reservation period information may indicate two types of non-preferred assistant resources.

For example, the frequency domain resource indication information in the method 600 or any implementation of the method 600 may alternatively be replaced with the time domain resource indication information. The time domain resource indication information indicates a time domain location of the resource. Optionally, the time domain resource indication information may be a TRIV field. A reserved state of the TRIV field may indicate that the assistant resource is a second-type non-preferred resource. The reserved state of the TRIV field is a state that does not indicate a time domain location of a resource.

A value of the TRIV field may be determined according to the following formula:

it is assumed that SCI indicates one resource, and TRIV=0;
it is assumed that the SCI indicates two resources, TRIV=$t_1$, and $1 \leq t_1 \leq 31$; and
it is assumed that the SCI indicates three resources, and if $(t_2-t_1-1) \leq 15$, TRIV = $30 * (t_2 - t_1 - 1) + t_1 + 31$; otherwise, TRIV = $30 * (31 - t_2 + t_1) + 62 - t_1$, where $1 \leq t_1 \leq 30$, and $t_1 < t_2 \leq 31$.

For example, the frequency domain resource indication information in the method 600 or any implementation of the method 600 may alternatively be replaced with the resource reservation period, where the resource reservation period information indicates a reservation period of the resource. For example, the resource reservation period information may be a resource reservation period field. A reserved state of the resource reservation period field may indicate that the assistant resource is a second-type non-preferred resource. The reserved state of the resource reservation period field is a state, of the resource reservation period field, that does not indicate a resource reservation period.

Manner 2

FIG. 14 is a schematic flowchart of an information sending method according to this application.

710: A first device determines RSRP measurement information corresponding to an assistant resource.

The RSRP measurement information has a first measurement value or a second measurement value. The first measurement value is used to determine that the assistant resource is a resource that the first device does not prefer, and the second measurement value is used to determine that a slot in which the assistant resource is located is a slot in which the first device does not expect receiving.

It can be learned, based on the descriptions about the two types of non-preferred resources, that the first measurement value of the RSRP measurement information is used to determine that the assistant resource is a first-type non-preferred resource in this implementation. The second measurement value of the RSRP measurement information is used to determine that the assistant resource is a second-type non-preferred resource.

Optionally, the resource that the first device does not prefer includes:

a resource whose corresponding RSRP measurement value is greater than a configured first threshold; or
a resource whose corresponding RSRP measurement value is less than a configured second threshold, where the first device is a receiving device of a second device.

Optionally, there may be one or more second measurement values of the RSRP measurement information. When there a plurality of second measurement values of the RSRP measurement information, any second measurement value may be used to determine that a slot in which the assistant resource is located is a slot in which the first device does not expect receiving.

For example, the second measurement value of the RSRP measurement information is one or more of the following:

an upper limit value of the configured RSRP measurement value;
a lower limit value of the configured RSRP measurement value;
positive infinity; and
negative infinity.

720: The first device sends the RSRP measurement information to the second device.

The second device receives the RSRP measurement information from the first device.

730: The second device determines a type of the assistant resource (specifically, a non-preferred resource) based on the RSRP measurement information.

Herein, the type of the assistant resource means two types of resources that the first device does not prefer. The second device determines that the assistant resource is a first-type non-preferred resource or a second-type non-preferred resource.

Optionally, that the first device sends the RSRP measurement information to the second device may specifically be that the first device sends assistant information to the second device, where the assistant information includes the RSRP measurement information.

In addition, the assistant information may further include other information of the assistant resource, for example, time domain resource indication information and frequency domain resource indication information of the assistant resource. The time domain resource indication information indicates a time domain location of the assistant resource. Optionally, the time domain resource indication information may be a TRIV field. The frequency domain resource indication information indicates a frequency domain start location and a size of the assistant resource. Optionally, the frequency domain resource indication information may be an FRIV field. In addition, optionally, the assistant information may further include a resource reservation period. This is not limited.

The first device sends the assistant information to the second device, where the assistant information includes N combinations of resource indication information of the assistant resource. A combination b in the N combinations is used as an example. If the combination b includes RSRP measurement information, and the RSRP measurement information is the first measurement value, it indicates that an assistant resource indicated by the combination b is an assistant resource (namely, a first-type non-preferred resource) that the first device does not prefer. If RSRP measurement information included in the combination b is the second measurement value, it indicates that a slot in which an assistant resource indicated by the combination b is located is a slot (namely, a second-type non-preferred resource) in which the first device does not expect receiving. In other words, the first device does not expect to receive transmission from the second device on the second-type non-preferred resource, and the second-type non-preferred resource is a slot.

In this implementation, the RSRP measurement information may be a field, of the assistant information, related to an RSRP measurement value. For example, the RSRP measurement information may be the RSRP measurement value, a quantized value of the RSRP measurement value, an RSRP threshold, a quantized value of an RSRP threshold, a difference between the RSRP measurement value and an RSRP threshold, or a quantized value of a difference between the RSRP measurement value and an RSRP threshold. This is not limited in this application.

For example, an interval of the RSRP measurement value is [A, B]. If the second device detects that the RSRP measurement information in the combination b is B, it indicates that the assistant resource indicated by the combination b is a first-type non-preferred resource. For another example, when the second device detects that the RSRP measurement information in the combination b is an infinite value or a quantized value corresponding to an infinite value, the second device determines that the assistant resource indicated by the combination b is a first-type non-preferred resource.

Manner 3

The first device sends the assistant information. The assistant information includes N combinations of resource indication information of the assistant resource, each of the N combinations indicates a group of assistant resources, the N combinations include a combination c, the combination c includes 1 bit, and the 1 bit indicates that a group of assistant resources indicated by the combination c is first-type non-preferred resources or second-type non-preferred resources.

In the manner 3, 1 bit is added to each combination to indicate the type of non-preferred resource indicated by the combination.

For example, when the assistant information is carried in the SCI-2 and/or the MAC CE, 1 bit is added to each combination in the SCI-2 to indicate the type of non-preferred resource indicated by the combination. For example, 1 indicates the non-preferred resource indicated by the combination is a first-type non-preferred resource, and 0 indicates the non-preferred resource indicated by the combination is a second-type non-preferred resource.

For example, it is assumed that the second device sends the first indication information to the first device, and the first quantity N indicated by the first indication information is equal to 3, the three combinations included in the assistant information may be as follows:

a combination 1: (1+TRIV+FRIV);
a combination 2: (1+TRIV+FRIV); and
a combination 3: (0+TRIV+FRIV), where
meanings of information included in the three combinations are as follows: non-preferred resources indicated by the first two combinations are first-type non-preferred resources, and a non-preferred resource indicated by the 3rd combination is a second-type non-preferred resource.

The foregoing describes in detail how the first device indicates the type of non-preferred resource to the second device.

The foregoing describes in detail the resource indication method and the information sending method provided in this application. The following describes a communication apparatus provided in this application.

The foregoing describes in detail the resource indication method provided in this application. The following describes a communication apparatus provided in this application.

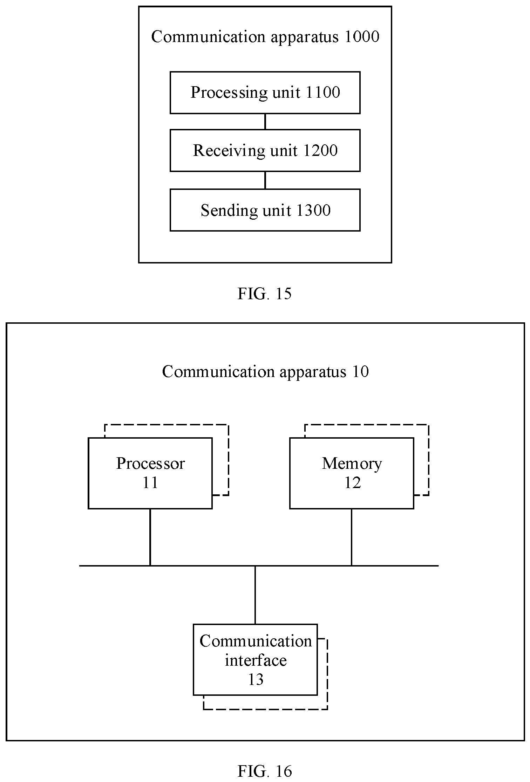

FIG. 15 is a block diagram of a communication apparatus according to this application. As shown in FIG. 15, a communication apparatus 1000 includes a processing unit 1100, a receiving unit 1200, and a sending unit 1300.

Optionally, the communication apparatus 1000 may correspond to the first device in embodiments of this application.

When the communication apparatus 1000 corresponds to the first device, in a solution, units of the communication apparatus 1000 are configured to implement the following functions:

The processing unit 1100 is configured to determine frequency domain resource indication information.

The frequency domain resource indication information indicates a frequency domain start location and a size of an assistant resource.

A first value of the frequency domain resource indication information is used to determine that the assistant resource is a resource that the communication apparatus does not prefer.

A second value of the frequency domain resource indication information is used to determine that a slot in which the assistant resource is located is a slot in which the communication apparatus does not expect receiving.

The sending unit 1300 is configured to send the frequency domain resource indication information to a second device.

Optionally, in an embodiment, the assistant resource is used by the second device for resource selection.

Optionally, in an embodiment, the communication apparatus is a receiving device of the second device.

Optionally, in an embodiment, the resource that the first device does not prefer includes:

a resource whose corresponding RSRP measurement value is greater than a configured first threshold; or
a resource whose corresponding RSRP measurement value is less than a configured second threshold.

Optionally, in an embodiment, the second value is a reserved state of the frequency domain resource indication information.

Optionally, in an embodiment, a range of the first value is:

$$\left[ 0, \frac{N_{subCH} \cdot (N_{subCH}+1)}{2} - 1 \right],$$

where $N_{subCH}$ is a quantity of subchannels included in a resource pool.

Optionally, in an embodiment, a range of the second value is:

$$\left[ \frac{N_{subCH} \cdot (N_{subCH}+1)}{2}, 2^{\left\lceil \log_2 \left( \frac{N_{subCH} \cdot (N_{subCH}+1)}{2} \right) \right\rceil} - 1 \right],$$

where $N_{subCH}$ is the quantity of subchannels included in the resource pool.

Optionally, in an embodiment, a range of the first value is:

$$\left[ 0, \frac{N_{subCH}(N_{subCH}+1)(2N_{subCH}+1)}{6} - 1 \right],$$

where $N_{subCH}$ is a quantity of subchannels included in a resource pool.

Optionally, in an embodiment, a range of the second value is:

$$\left[ \frac{N_{subCH}(N_{subCH}+1)(2N_{subCH}+1)}{6}, 2^{\left\lceil \log_2 \left( \frac{N_{subCH}(N_{subCH}+1)(2N_{subCH}+1)}{6} \right) \right\rceil} - 1 \right],$$

where $N_{subCH}$ is the quantity of subchannels included in the resource pool.

When the communication apparatus 1000 corresponds to the first device, in another solution, units of the communication apparatus 1000 are configured to implement the following functions:

The processing unit 1100 is configured to determine reference signal received power RSRP measurement information corresponding to an assistant resource. The RSRP measurement information has a first measurement value or a second measurement value, the first measurement value is used to determine that the assistant resource is a resource that the communication apparatus does not prefer, and the second measurement value is used to determine that a slot in which the assistant resource is located is a slot in which the first device does not expect receiving.

The sending unit 1300 is configured to send the RSRP measurement information.

Optionally, in an embodiment, the communication apparatus is a receiving device of the second device.

Optionally, in an embodiment, the resource that the communication apparatus does not prefer includes:

a resource whose corresponding RSRP measurement value is greater than a configured first threshold; or
a resource whose corresponding RSRP measurement value is less than a configured second threshold.

Optionally, in an embodiment, the second measurement value is at least one of the following:

an upper limit value of the configured RSRP measurement value;
a lower limit value of the configured RSRP measurement value;
positive infinity; and
negative infinity.

Optionally, in an embodiment, the sending unit 1300 is configured to send assistant information to the second device. The assistant information includes the RSRP measurement information, and the assistant information further includes frequency domain resource indication information, time domain resource indication information, and a resource reservation period.

When the communication apparatus 1000 corresponds to the first device, in still another solution, units of the communication apparatus 1000 are configured to implement the following functions:

The processing unit 1100 is configured to determine first indication information. The first indication information indicates a first quantity N, the first quantity is a quantity of combinations of resource indication information of an assistant resource, the assistant resource is used by a second device for resource selection, and N is a non-negative integer.

The sending unit 1300 is configured to send the first indication information.

Optionally, in an embodiment, the communication apparatus is a receiving device of the second device.

Optionally, in an embodiment, the first quantity N is less than or equal to a second quantity, and the second quantity is a configured or pre-configured value.

Optionally, in an embodiment, the first indication information includes reserved information in the first-stage SCI.

Optionally, in an embodiment, the first indication information is included in the first-stage SCI, reserved information in the first-stage SCI indicates that a shared channel scheduled by the first-stage SCI carries only assistant information, and the assistant information includes the resource indication information; and

the first indication information includes MCS indication information and/or MCS table indication information in the first-stage SCI; or
the first indication information includes some bits or some statuses of MCS indication information in the first-stage SCI, and/or some bits or some statuses of MCS table indication information in the first-stage SCI.

Optionally, in an embodiment, the first indication information is included in the first-stage SCI, reserved information in the first-stage SCI indicates that a shared channel scheduled by the first-stage SCI carries assistant information, and the assistant information includes the resource indication information.

The first-stage SCI does not include MCS indication information and/or MCS table indication information.

Optionally, in an embodiment, a format of the first-stage SCI is different from an SCI format 1-A.

Optionally, in an embodiment, the first indication information includes second-stage SCI or a medium access control control element MAC CE.

Optionally, in an embodiment, the first quantity is equal to the second quantity, and the combination of resource indication information includes frequency domain resource indication information.

A third value of the frequency domain resource indication information indicates a frequency domain start location and a size of the assistant resource.

A fourth value of the frequency domain resource indication information indicates that the combination of resource indication information is an invalid combination, and the fourth value is a reserved state of the frequency domain resource indication information.

Optionally, in an embodiment, the method further includes:

The first device sends second indication information, where the second indication information indicates that the assistant resource is one of the following three cases: a non-preferred resource, a preferred resource, or a non-preferred resource and a preferred resource.

The second indication information is indicated by the first-stage SCI or configuration signaling.

Optionally, in an embodiment, the first quantity N includes a quantity of non-preferred resources and/or a quantity of preferred resources.

Optionally, in an embodiment, the assistant resource is the non-preferred resource, and the non-preferred resource includes a first-type non-preferred resource and a second-type non-preferred resource.

The first-type non-preferred resource is a resource that the first device does not prefer, and the second-type non-preferred resource is a resource that the first device does not expect to receive.

Optionally, in an embodiment, the resource that the first device does not prefer includes:

a resource whose corresponding RSRP measurement value is greater than a configured first threshold; or

a resource whose corresponding RSRP measurement value is less than a configured second threshold.

Optionally, in an embodiment, the first quantity N includes a quantity of non-preferred resources and a quantity of first-type non-preferred resources.

Optionally, in an embodiment, the first quantity N includes the quantity of non-preferred resources and a quantity of second-type non-preferred resources.

Optionally, in an embodiment, the first quantity N includes the quantity of first-type non-preferred resources and the quantity of second-type non-preferred resources.

Optionally, in an embodiment, the first quantity N is 0, a shared channel scheduled by first-stage SCI does not include assistant information, and the assistant information includes the resource indication information.

When the communication apparatus 1000 corresponds to the first device, in still another solution, units of the communication apparatus 1000 are configured to implement the following functions:

The processing unit 1100 is configured to determine a first resource, where the first resource includes M sub-resources in a resource set, and M is a positive integer.

The sending unit 1300 is configured to send first indication information to the second device. The first indication information indicates start locations of the M sub-resources or start locations of some of the M sub-resources.

Optionally, in an embodiment, the communication apparatus is a receiving device of the second device.

Optionally, in an embodiment, the first indication information is second-stage SCI and/or a MAC CE.

Optionally, in an embodiment, that the first indication information indicates start locations of the M sub-resources includes:

The first indication information includes a first field and a second field, the first field indicates a start location of a 1st sub-resource in the M sub-resources, and the second field indicates a start location of another sub-resource other than the 1st sub-resource in the M sub-resources.

Optionally, in an embodiment, the first field and the second field are different fields in the second-stage SCI and/or the MAC CE.

Optionally, in an embodiment, the second field further indicates a size of the M sub-resources.

Optionally, in an embodiment, a value of M is 3, and that the first indication information indicates start locations of the M sub-resources includes:

A value of the first indication information is determined based on one or more of the following parameters: the start location of the 1st sub-resource, a start location of a 2nd sub-resource, a start location of a 3rd sub-resource, and the size of the M sub-resources.

Optionally, in an embodiment, a size of the 1st sub-resource, a size of the 2nd sub-resource, and a size of the 3rd sub-resource are the same.

Optionally, in an embodiment, a value of the first indication information is determined based on one or more of the following parameters:

$$\left(N_{\text{subchannel}}^{SL} + 1 - L_{\text{subCH}}\right);$$

$$\left(N_{\text{subchannel}}^{SL} + 1 - L_{\text{subCH}}\right)^2;$$

and

$$\left(N^{SL}_{\text{subchannel}} + 1 - i\right)^3,$$

where $i$ is a positive integer, $N^{SL}_{\text{subchannel}}$ is a quantity of subchannels included in the resource set, and $L_{subCH}$ is the size of the M sub-resources.

Optionally, in an embodiment, a value of the first indication information is determined based on one or more of the following parameters:

$$n^{start}_{subCH,1};$$

$$n^{start}_{subCH,2} \cdot \left(N^{SL}_{\text{subchannel}} + 1 - L_{\text{subCH}}\right);$$

$$n^{start}_{subCH,3} \cdot \left(N^{SL}_{\text{subchannel}} + 1 - L_{\text{subCH}}\right)^2;$$

and

$$\sum_{i=1}^{L_{\text{subCH}}-1} \left(N^{SL}_{\text{subchannel}} + 1 - i\right)^3,$$

where $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, $n^{start}_{subCH,2}$ is the start location of the 2nd sub-resource, $n^{start}_{subCH,3}$ is the start location of the 3rd sub-resource, and $i$ is a positive integer.

Optionally, in an embodiment, a value of the first indication information meets the following condition:

$$FRIV = n^{start}_{subCH,1} + n^{start}_{subCH,2} \cdot \left(N^{SL}_{\text{subchannel}} + 1 - L_{\text{subCH}}\right) + n^{start}_{subCH,3} \cdot \left(N^{SL}_{\text{subchannel}} + 1 - L_{\text{subCH}}\right)^2$$

$$+ \sum_{i=1}^{L_{\text{subCH}}-1} \left(N^{SL}_{\text{subchannel}} + 1 - i\right)^3,$$

where FRIV is the value of the first indication information, $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, $n^{start}_{subCH,2}$ is the start location of the 2nd sub-resource, $n^{start}_{subCH,3}$ is the start location of the 3rd sub-resource, and $i$ is a positive integer.

Optionally, in an embodiment, a value of M is 2, and that the first indication information indicates start locations of the M sub-resources includes:

A value of the first indication information is determined based on one or more of the following parameters: the start location of the 1st sub-resource, the start location of the 2nd sub-resource, and the size of the M sub-resources.

Optionally, in an embodiment, the size of the 1st sub-resource and the size of the 2nd sub-resource are the same.

Optionally, in an embodiment, a value of the first indication information is determined based on at least one of the following parameters:

$$\left(N^{SL}_{\text{subchannel}} + 1 - L_{\text{subCH}}\right);$$

and

$$\left(N^{SL}_{\text{subchannel}} + 1 - L_{\text{subCH}}\right)^2,$$

where $N^{SL}_{\text{subchannel}}$ is the quantity of subchannels included in the resource set, and $L_{\text{subCH}}$ is the size of the M sub-resources.

Optionally, in an embodiment, a value of the first indication information is determined based on one or more of the following parameters:

$$n^{start}_{subCH,1};$$

$$n^{start}_{subCH,2} \cdot \left(N^{SL}_{\text{subchannel}} + 1 - L_{\text{subCH}}\right);$$

$$\sum_{i=1}^{L_{\text{subCH}}-1} \left(N^{SL}_{\text{subchannel}} + 1 - i\right)^2,$$

where $i$ is a positive integer, $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, and $n^{start}_{subCH,2}$ is the start location of the 2nd sub-resource.

Optionally, in an embodiment, a value of the first indication information meets the following condition:

$$FRIV = n^{start}_{subCH,1} + n^{start}_{subCH,2} \cdot \left(N^{SL}_{\text{subchannel}} + 1 - L_{\text{subCH}}\right) + \sum_{i=1}^{L_{\text{subCH}}-1} \left(N^{SL}_{\text{subchannel}} + 1 - i\right)^2$$

FRIV is the value of the first indication information, $N^{SL}_{\text{subchannel}}$ is the quantity of subchannels included in the resource set, $L_{\text{subCH}}$ is the size of the M sub-resources, $n^{start}_{subCH,1}$ is the start location of the 1st sub-resource, $n^{start}_{subCH,2}$ is the start location of the 2nd sub-resource, and $i$ is a positive integer.

Optionally, in an embodiment, the start location of the 1st sub-resource in the M sub-resources is determined based on the size of the M sub-resources.

Optionally, in an embodiment, the size of the M sub-resources and the start location of the 1st sub-resource in the M sub-resources meet a mapping relationship, and the mapping relationship includes one or more of the following:

a difference between the start location of the 1st sub-resource and the size of the M sub-resources is one offset value; and
there is a one-to-one mapping relationship between the start location of the 1st sub-resource and the size of the M sub-resources, and one value of the start location of the 1st sub-resource uniquely corresponds to one value of the size of the M sub-resources.

Optionally, in an embodiment, the first resource is a frequency domain resource.
Optionally, in an embodiment, the first indication information indicates start locations of M-1 sub-resources in the M sub-resources, and a location of a time domain resource in which the first indication information is located is before time domain start locations of the M sub-resources.

Optionally, in an embodiment, the first indication information further indicates a time domain location of a sub-resource, in the M sub-resources, whose start location is not indicated.

Optionally, in an embodiment, the resource, in the M sub-resources, whose start location is not indicated is the 1st sub-resource in the M sub-resources, a last sub-resource in the M sub-resources, or any sub-resource other than the 1st sub-resource and the last sub-resource in the M sub-resources.

Optionally, in an embodiment, the time domain location of a sub-resource, in the M sub-resources, whose start location is not indicated is determined based on a slot offset value between a first slot and a second slot. The first slot is a slot in which the first indication information is located, the second slot is a slot in which the sub-resource, in the M sub-resources, whose start location is not indicated, the time domain offset value is from first configuration information, and an index value corresponding to the time domain offset value is indicated by the first indication information.

Optionally, the communication apparatus 1000 may correspond to the second device in embodiments of this application.

When the communication apparatus 1000 corresponds to the second device, in a solution, units of the communication apparatus 1000 are configured to implement the following functions:

The receiving unit 1200 is configured to obtain frequency domain resource indication information. The frequency domain resource indication information indicates a frequency domain start location and a size of an assistant resource, a first value of the frequency domain resource indication information is used to determine that the assistant resource is a resource that a first device does not prefer, and a second value of the frequency domain resource indication information is used to determine that a slot in which the assistant resource is located is a slot in which the first device does not expect receiving.

The processing unit 1100 is configured to determine a type of the assistant resource based on the frequency domain resource indication information.

Optionally, in an embodiment, the assistant resource is used by the communication apparatus for resource selection.

Optionally, in an embodiment, the first device is a receiving device of the communication apparatus.

Optionally, in an embodiment, the resource that the first device does not prefer includes:

a resource whose corresponding RSRP measurement value is greater than a configured first threshold; or
a resource whose corresponding RSRP measurement value is less than a configured second threshold.

Optionally, in an embodiment, the second value is a reserved state of the frequency domain resource indication information.

Optionally, in an embodiment, a range of the first value is:

$$\left[ 0, \frac{N_{subCH} \cdot (N_{subCH} + 1)}{2} - 1 \right],$$

where $N_{subCH}$ is a quantity of subchannels included in a resource pool.

Optionally, in an embodiment, a range of the second value is:

$$\left[ \frac{N_{subCH} \cdot (N_{subCH} + 1)}{2}, 2^{\left\lceil \log_2 \left( \frac{N_{subCH} \cdot (N_{subCH} + 1)}{2} \right) \right\rceil} - 1 \right],$$

where $N_{subCH}$ is the quantity of subchannels included in the resource pool.

Optionally, in an embodiment, a range of the first value is:

$$\left[ 0, \frac{N_{subCH}(N_{subCH} + 1)(2N_{subCH} + 1)}{6} - 1 \right],$$

where $N_{subCH}$ is a quantity of subchannels included in a resource pool.

Optionally, in an embodiment, a range of the second value is:

$$\left[\frac{N_{subCH}(N_{subCH}+1)(2N_{subCH}+1)}{6}, 2^{\left\lceil \log_2\left(\frac{N_{subCH}(N_{subCH}+1)(2N_{subCH}+1)}{6}\right)\right\rceil} - 1\right],$$

where $N_{subCH}$ is the quantity of subchannels included in the resource pool.

When the communication apparatus 1000 corresponds to the second device, in another solution, units of the communication apparatus 1000 are configured to implement the following functions:

The receiving unit 1200 is configured to obtain reference signal received power RSRP measurement information corresponding to an assistant resource. The RSRP measurement information has a first measurement value or a second measurement value, the first measurement value is used to determine that the assistant resource is a resource that the first device does not prefer, and the second measurement value is used to determine that a slot in which the assistant resource is located is a slot in which the first device does not expect receiving.

The processing unit 1100 is configured to determine a type of the assistant resource based on the RSRP measurement information.

Optionally, in an embodiment,
the first device is a receiving device of the communication device.

Optionally, in an embodiment, the resource that the first device does not prefer includes:

a resource whose corresponding RSRP measurement value is greater than a configured first threshold; or
a resource whose corresponding RSRP measurement value is less than a configured second threshold.

Optionally, in an embodiment, the second measurement value is at least one of the following:

an upper limit value of the configured RSRP measurement value;
a lower limit value of the configured RSRP measurement value;
positive infinity; and
negative infinity.

When the communication apparatus 1000 corresponds to the second device, in still another solution, units of the communication apparatus 1000 are configured to implement the following functions:

The receiving unit 1200 is configured to receive first indication information from a first device. The first indication information indicates a first quantity N, the first quantity is a quantity of combinations of resource indication information of an assistant resource, the assistant resource is used by the second device for resource selection, and N is a non-negative integer.

The processing unit 1100 is configured to determine the quantity of combinations of resource indication information of the assistant resource based on the first indication information.

Optionally, in an embodiment, the first device is a receiving device of the communication apparatus.

Optionally, in an embodiment, the receiving unit 1200 is further configured to receive second indication information from the first device. The second indication information indicates that the assistant resource is one of the following three cases: a non-preferred resource, a preferred resource, or a non-preferred resource and a preferred resource.

The second indication information is indicated by the first-stage SCI or configuration signaling.

Optionally, in an embodiment, the first quantity N is less than or equal to a second quantity, and the second quantity is a configured or pre-configured value.

Optionally, in an embodiment, the first indication information includes reserved information in the first-stage SCI.

Optionally, in an embodiment, the first indication information is included in the first-stage SCI, reserved information in the first-stage SCI indicates that a shared channel scheduled by the first-stage SCI carries only assistant information, and the assistant information includes the resource indication information; and

the first indication information includes MCS indication information and/or MCS table indication information in the first-stage SCI; or
the first indication information includes some bits or some statuses of MCS indication information in the first-stage SCI, and/or some bits or some statuses of MCS table indication information in the first-stage SCI.

Optionally, in an embodiment, the first indication information is included in the first-stage SCI, reserved information in the first-stage SCI indicates that a shared channel scheduled by the first-stage SCI carries assistant information, and the assistant information includes the resource indication information.

The first-stage SCI does not include MCS indication information and/or MCS table indication information.

Optionally, in an embodiment, a format of the first-stage SCI is different from an SCI format 1-A.

Optionally, in an embodiment, the first indication information includes second-stage SCI or a medium access control control element MAC CE.

Optionally, in an embodiment, the first quantity is equal to the second quantity, and the combination of resource indication information includes frequency domain resource indication information.

A third value of the frequency domain resource indication information indicates a frequency domain start location and a size of the assistant resource.

A fourth value of the frequency domain resource indication information indicates that the combination of resource indication information is an invalid combination, and the fourth value is a reserved state of the frequency domain resource indication information.

Optionally, in an embodiment, the method further includes:

The first device sends second indication information, where the second indication information indicates that the assistant resource is one of the following three cases: a non-preferred resource, a preferred resource, or a non-preferred resource and a preferred resource.

The second indication information is indicated by the first-stage SCI or configuration signaling.

Optionally, in an embodiment, the first quantity N includes a quantity of non-preferred resources and/or a quantity of preferred resources.

Optionally, in an embodiment, the assistant resource is the non-preferred resource, and the non-preferred resource includes a first-type non-preferred resource and a second-type non-preferred resource.

The first-type non-preferred resource is a resource that the first device does not prefer, and the second-type non-preferred resource is a resource that the first device does not expect to receive.

Optionally, in an embodiment, the resource that the first device does not prefer includes:

a resource whose corresponding RSRP measurement value is greater than a configured first threshold; or
a resource whose corresponding RSRP measurement value is less than a configured second threshold.

Optionally, in an embodiment, the first quantity N includes a quantity of non-preferred resources and a quantity of first-type non-preferred resources.

Optionally, in an embodiment, the first quantity N includes the quantity of non-preferred resources and a quantity of second-type non-preferred resources.

Optionally, in an embodiment, the first quantity N includes the quantity of first-type non-preferred resources and the quantity of second-type non-preferred resources.

Optionally, in an embodiment, the first quantity N is 0, a shared channel scheduled by first-stage SCI does not include assistant information, and the assistant information includes the resource indication information.

When the communication apparatus 1000 corresponds to the second device, in still another solution, units of the communication apparatus 1000 are configured to implement the following functions:

The receiving unit 1200 is configured to receive first indication information from a first device. The first indication information indicates start locations of the M sub-resources or start locations of some of the M sub-resources.

The processing unit 1100 is configured to determine the start locations of the M sub-resources based on the first indication information.

Optionally, in an embodiment, the first device is a receiving device of the communication apparatus.

Optionally, in an embodiment, the first indication information is second-stage SCI and/or a MAC CE.

Optionally, in an embodiment, that the first indication information indicates start locations of the M sub-resources includes:

The first indication information includes a first field and a second field, the first field indicates a start location of a 1st sub-resource in the M sub-resources, and the second field indicates a start location of another sub-resource other than the 1st sub-resource in the M sub-resources.

Optionally, in an embodiment, the first field and the second field are different fields in the second-stage SCI and/or the MAC CE.

Optionally, in an embodiment, the second field further indicates a size of the M sub-resources.

Optionally, in an embodiment, a value of M is 3, and that the first indication information indicates start locations of the M sub-resources includes:

A value of the first indication information is determined based on one or more of the following parameters:
the start location of the 1st sub-resource, a start location of a 2nd sub-resource, a start location of a 3rd sub-resource, and the size of the M sub-resources.

Optionally, in an embodiment, a size of the 1st sub-resource, a size of the 2nd sub-resource, and a size of the

3<sup>rd</sup> sub-resource are the same.

Optionally, in an embodiment, a value of the first indication information is determined based on one or more of the following parameters:

$$\left( N^{SL}_{\text{subchannel}} + 1 - L_{\text{subCH}} \right);$$

$$\left( N^{SL}_{\text{subchannel}} + 1 - L_{\text{subCH}} \right)^2;$$

and

$$\left( N^{SL}_{\text{subchannel}} + 1 - i \right)^3,$$

where $i$ is a positive integer, $N^{SL}_{\text{subchannel}}$ is a quantity of subchannels included in the resource set, and $L_{\text{subCH}}$ is the size of the M sub-resources.

Optionally, in an embodiment, a value of the first indication information is determined based on one or more of the following parameters:

$$n^{start}_{subCH,1};$$

$$n^{start}_{subCH,2} \cdot \left( N^{SL}_{\text{subchannel}} + 1 - L_{\text{subCH}} \right);$$

$$n^{start}_{subCH,3} \cdot \left( N^{SL}_{\text{subchannel}} + 1 - L_{\text{subCH}} \right)^2;$$

and

$$\sum_{i=1}^{L_{\text{subCH}}-1} \left( N^{SL}_{\text{subchannel}} + 1 - i \right)^3,$$

*where* $N^{SL}_{\text{subchannel}}$ is the quantity of subchannels included in the resource set, $L_{\text{subCH}}$ is the size of the M sub-resources, $n^{start}_{subCH,1}$ is the start location of the 1<sup>st</sup> sub-resource, $n^{start}_{subCH,2}$ is the start location of the 2<sup>nd</sup> sub-resource, $n^{start}_{subCH,3}$ is the start location of the 3<sup>rd</sup> sub-resource, and $i$ is a positive integer.

Optionally, in an embodiment, a value of the first indication information meets the following condition:

$$FRIV = n^{start}_{subCH,1} + n^{start}_{subCH,2} \cdot \left( N^{SL}_{\text{subchannel}} + 1 - L_{\text{subCH}} \right) + n^{start}_{subCH,3} \cdot \left( N^{SL}_{\text{subchannel}} + 1 - L_{\text{subCH}} \right)^2$$
$$+ \sum_{i=1}^{L_{\text{subCH}}-1} \left( N^{SL}_{\text{subchannel}} + 1 - i \right)^3,$$

*where FRIV* is the value of the first indication information, $N_{\text{subchannel}}^{SL}$ is the quantity of subchannels included in the resource set, $L_{\text{subCH}}$ is the size of the M sub-resources, $n_{subCH,1}^{start}$ is the start location of the 1st sub-resource, $n_{subCH,2}^{start}$ is the start location of the 2nd sub-resource, $n_{subCH,3}^{start}$ is the start location of the 3rd sub-resource, and *i* is a positive integer.

Optionally, in an embodiment, a value of M is 2, and that the first indication information indicates start locations of the M sub-resources includes:

A value of the first indication information is determined based on one or more of the following parameters: the start location of the 1st sub-resource, the start location of the 2nd sub-resource, and the size of the M sub-resources.

Optionally, in an embodiment, the size of the 1st sub-resource and the size of the 2nd sub-resource are the same.

Optionally, in an embodiment, a value of the first indication information is determined based on at least one of the following parameters:

$$\left(N_{\text{subchannel}}^{SL} + 1 - L_{\text{subCH}}\right);$$

and

$$\left(N_{\text{subchannel}}^{SL} + 1 - L_{\text{subCH}}\right)^2,$$

where $N_{\text{subchannel}}^{SL}$ is the quantity of subchannels included in the resource set, and $L_{\text{subCH}}$ is the size of the M sub-resources.

Optionally, in an embodiment, a value of the first indication information is determined based on one or more of the following parameters: $n_{subCH,1}^{start}$;

$$n_{subCH,2}^{start} \cdot \left(N_{\text{subchannel}}^{SL} + 1 - L_{\text{subCH}}\right);$$

and

$$\sum_{i=1}^{L_{\text{subCH}}-1} \left(N_{\text{subchannel}}^{SL} + 1 - i\right)^2,$$

where *i* is a positive integer, $N_{\text{subchannel}}^{SL}$ is the quantity of subchannels included in the resource set, $L_{subCH}$ is the size of the M sub-resources, $n_{subCH,1}^{start}$ is the start location of the 1st sub-resource, and $n_{subCH,2}^{start}$ is the start location of the 2nd sub-resource.

Optionally, in an embodiment, a value of the first indication information meets the following condition:

$$FRIV = n_{subCH,1}^{start} + n_{subCH,2}^{start} \cdot \left(N_{\text{subchannel}}^{SL} + 1 - L_{\text{subCH}}\right) + \sum_{i=1}^{L_{\text{subCH}}-1} \left(N_{\text{subchannel}}^{SL} + 1 - i\right)^2$$

*FRIV* is the value of the first indication information, $N_{\text{subchannel}}^{SL}$ is the quantity of subchannels included in the resource set, $L_{\text{subCH}}$ is the size of the M sub-resources, $n_{subCH,1}^{start}$ is the start location of the 1st sub-resource, $n_{subCH,2}^{start}$

is the start location of the $2^{nd}$ sub-resource, and $i$ is a positive integer.

Optionally, in an embodiment, the start location of the $1^{st}$ sub-resource in the M sub-resources is determined based on the size of the M sub-resources.

Optionally, in an embodiment, the size of the M sub-resources and the start location of the $1^{st}$ sub-resource in the M sub-resources meet a mapping relationship, and the mapping relationship includes one or more of the following:

a difference between the start location of the $1^{st}$ sub-resource and the size of the M sub-resources is one offset value; and

there is a one-to-one mapping relationship between the start location of the $1^{st}$ sub-resource and the size of the M sub-resources, and one value of the start location of the $1^{st}$ sub-resource uniquely corresponds to one value of the size of the M sub-resources.

Optionally, in an embodiment, the first resource is a frequency domain resource.

Optionally, in an embodiment, the first indication information indicates start locations of M-1 sub-resources in the M sub-resources, and a location of a time domain resource in which the first indication information is located is before time domain start locations of the M sub-resources.

Optionally, in an embodiment, the first indication information further indicates a time domain location of a sub-resource, in the M sub-resources, whose start location is not indicated.

Optionally, in an embodiment, the resource, in the M sub-resources, whose start location is not indicated is the $1^{st}$ sub-resource in the M sub-resources, a last sub-resource in the M sub-resources, or any sub-resource other than the $1^{st}$ sub-resource and the last sub-resource in the M sub-resources.

Optionally, in an embodiment, the time domain location of a sub-resource, in the M sub-resources, whose start location is not indicated is determined based on a slot offset value between a first slot and a second slot. The first slot is a slot in which the first indication information is located, the second slot is a slot in which the sub-resource, in the M sub-resources, whose start location is not indicated, the time domain offset value is from first configuration information, and an index value corresponding to the time domain offset value is indicated by the first indication information.

In the foregoing implementations, the receiving unit 1200 and the sending unit 1300 may also be integrated into one transceiver unit, and have both of a receiving function and a sending function. This is not limited herein.

In embodiments in which the communication apparatus 1000 corresponds to the first device, the processing unit 1100 is configured to perform processing and/or an operation, other than sending and receiving actions, implemented inside the first device, the receiving unit 1200 is configured to perform a receiving action performed by the first device, and the sending unit 1300 is configured to perform a sending action performed by the first device.

For example, in FIG. 8, the processing unit 1100 performs step 310, and the sending unit 1300 performs the sending action in step 320.

For another example, in FIG. 11, the processing unit 1100 performs step 510, and the sending unit 1300 performs the sending action in step 520. Optionally, the sending unit 1300 performs the sending action in step 530.

For another example, in FIG. 12, the processing unit 1100 performs step 610, and the sending unit 1300 performs the sending action in step 620.

For another example, in FIG. 14, the processing unit 1100 performs step 710, and the sending unit 1300 performs the sending action in step 720.

In embodiments in which the communication apparatus 1000 corresponds to the second device, the processing unit 1100 is configured to perform processing and/or an operation, other than sending and receiving actions, implemented inside the second device, the receiving unit 1200 is configured to perform a receiving action performed by the second device, and the sending unit 1300 is configured to perform a sending action performed by the second device.

For example, in FIG. 8, the receiving unit 1200 performs the receiving action in step 320, and the processing unit 1100 performs step 330.

For another example, in FIG. 11, the receiving unit 1200 performs the receiving action in step 520. Optionally, the receiving unit 1200 performs the receiving action in step 530, and the processing unit 1100 performs step 540.

For another example, in FIG. 12, the receiving unit 1200 performs the receiving action in step 620, and the processing unit 1100 performs step 630.

For another example, in FIG. 14, the receiving unit 1200 performs the receiving action in step 720, and the processing unit 1100 performs step 730.

FIG. 16 is a diagram of a structure of a communication apparatus according to this application. As shown in FIG. 16, a communication apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to: invoke the computer program from the memory 12, and run the computer program, to enable the communication apparatus 10 to perform processing performed by the first device or the second device in the method embodiments of this application.

For example, the processor 11 may have a function of the processing unit 1100 shown in FIG. 15, and the communication interface 13 may have a function of the receiving unit 1200 and/or a function of the sending unit 1300 shown in FIG. 15. Specifically, the processor 11 may be configured to perform processing or an operation performed inside the communication apparatus, and the communication interface 13 is configured to perform a sending and/or receiving operation performed by the communication apparatus.

In an implementation, the communication apparatus 10 may be the first device in the method embodiments. In this implementation, the communication interface 13 may be a transceiver of the first device. The transceiver may include a receiver and/or a transmitter. Optionally, the processor 11 may be a baseband apparatus of the first device, and the communication interface 13 may be a radio frequency apparatus.

In another implementation, the communication apparatus 10 may be a chip (or a chip system) installed in the first device. In this implementation, the communication interface 13 may be an interface circuit or an input/output interface.

In an implementation, the communication apparatus 10 may be the second device in the method embodiments. In this implementation, the communication interface 13 may be a transceiver of the second device. The transceiver may include a receiver and/or a transmitter. Optionally, the processor 11 may be a baseband apparatus of the second device, and the communication interface 13 may be a radio frequency apparatus.

In another implementation, the communication apparatus 10 may be a chip (or a chip system) installed in the second device. In this implementation, the communication interface 13 may be an interface circuit or an input/output interface.

In FIG. 16, a dashed box behind a component (for example, the processor, the memory, or the communication interface) indicates that there may be at least one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the first device in the method embodiments of this application are/is performed.

This application further provides a computer-readable storage medium. The computer-readable storage medium stores computer instructions. When the computer instructions are run on a computer, an operation and/or processing performed by the second device in the method embodiments of this application are/is performed.

In addition, this application further provides a computer program product. The computer program product includes computer program code or instructions. When the computer program code or the instructions are run on a computer, an operation and/or processing performed by the first device in the method embodiments of this application are/is performed.

This application further provides a computer program product. The computer program product includes computer program code or instructions. When the computer program code or the instructions are run on a computer, an operation and/or processing performed by the second device in the method embodiments of this application are/is performed.

In addition, this application further provides a chip. The chip includes a processor. A memory configured to store a computer program is disposed independent of the chip. The processor is configured to execute the computer program stored in the memory, so that a first device in which the chip is installed performs the operation and/or processing performed by the first device in any method embodiment.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, so that a first device in which the chip is installed performs the operation and/or processing performed by the second device in any method embodiment.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, to enable an operation and/or processing performed by the first device in any one of the method embodiments to be performed.

In addition, this application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, to enable an operation and/or processing performed by the second device in any one of the method embodiments to be performed.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the first device in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the second device in any method embodiment.

In addition, this application further provides a wireless communication system, including the first device and the second device in method embodiments of this application. For example, the first device and the second device may be two terminal devices in a sidelink communication system.

In addition, functional units in embodiments of this application may be integrated into one processing unit, or each of the units may exist alone physically, or two or more units may be integrated into one unit.

The memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memories in the system and method described in this specification include but are not limited to these memories and any memory of another suitable type.

A person skilled in the art may clearly understand that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in another manner. For example, the described apparatus embodiment is merely an example. For example, division into units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

The units described as separate parts may be physically separated or not, this is, may be located together in the same place or distributed on a plurality of network units. Some or all of the units may be selected based on actual requirements to achieve objectives of the solutions of the embodiments.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any proper manner.

It should further be understood that names of all devices and information in this application are merely names set for ease of description in this application, and may be different in an actual network. It should not be understood that the names of all the devices and the information are limited in this application. On the contrary, any name that has a function that is the same as or similar to that of the device or the information used in this application is considered as a method or an equivalent replacement in this application, and falls within the protection scope of this application. Details are not described below again.

It should be understood that ordinal numerals such as "first" and "second" mentioned in embodiments of this application are used to distinguish between a plurality of objects, and are not intended to limit sizes, content, a sequence, a time sequence, priorities, importance, or the like of a plurality of objects.

It should further be understood that, in this application, both "when" and "if" mean that a network element performs corresponding processing in an objective situation, but do not constitute a limitation on time, do not require that the network element has a determining action during implementation, and do not mean other limitations either.

It should further be understood that, in this application, "at least one" refers to one or more, and "a plurality of" refers to two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

In addition, the character "/" connecting two items indicates an "or" relationship. For example, A/B indicates A or B.

It should further be understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should further be understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should further be understood that in embodiments of this application, "B corresponding to A" represents that B is associated with A, or B may be determined based on A. However, it should further be understood that determining A based on B does not mean that B is determined based on A only, and B may also be determined based on A and/or other information.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing description is merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

**Claims**

1. An information sending method, comprising:

   determining, by a first terminal apparatus, frequency domain resource indication information, wherein the frequency domain resource indication information indicates a frequency domain start location and a size of an assistant resource;
   a first value of the frequency domain resource indication information is used to determine that the assistant resource is a resource that the first terminal apparatus does not prefer; and
   a second value of the frequency domain resource indication information is used to determine that a slot in which the assistant resource is located is a slot in which the first terminal apparatus does not expect receiving; and
   sending, by the first terminal apparatus, the frequency domain resource indication information to a second terminal apparatus.

2. The method according to claim 1, wherein the assistant resource is used by the second terminal apparatus for resource selection.

3. The method according to claim 1 or 2, wherein the resource that the first terminal apparatus does not prefer comprises:

   a resource whose corresponding RSRP measurement value is greater than a configured first threshold; or
   a resource whose corresponding RSRP measurement value is less than a configured second threshold.

4. The method according to any one of claims 1 to 3, wherein the second value is a reserved state of the frequency domain resource indication information.

5. The method according to any one of claims 2 to 4, wherein a range of the first value is:

$$\left[0, \frac{N_{subCH} \cdot (N_{subCH} + 1)}{2} - 1\right],$$

   wherein $N_{subCH}$ is a quantity of subchannels comprised in a resource pool.

6. The method according to any one of claims 2 to 5, wherein a range of the second value is:

$$\left[\frac{N_{subCH} \cdot (N_{subCH} + 1)}{2}, 2^{\left\lceil \log_2(\frac{N_{subCH} \cdot (N_{subCH}+1)}{2}) \right\rceil} - 1\right],$$

   wherein $N_{subCH}$ is the quantity of subchannels comprised in the resource pool.

7. The method according to any one of claims 2 to 4, wherein a range of the first value is:

$$[0, \frac{N_{subCH}(N_{subCH} + 1)(2N_{subCH} + 1)}{6} - 1] ,$$

   wherein $N_{subCH}$ is a quantity of subchannels comprised in a resource pool.

8. The method according to any one of claims 2, 3, 4, and 7, wherein a range of the second value is:

$$[\frac{N_{subCH}(N_{subCH} + 1)(2N_{subCH} + 1)}{6}, 2^{\left\lceil \log_2(\frac{N_{subCH}(N_{subCH}+1)(2N_{subCH}+1)}{6}) \right\rceil} - 1],$$

   wherein $N_{subCH}$ is the quantity of subchannels comprised in the resource pool.

9. An information sending method, comprising:

   determining, by a first terminal apparatus, first indication information, wherein the first indication information indicates a first quantity N, the first quantity is a quantity of combinations of resource indication information of an assistant resource, the assistant resource is used by a second terminal apparatus for resource selection, and N is a non-negative integer; and
   sending, by the first terminal apparatus, the first indication information to the second terminal apparatus.

10. The method according to claim 9, wherein the first quantity N is less than or equal to a second quantity, and the second quantity is a configured or pre-configured value.

11. The method according to claim 9 or 10, wherein the first indication information comprises reserved information in first-stage SCI.

12. The method according to claim 9 or 10, wherein the first indication information is comprised in first-stage SCI, reserved information in the first-stage SCI indicates that a shared channel scheduled by the first-stage SCI carries only assistant information, and the assistant information comprises the resource indication information; and

the first indication information comprises MCS indication information and/or MCS table indication information in the first-stage SCI; or
the first indication information comprises some bits or some statuses of MCS indication information in the first-stage SCI, and/or some bits or some statuses of MCS table indication information in the first-stage SCI.

13. The method according to claim 9 or 10, wherein the first indication information is comprised in first-stage SCI, reserved information in the first-stage SCI indicates that a shared channel scheduled by the first-stage SCI carries assistant information, and the assistant information comprises the resource indication information; and
the first-stage SCI does not comprise MCS indication information and/or MCS table indication information.

14. The method according to any one of claims 11 to 13, wherein a format of the first-stage SCI is different from an SCI format 1-A.

15. The method according to claim 9 or 10, wherein the first indication information comprises second-stage SCI or a medium access control control element MAC CE.

16. The method according to claim 10, wherein the first quantity is equal to the second quantity, and the combination of resource indication information comprises frequency domain resource indication information;

a third value of the frequency domain resource indication information indicates a frequency domain start location and a size of the assistant resource; and
a fourth value of the frequency domain resource indication information indicates that the combination of resource indication information is an invalid combination, and the fourth value is a reserved state of the frequency domain resource indication information.

17. The method according to any one of claims 9 to 16, wherein the method further comprises:

sending, by the first terminal apparatus, second indication information, wherein the second indication information indicates that the assistant resource is one of the following three cases: a non-preferred resource, a preferred resource, or a non-preferred resource and a preferred resource, wherein
the second indication information is indicated by the first-stage SCI or configuration signaling.

18. The method according to claim 17, wherein the first quantity N comprises a quantity of non-preferred resources and/or a quantity of preferred resources.

19. The method according to claim 18, wherein the assistant resource is the non-preferred resource, and the non-preferred resource comprises a first-type non-preferred resource and a second-type non-preferred resource; and
the first-type non-preferred resource is a resource that the first terminal apparatus does not prefer, and the second-type non-preferred resource is a resource that the first terminal apparatus does not expect to receive.

20. The method according to claim 19, wherein the first quantity N comprises the quantity of non-preferred resources and a quantity of first-type non-preferred resources.

21. The method according to claim 19, wherein the first quantity N comprises the quantity of non-preferred resources and a quantity of second-type non-preferred resources.

22. The method according to claim 19, wherein the first quantity N comprises a quantity of first-type non-preferred resource and a quantity of second-type non-preferred resources.

23. The method according to claim 9, wherein the first quantity N is 0, a shared channel scheduled by first-stage SCI does not comprise assistant information, and the assistant information comprises the resource indication information.

24. A terminal apparatus, comprising:

a processing unit, configured to determine frequency domain resource indication information, wherein

the frequency domain resource indication information indicates a frequency domain start location and a size of an assistant resource;

a first value of the frequency domain resource indication information is used to determine that the assistant resource is a resource that the terminal apparatus does not prefer; and

a second value of the frequency domain resource indication information is used to determine that a slot in which the assistant resource is located is a slot in which the terminal apparatus does not expect receiving; and

a sending unit, configured to send the frequency domain resource indication information to a second terminal apparatus.

25. The terminal apparatus according to claim 24, wherein the assistant resource is used by the second terminal apparatus for resource selection.

26. The terminal apparatus according to claim 24 or 25, wherein the resource that the terminal apparatus does not prefer comprises:

a resource whose corresponding RSRP measurement value is greater than a configured first threshold; or
a resource whose corresponding RSRP measurement value is less than a configured second threshold.

27. The terminal apparatus according to any one of claims 24 to 26, wherein the second value is a reserved state of the frequency domain resource indication information.

28. The terminal apparatus according to any one of claims 24 to 27, wherein a range of the first value is:

$$\left[ 0, \frac{N_{subCH} \cdot (N_{subCH} + 1)}{2} - 1 \right],$$

wherein $N_{subCH}$ is a quantity of subchannels comprised in a resource pool.

29. The terminal apparatus according to any one of claims 24 to 28, wherein a range of the second value is:

$$\left[ \frac{N_{subCH} \cdot (N_{subCH} + 1)}{2}, 2^{\left\lceil \log_2 \left( \frac{N_{subCH} \cdot (N_{subCH} + 1)}{2} \right) \right\rceil} - 1 \right],$$

wherein $N_{subCH}$ is the quantity of subchannels comprised in the resource pool.

30. The terminal apparatus according to any one of claims 25 to 27, wherein a range of the first value is:

$$\left[ 0, \frac{N_{subCH} (N_{subCH} + 1)(2N_{subCH} + 1)}{6} - 1 \right],$$

wherein $N_{subCH}$ is a quantity of subchannels comprised in a resource pool.

31. The terminal apparatus according to any one of claims 25, 26, 27, and 30, wherein a range of the second value is:

$$\left[ \frac{N_{subCH} (N_{subCH} + 1)(2N_{subCH} + 1)}{6}, 2^{\left\lceil \log_2 \left( \frac{N_{subCH} (N_{subCH} + 1)(2N_{subCH} + 1)}{6} \right) \right\rceil} - 1 \right],$$

wherein $N_{subCH}$ is the quantity of subchannels comprised in the resource pool.

32. A terminal apparatus, comprising:

a processing unit, configured to determine first indication information, wherein the first indication information indicates a first quantity N, the first quantity is a quantity of combinations of resource indication information of an assistant resource, the assistant resource is used by a second terminal apparatus for resource selection, and N is a non-negative integer; and

a sending unit, configured to send the first indication information to the second terminal apparatus.

33. The terminal apparatus according to claim 32, wherein the first quantity N is less than or equal to a second quantity, and the second quantity is a configured or pre-configured value.

34. The terminal apparatus according to claim 32 or 33, wherein the first indication information comprises reserved information in first-stage SCI.

35. The terminal apparatus according to claim 32 or 33, wherein the first indication information is comprised in first-stage SCI, reserved information in the first-stage SCI indicates that a shared channel scheduled by the first-stage SCI carries only assistant information, and the assistant information comprises the resource indication information; and

the first indication information comprises MCS indication information and/or MCS table indication information in the first-stage SCI; or
the first indication information comprises some bits or some statuses of MCS indication information in the first-stage SCI, and/or some bits or some statuses of MCS table indication information in the first-stage SCI.

36. The terminal apparatus according to claim 32 or 33, wherein the first indication information is comprised in first-stage SCI, reserved information in the first-stage SCI indicates that a shared channel scheduled by the first-stage SCI carries assistant information, and the assistant information comprises the resource indication information; and the first-stage SCI does not comprise MCS indication information and/or MCS table indication information.

37. The terminal apparatus according to any one of claims 34 to 36, wherein a format of the first-stage SCI is different from an SCI format 1-A.

38. The terminal apparatus according to claim 32 or 33, wherein the first indication information comprises second-stage SCI or a medium access control control element MAC CE.

39. The terminal apparatus according to claim 33, wherein the first quantity is equal to the second quantity, and the combination of resource indication information comprises frequency domain resource indication information;

a third value of the frequency domain resource indication information indicates a frequency domain start location and a size of the assistant resource; and
a fourth value of the frequency domain resource indication information indicates that the combination of resource indication information is an invalid combination, and the fourth value is a reserved state of the frequency domain resource indication information.

40. The terminal apparatus according to any one of claims 32 to 39, wherein the terminal apparatus further comprises:

sending, by the first terminal apparatus, second indication information, wherein the second indication information indicates that the assistant resource is one of the following three cases: a non-preferred resource, a preferred resource, or a non-preferred resource and a preferred resource, wherein
the second indication information is indicated by the first-stage SCI or configuration signaling.

41. The terminal apparatus according to claim 40, wherein the first quantity N comprises a quantity of non-preferred resources and/or a quantity of preferred resources.

42. The terminal apparatus according to claim 41, wherein the assistant resource is the non-preferred resource, and the non-preferred resource comprises a first-type non-preferred resource and a second-type non-preferred resource; and
the first-type non-preferred resource is a resource that the terminal apparatus does not prefer, and the second-type non-preferred resource is a resource that the terminal apparatus does not expect to receive.

43. The terminal apparatus according to claim 42, wherein the first quantity N comprises the quantity of non-preferred resources and a quantity of first-type non-preferred resources.

44. The terminal apparatus according to claim 42, wherein the first quantity N comprises the quantity of non-preferred resources and a quantity of second-type non-preferred resources.

45. The terminal apparatus according to claim 42, wherein the first quantity N comprises a quantity of first-type non-preferred resource and a quantity of second-type non-preferred resources.

46. The terminal apparatus according to claim 32, wherein the first quantity N is 0, a shared channel scheduled by first-stage SCI does not comprise assistant information, and the assistant information comprises the resource indication information.

47. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 23.

48. A chip, comprising a processor and a communication interface, wherein the communication interface is configured to receive data and/or information, and transmit the received data and/or information to the processor, and the processor processes the data and/or the information according to the method according to any one of claims 1 to 23.

49. A computer-readable storage medium, wherein the computer-readable storage medium stores computer instructions, and when the computer instructions are run on a computer, the method according to any one of claims 1 to 23 is implemented.

50. A computer program product, wherein the computer program product comprises computer program code, and when the computer program code is run on a computer, the method according to any one of claims 1 to 23 is implemented.

UE 1           UE 2

FIG. 1

Roadside unit

Vehicle

Network

V2P

V2I        V2I

Vehicle

FIG. 2

FIG. 3

FIG. 4

FIG. 5

PSSCH

PSCCH

FIG. 6

FIG. 7

300

```
┌──────────┐                              ┌──────────┐
│ First    │                              │ Second   │
│ device   │                              │ device   │
└──────────┘                              └──────────┘
```

310: Determine a first resource, where the
first resource includes M sub-resources in a
resource set, and M is a positive integer

320: Send first indication information,
where the first indication information
indicates start locations of the M sub-
resources or start locations of some of
the M sub-resources

330: Determine the start locations
of the M sub-resources based on
the first indication information

FIG. 8

0

1

2

...

$N_{subCH} - L_{subCH}$

1

2

3

...

$N_{subCH} - L_{subCH} + 1$

$N_{subCH}$

Range of a frequency
domain start location
of a 1st sub-resource

Range of a frequency
domain length

FIG. 9

Resource 1

Resource 2

1-1

1-2

1-3

Offset
value 2

2-1

2-2

2-3

Offset
value 1

Time domain
reference point

Time domain

(1)

FIG. 10A

Resource 1

Resource 2

1-1

1-2

1-3

Offset
value 2

2-1

2-2

2-3

Offset
value 1

Time domain
reference point

Time domain

(2)

FIG. 10B

(3)

FIG. 10C

(4)

FIG. 10D

500

| First device | | Second device |
|---|---|---|

510: Determine first indication information, where the first indication information indicates a first quantity N, the first quantity is a quantity of combinations of resource indication information of an assistant resource, and the assistant resource is used by the second device for resource selection

520: Send the first indication information ⟶

540: Send second indication information ⟶

530: Determine the quantity of combinations of resource indication information of the assistant resource based on the first indication information

FIG. 11

600

| First device | | Second device |
|---|---|---|

610: Determine frequency domain resource indication information, where the frequency domain resource indication information indicates a frequency domain start location and a size of an assistant resource, a first value of the frequency domain resource indication information is used to determine that the assistant resource is a resource that the first device does not prefer, and a second value of the frequency domain resource indication information is used to determine that a slot in which the assistant resource is located is a slot in which the first device does not expect receiving

620: Send the frequency domain resource indication information ⟶

630: Determine a type of the assistant resource based on the frequency domain resource indication information

FIG. 12

A quantity of subchannels is 1

| 3 | | 3 | | 3 |
|---|---|---|---|---|
| 2 | | 2 | | 2 |
| 1 | | 1 | | 1 |

A quantity of subchannels is 2

| 3 | | 3 |
|---|---|---|
| 2 | | 2 |
| 1 | | 1 |

A quantity of subchannels is 3

| 3 |
|---|
| 2 |
| 1 |

FIG. 13

700

| First device | | Second device |
|---|---|---|

710: Determine RSRP measurement information corresponding to an assistant resource, where the RSRP measurement information has a first measurement value or a second measurement value, the first measurement value is used to determine that the assistant resource is a resource that the first device does not prefer, and the second measurement value is used to determine that a slot in which the assistant resource is located is a slot in which the first device does not expect receiving

720: Send the RSRP measurement information ⟶

730: Determine a type of the assistant resource based on the RSRP measurement information

FIG. 14

Communication apparatus 1000

Processing unit 1100

Receiving unit 1200

Sending unit 1300

FIG. 15

Communication apparatus 10

Processor
11

Memory
12

Communication
interface
13

FIG. 16

<div align="center">

**INTERNATIONAL SEARCH REPORT**

</div>

| | International application No. |
|---|---|
| | **PCT/CN2023/070593** |

**A. CLASSIFICATION OF SUBJECT MATTER**

H04W 4/46(2018.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CNKI, 3GPP: 不期待, 不推荐, 辅助, 个数, 频域, 期待, 时隙, 时域, 数量, 推荐, 资源, 组合, assistance, cluster, combination, group, frequency, FRIV, not, no, non, number, quantity, recommend, team, time, TRIV

**C. DOCUMENTS CONSIDERED TO BE RELEVANT**

| Category* | Citation of document, with indication, where appropriate, of the relevant passages | Relevant to claim No. |
|---|---|---|
| Y | WO 2021190628 A1 (VIVO MOBILE COMMUNICATION CO., LTD.) 30 September 2021 (2021-09-30) description, page 4, line 16 to page 19, line 20, and claims 1-61 | 1-8, 24-31, 47-50 |
| Y | CN 112640499 A (BEIJING XIAOMI MOBILE SOFTWARE CO., LTD.) 09 April 2021 (2021-04-09) description, paragraphs 0133-0183 | 1-8, 24-31, 47-50 |
| A | CN 108370589 A (QUALCOMM INC.) 03 August 2018 (2018-08-03) entire document | 1-50 |
| A | WO 2022002125 A1 (VIVO MOBILE COMMUNICATION CO., LTD.) 06 January 2022 (2022-01-06) entire document | 1-50 |
| A | WO 2021212464 A1 (HUAWEI TECHNOLOGIES CO., LTD.) 28 October 2021 (2021-10-28) entire document | 1-50 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 March 2023** | **29 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2023/070593** |

### C. DOCUMENTS CONSIDERED TO BE RELEVANT

| Category* | Citation of document, with indication, where appropriate, of the relevant passages | Relevant to claim No. |
| --- | --- | --- |
| A | QUALCOMM INC. "C1-201058 Support for the signalling of the capability for receiving WUS assistance information"<br>*3GPP tsg_ct\wg1_mm-cc-sm_ex-cn1,* No. tsgc1_122e, 28 February 2020 (2020-02-28),<br>entire document | 1-50 |
| A | ANRITSU. "R4-150457 Time-domain measurement resource restriction pattern for serving cell in feICIC RSRP and RSRQ test cases"<br>*3GPP tsg_ran\WG4_Radio,* No. TSGR4_74, 13 February 2015 (2015-02-13),<br>entire document | 1-50 |

Form PCT/ISA/210 (second sheet) (July 2022)

**INTERNATIONAL SEARCH REPORT**
Information on patent family members

International application No.

**PCT/CN2023/070593**

| Patent document cited in search report | | | Publication date (day/month/year) | Patent family member(s) | | | Publication date (day/month/year) |
|---|---|---|---|---|---|---|---|
| WO | 2021190628 | A1 | 30 September 2021 | US | 2022408415 | A1 | 22 December 2022 |
| | | | | EP | 4132160 | A1 | 08 February 2023 |
| | | | | KR | 20220161432 | A | 06 December 2022 |
| CN | 112640499 | A | 09 April 2021 | WO | 2022126338 | A1 | 23 June 2022 |
| CN | 108370589 | A | 03 August 2018 | WO | 2017099867 | A1 | 15 June 2017 |
| | | | | JP | 2019502304 | A | 24 January 2019 |
| | | | | US | 2017171855 | A1 | 15 June 2017 |
| | | | | EP | 3387873 | A1 | 17 October 2018 |
| | | | | BR | 112018011621 | A2 | 27 November 2018 |
| | | | | AU | 2016369222 | A1 | 10 May 2018 |
| | | | | TW | 201722189 | A | 16 June 2017 |
| | | | | KR | 20180092978 | A | 20 August 2018 |
| WO | 2022002125 | A1 | 06 January 2022 | CN | 113890696 | A | 04 January 2022 |
| WO | 2021212464 | A1 | 28 October 2021 | CN | 115399024 | A | 25 November 2022 |

Form PCT/ISA/210 (patent family annex) (July 2022)

**REFERENCES CITED IN THE DESCRIPTION**

**Patent documents cited in the description**

- CN 202210028261